(19) Europäisches Patentamt / European Patent Office / Office européen des brevets

(11) **EP 3 735 579 B1**

(12) **FASCICULE DE BREVET EUROPEEN**

(45) Date de publication et mention
de la délivrance du brevet:
**06.11.2024  Bulletin 2024/45**

(21) Numéro de dépôt: **18840032.9**

(22) Date de dépôt: **20.12.2018**

(51) Classification Internationale des Brevets (IPC):
**G01N 21/90** *(2006.01)*     **G01B 11/24** *(2006.01)*
**G06T 7/00** *(2017.01)*

(52) Classification Coopérative des Brevets (CPC):
**G01N 21/9054; G01B 11/24; G06T 7/0006**

(86) Numéro de dépôt international:
**PCT/FR2018/053479**

(87) Numéro de publication internationale:
**WO 2019/135041 (11.07.2019 Gazette 2019/28)**

(54) **PROCEDE ET DISPOSITIF POUR DETERMINER LA GEOMETRIE TRIDIMENTIONNELLE D'UNE SURFACE DE BAGUE DE RECIPIENT**

VERFAHREN UND VORRICHTUNG ZUR BESTIMMUNG DER DREIDIMENSIONALEN GEOMETRIE EINER RINGFÖRMIGEN OBERFLÄCHE EINES BEHÄLTERS

METHOD AND DEVICE FOR DETERMINING THE THREE-DIMENSIONAL GEOMETRY OF A CONTAINER RING SURFACE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **05.01.2018  FR 1850105**
         **10.01.2018  FR 1850209**

(43) Date de publication de la demande:
**11.11.2020  Bulletin 2020/46**

(73) Titulaire: **TIAMA**
**69230 Saint-Genis-Laval (FR)**

(72) Inventeurs:
• **FOUILLOUX, Julien**
**69003 LYON (FR)**
• **LECONTE, Marc**
**69700 LOIRE SUR RHONE (FR)**

(74) Mandataire: **Cabinet Beau de Loménie**
**51 avenue Jean Jaurès**
**BP 7073**
**69301 Lyon Cedex 07 (FR)**

(56) Documents cités:
**WO-A1-2016/059343     DE-A1- 2 916 361**

**EP 3 735 579 B1**

## Description

L'invention concerne le domaine de l'inspection des récipients, notamment en verre, et plus précisément le contrôle de la planéité de la surface de bague de tels récipients.

La surface de bague est la surface supérieure ou l'arête supérieure de la bague du récipient. De forme annulaire autour d'un axe central théorique de la bague, la surface de bague est plus ou moins épaisse selon une direction radiale à l'axe central théorique. En théorie, cette surface est plane dans un plan perpendiculaire à l'axe central théorique, en ce sens qu'elle présente au moins une ligne de contact continue sur 360 degrés d'angle autour de l'axe avec ce plan, et elle est parfaitement circulaire. Tout en étant plane au sens ci-dessus, son profil en sections par un plan radial contenant l'axe central théorique peut avoir des formes différentes : le profil peut être plat, arrondi, en V inversé, etc...

Dans de nombreuses applications, la surface de bague est celle qui est destinée à venir en contact avec le joint du couvercle ou de la capsule. Lorsque la surface de bague n'est pas plane, des fuites seront possibles après fermeture. Il est donc important de connaître les défauts de planéité de la surface de bague. Ces défauts de planéité peuvent être analysés, en un point donné de la surface de bague, comme une différence de hauteur entendue dans ce texte comme une différence de position, selon une direction parallèle à l'axe central théorique de la bague du récipient, entre un point donné de la surface de bague réelle du récipient et le point correspondant d'une surface théorique de bague. Ces deux points sont correspondants en ce que, dans un système de coordonnées cylindriques, centré sur l'axe central théorique, les points correspondants ont la même coordonnée angulaire, et appartiennent, pour l'un à la surface de bague réelle, et pour l'autre à la surface de bague théorique. Cette surface théorique est donc plane par rapport à un plan de référence perpendiculaire à l'axe central théorique. Ce plan de référence peut être lié au récipient considéré, et peut par exemple correspondre à la hauteur du point le plus haut de la surface de bague réelle, à la hauteur du point le plus bas de la surface de bague réelle, à une hauteur moyenne de la surface de bague sur son étendue angulaire, etc.... Le plan de référence peut aussi être défini indépendamment du récipient, en référence par exemple à un dispositif de visualisation, de contrôle ou de mesure.

Les défauts de planéité de la surface de bague sont souvent distingués en au moins deux types. Les défauts de type « manque de verre » (« dip » en anglais) sont liés à des problèmes de remplissage du moule de bague par le verre fondu lors de la fabrication. Ils se caractérisent par des écarts de hauteur qui s'étendent sur une faible amplitude angulaire autour de l'axe central théorique. Les défauts de type « bague voilée » (« saddle » en anglais) sont des écarts de hauteur généralement moins marqués, qui s'étendent sur une plus grande amplitude angulaire autour de l'axe central théorique, mais sont néanmoins des défauts gênants, souvent dus à des affaissements, à des problèmes lors de l'extraction des articles du moule, ou à des problèmes thermiques durant la fabrication.

La surface de bague peut présenter d'autres défauts de géométrie. Elle peut par exemple présenter un plan caractéristique incliné par rapport au corps de l'article ou par rapport au fond de l'article. Un plan caractéristique de la surface de bague peut être un plan moyen, ou un plan géométrique s'appuyant sur la bague. On considère que la bague est inclinée si ce plan caractéristique n'est pas parallèle au plan de pose de l'article, ou non orthogonal à l'axe de symétrique de l'article, avec un angle supérieur à un seuil donné.

La surface de bague, et généralement la bague entière, peut présenter un défaut de circularité, par exemple une ovalisation, c'est-à-dire que la surface de bague vue de dessus, ou bien la section plane de la bague par un plan horizontal, n'est pas ni un cercle ni un anneau. Par exemple la forme est celle d'un ovale ou alors la forme peut présenter un écrasement.

Actuellement, les défauts de planéité sont détectés principalement par un système dit « à cloche » par détection de fuites gazeuses. On mesure la fuite résiduelle lorsqu'une surface métallique plane est appuyée sur la bague. L'inconvénient est que le contrôle ne donne pas d'élément permettant d'évaluer l'ampleur du défaut, mais permet uniquement d'obtenir une indication binaire (fuite / pas de fuite) indicative de la planéité ou non de la surface. Un tel système nécessite des moyens mécaniques de déplacement relatif du récipient par rapport au dispositif qui sont non seulement coûteux mais qui de surcroît ralentissent la cadence de la ligne d'inspection : montée et baisse de la cloche, immobilisation temporaire de l'article sous la cloche, etc.... Par ailleurs il y a un intérêt réel à supprimer tout contact avec la bague de l'article pour éviter des risques de casse ou de pollution.

Selon le brevet US-6.903.814 B1, il est prévu de mesurer la hauteur de la bague en 4 points disposés à 90 degrés d'angle, au moyen de 4 capteurs de distance à triangulation laser, adaptés à la réflexion spéculaire. L'article est mis en rotation et l'on compare à chaque incrément de rotation la position d'un point par rapport au plan passant par les 3 autres. Plusieurs alternatives de calcul sont possibles, mais les inconvénients du système sont d'une part l'utilisation coûteuse d'un équipement de manutention pour la mise en rotation, d'autre part la difficulté de séparer totalement les effets des défauts de rotation des effets de défaut de planéité, malgré des calculs de convolution.

Sont connus par ailleurs des systèmes de vision dans lesquels les bagues sont observées selon au moins deux vues en plongée ou contre-plongée. Un éclairage diffus situé à l'opposé des caméras par rapport aux articles éclaire l'article à contrôler en transmission. L'inconvénient de ce système est qu'il nécessite au moins deux caméras et deux sources lumineuses et éventuellement deux optiques télécentriques et leurs supports et réglages. L'ensemble est

2

coûteux, et il nécessite des longs chemins optiques, ce qui se traduit par un encombrement important.

Pour remédier à ces inconvénients, il a été proposé d'utiliser, comme exposé ci-dessus, des caméras déjà prévues pour effectuer un autre contrôle du récipient, par exemple, dans le cas de bouteilles en verre transparent, un contrôle d'aspect à l'épaule. Cependant, cela oblige à choisir des positionnements du dispositif de contrôle qui ne peuvent être qu'un compromis entre les réglages pour détecter les défauts dans la zone de l'épaule et les réglages pour détecter les défauts géométriques de la surface de bague. Ces compromis ne sont satisfaisants ni pour la mesure initialement visées par ces caméras, ni pour la mesure de planéité que l'on essaie de leur faire effectuer.

En multipliant les angles de vues, notamment en combinant des vues similaires sous des angles de plongée ou contre-plongée différents, il est également possible de mesurer en 3D des portions de la bague et de réunir ensuite ces mesures pour reconstituer par calcul la géométrie totale de la surface de bague. Elle utilise l'acquisition de plusieurs images optiques. Ces images optiques sont ensuite combinées deux à deux par des algorithmes de mise en correspondance de points par paires, à partir desquelles sont calculés par triangulation des points réels en coordonnées 3D. La technique est celle de la stéréovision avec des algorithmes complexes. Plusieurs paires de vues de stéréovision sont nécessaires, ce qui nécessite donc par exemple 4 ou 6 caméras. Ces systèmes peuvent être précis, mais ils sont très coûteux et très encombrants. En raison des nombreux paramètres, la précision n'est pas conservée en exploitation sur une longue durée.

Le document US-6.172.748 décrit un dispositif comportant plusieurs sources lumineuses distinctes qui éclairent la bague par en-dessous, c'est-à-dire depuis un point situé en dessous d'un plan perpendiculaire à l'axe de la bague et tangent à la surface de bague. Le dispositif comporte plusieurs miroirs distincts qui procurent chacun une image d'un secteur angulaire seulement de la bague. Une caméra supplémentaire fait une vue de haut de la surface de bague. Même si les images latérales se recoupent, il y a entre les images une discontinuité angulaire azimutale du fait que, à un éventuel point de recoupement des deux images, il y a rupture du point vue entre le point de recoupement dans chacune des images. Cela rend nécessaire une reconstruction informatique de l'image qui nécessite des algorithmes complexes menaçant la précision de mesure.

Le document WO-2016/059343 de la demanderesse décrit une méthode innovante de visualisation de la planéité d'une surface de bague, et d'un dispositif associé. Les méthodes et dispositifs décrits dans ce document sont particulièrement pertinents mais peuvent se montrer sensibles notamment au décentrement ou à une inclinaison non maîtrisée de la surface de bague.

Le document WO-2008/050067 de la demanderesse décrit un dispositif permettant d'observer une zone à inspecter d'un récipient sous plusieurs angles de visée différents.

Un objectif de l'invention est donc de proposer un procédé et dispositif détermination de la géométrie tridimensionnelle d'une surface de bague, notamment en vue de déterminer la présence d'éventuels défauts de planéité qui restent simple à mettre en oeuvre mais dont les résultats soient moins influencés par un décentrement ou à une inclinaison non maîtrisée de la surface de bague par rapport à l'axe d'installation.

Aussi, l'invention propose notamment un procédé de détermination d'une géométrie tridimensionnelle d'une surface de bague réelle d'un récipient, la surface de bague ayant une géométrie théorique plane et annulaire ou circulaire autour d'un axe central théorique, du type comportant :

- l'éclairage de la surface de bague réelle du récipient, par au-dessus, à l'aide d'un premier faisceau lumineux incident périphérique comprenant des premiers rayons lumineux radiaux incidents contenus dans des plans radiaux contenant l'axe central théorique et répartis à 360 degrés d'angle autour de l'axe d'installation, lesdits premiers rayons lumineux radiaux incidents étant dirigés vers l'axe central théorique, et certains des premiers rayons lumineux radiaux incidents du premier faisceau lumineux incident étant réfléchis par réflexion spéculaire sur la surface de bague, sous la forme de rayons réfléchis ;
- la formation, avec les rayons réfléchis et par l'intermédiaire d'un premier système optique, d'une première image optique plane de la surface de bague du récipient, sur un premier capteur photoélectrique bidimensionnel apte à délivrer une première image numérique globale ;

et du type dans lequel l'étape consistant à former une première image optique plane comporte l'observation de la surface de bague, par au-dessus, par un premier système optique, selon un premier champ d'observation périphérique qui observe la surface de bague selon des premiers rayons d'observation radiaux qui sont contenus dans des plans radiaux contenant l'axe central théorique et qui sont répartis à 360 degrés d'angle autour de l'axe central théorique, le premier champ d'observation périphérique ayant un premier angle d'élévation d'observation, qui sera dans certains cas inférieur ou égal à 45 degrés d'angle, parfois inférieur à 25 degrés d'angle, par rapport à un plan perpendiculaire à l'axe central théorique, de manière à recueillir sur le premier capteur photoélectrique bidimensionnel, dans une première zone annulaire du capteur, des rayons réfléchis pour former une première image numérique bidimensionnelle dans une première zone image de la première image numérique globale délivrée par le premier capteur.

Le procédé est caractérisé en ce qu'il comprend :

- la formation, par l'intermédiaire d'un deuxième système optique, d'une deuxième image optique plane de la surface de bague du récipient, distincte de la première image plane, sur un deuxième capteur photoélectrique bidimensionnel apte à délivrer une deuxième image numérique globale, par l'observation de la surface de bague, par au-dessus, par le deuxième système optique, selon un deuxième champ d'observation périphérique, symétrique en rotation autour de l'axe central théorique, qui observe la bague selon des deuxièmes rayons d'observation radiaux qui sont contenus dans des plans radiaux contenant l'axe central théorique, qui sont répartis à 360 degrés d'angle autour de l'axe central théorique, le deuxième champ d'observation périphérique ayant un deuxième angle d'élévation d'observation par rapport à un plan perpendiculaire à l'axe central théorique, mais différent du premier angle d'élévation d'observation, de manière à recueillir sur le deuxième capteur photoélectrique bidimensionnel, dans une deuxième zone annulaire du capteur, des rayons réfléchis pour former une deuxième image numérique bidimensionnelle de la surface de bague dans une deuxième zone image de la deuxième image numérique globale délivrée par le deuxième capteur ;
- en ce que le premier et le deuxième capteur photoélectrique bidimensionnel sont physiquement distincts ou confondus en un même capteur photoélectrique bidimensionnel délivrant une image numérique globale commune, la première zone d'image et la deuxième zone d'image étant disjointes dans l'image numérique globale commune ;
- et en ce que le procédé comporte la détermination, pour un nombre N de directions analysées issues d'un point de référence de l'image numérique considérée et décalées angulairement les unes des autres autour du point de référence :

  • d'un premier point image de la première image numérique bidimensionnelle de la surface de bague, sur la direction analysée, et d'une première valeur représentative de la distance de ce premier point image au point de référence dans la première image numérique ;
  • d'un deuxième point image de la deuxième image numérique de la surface de bague, sur la direction analysée, et d'une valeur représentative de la distance de ce deuxième point image au point de référence dans la deuxième image numérique ;

- et en ce que le procédé déduit, pour les N directions analysées, par une relation géométrique utilisant les N premières valeurs, les N deuxièmes valeurs, le premier angle d'élévation d'observation, et le deuxième angle d'élévation d'observation, au moins une valeur représentative d'une position axiale, selon la direction de l'axe central théorique, de chacun des N points de la surface de bague réelle dont les images par le premier système optique et le deuxième système optique sont respectivement les N premiers points images et les N deuxièmes point image.

Selon d'autres caractéristiques optionnelles du procédé, prises seules ou en combinaison :

- Le procédé peut comporter :

  • l'observation simultanée de la surface de bague par le premier système optique, selon le premier champ d'observation périphérique, et par le deuxième système optique, selon le deuxième champ d'observation périphérique ;
  • la formation simultanée, à partir des rayons réfléchis recueillis selon les premier et deuxième champs d'observation périphériques, par l'intermédiaire du premier et du deuxième système optique, de la première et de la deuxième image bidimensionnelle de la surface de bague du récipient simultanément à la fois dans une première zone d'image correspondant à l'observation selon le premier champ d'observation périphérique et dans une deuxième zone d'image correspondant à l'observation selon le deuxième champ d'observation périphérique.

- Le premier système optique peut comporter une première surface primaire de réflexion et le deuxième système optique peut comporter une deuxième surface primaire de réflexion, les deux surfaces primaires de réflexion étant des surfaces tronconiques de révolution, générées chacune par un segment de droite par révolution autour l'axe central théorique, tournées vers l'axe central théorique et agencées pour réfléchir directement ou indirectement des rayons lumineux, provenant de la surface de bague réelle sous l'angle d'élévation d'observation correspondant, en direction du capteur associé.
- La formation de la première et de la deuxième image optique plane peut inclure pour chacune la formation optique d'une image bidimensionnelle complète et continue de la surface de bague réelle.
- Le premier faisceau lumineux incident périphérique peut comporter, dans un même plan radial, des rayons lumineux radiaux incidents non parallèles.
- Le premier faisceau incident peut éclairer la surface de bague sous une incidence telle que, au point de réflexion d'un premier rayon incident, dont le rayon réfléchi par la surface de bague réelle est vu par le premier capteur selon le premier champ d'observation périphérique, la normale à la surface de bague forme un angle inférieur à 30 degrés d'angle par rapport à la direction de l'axe central théorique.

- Le deuxième faisceau incident peut éclairer la surface de bague sous une incidence telle que, au point de réflexion d'un deuxième rayon incident, dont le rayon réfléchi par la surface de bague réelle est vu par le deuxième capteur selon un deuxième champ d'observation périphérique, la normale à la surface de bague forme un angle inférieur à 30 degrés d'angle par rapport à la direction de l'axe central théorique.
- La différence entre les deux angles d'élévation d'observation peut est inférieure ou égale à 20 degrés d'angle.
- En alternative, le deuxième angle d'élévation d'observation peut être supérieur à 65 degrés d'angle, voire supérieur ou égal à 75 degrés d'angle.
- Pour les N directions Di, le procédé peut déduire, pour chaque direction, par une relation géométrique de triangulation utilisant la distance du premier point image au point de référence dans la première image numérique bidimensionnelle, la distance du deuxième point image au point de référence dans la deuxième image numérique bidimensionnelle, le premier angle d'élévation d'observation, et le deuxième angle d'élévation d'observation, au moins une valeur représentative d'un décalage axial, selon la direction de l'axe central théorique, entre la surface de bague réelle et une surface de bague théorique.
- Pour les N directions Di:

  • la première valeur représentative de la distance du premier point image au point de référence dans la première image numérique bidimensionnelle peut être la valeur d'un premier décalage radial image entre une ligne représentative de la première image de la surface de bague et une ligne théorique représentative d'une image théorique de surface de bague dans la première image ;
  • la deuxième valeur représentative de la distance du deuxième point image au point de référence dans la deuxième image numérique bidimensionnelle peut être la valeur d'un deuxième décalage radial image entre une ligne représentative de l'image de la surface de bague et une ligne théorique représentative d'une image théorique de surface de bague dans la deuxième image ;
  • et le procédé peut déduire, pour chaque direction, par une relation géométrique de triangulation utilisant le premier décalage radial, le deuxième décalage radial, le premier angle d'élévation d'observation, et le deuxième angle d'élévation d'observation, au moins une valeur représentative d'un décalage axial, selon la direction de l'axe central théorique, entre la surface de bague réelle et une surface de bague théorique.

- La ligne représentative de l'image de la surface de bague peut être l'image, formée par le système optique correspondant sur le capteur associé, de la réflexion du faisceau incident correspondant sur la surface de bague.

L'invention concerne aussi un dispositif de détermination d'une géométrie tridimensionnelle d'une surface de bague réelle d'un récipient, la surface de bague ayant une géométrie théorique plane et annulaire ou circulaire autour d'un axe central théorique, du type dans lequel le dispositif présente une zone d'installation d'un récipient, cette zone d'installation ayant un axe d'installation, du type comprenant :

- un premier système d'éclairage ayant une première source lumineuse qui est axée sur l'axe d'installation, qui présente un diamètre supérieur au diamètre de la surface de bague et qui est apte à fournir un premier faisceau lumineux incident périphérique comprenant des premiers rayons lumineux radiaux incidents contenus dans des plans radiaux contenant l'axe d'installation et répartis à 360 degrés d'angle autour de l'axe d'installation, lesdits premiers rayons lumineux radiaux incidents étant dirigés vers l'axe d'installation ;
- un premier capteur photo-électrique bidimensionnel, relié à une unité d'analyse d'images ;
- un premier système optique interposé entre la zone d'installation du récipient et le premier capteur apte à former sur le capteur une première image de la surface de bague d'un récipient placé dans la zone d'installation ;

  du type dans lequel le premier système optique comporte au moins une première surface primaire de réflexion agencée dans une portion aval du champ de vision du premier capteur, la première surface primaire de réflexion étant une surface tronconique de révolution, générée par un segment de droite par révolution autour de l'axe d'installation, tournée vers l'axe d'installation, et agencée pour réfléchir, directement ou indirectement, en direction du premier capteur des premiers rayons lumineux provenant de la zone d'installation selon des plans radiaux contenant l'axe d'installation et selon un premier champ d'observation périphérique ayant un premier angle d'élévation d'observation par rapport à un plan perpendiculaire à l'axe d'installation définissant ainsi un premier champ d'observation périphérique qui observe la surface de bague selon des premiers rayons d'observations radiaux qui sont contenus dans un plan radial contenant l'axe d'installation, qui sont répartis à 360 degrés d'angle autour de l'axe central théorique, et qui forment par rapport à un plan perpendiculaire à l'axe d'installation le premier angle d'élévation d'observation, qui sera dans certains cas inférieur ou égal à 45 degrés d'angle, parfois inférieur à 25 degrés ;

et du type dans lequel le premier système d'éclairage, le premier capteur et le premier système optique sont agencés au-dessus de la zone d'installation ;
caractérisé en ce que

- le dispositif comporte un deuxième système optique, interposé entre la zone d'installation du récipient et un deuxième capteur photoélectrique bidimensionnel, et apte à former sur le capteur une deuxième image de la surface de bague d'un récipient placé dans la zone d'installation ;
- en ce que le deuxième capteur et le deuxième système optique sont agencés au-dessus de la zone d'installation ;
- en ce que le deuxième système optique est configuré pour conduire, directement ou indirectement, en direction du deuxième capteur, des deuxièmes rayons lumineux provenant de la zone d'installation selon des plans radiaux contenant l'axe d'installation et selon un deuxième champ d'observation périphérique ayant un deuxième angle d'élévation d'observation par rapport à un plan perpendiculaire à l'axe d'installation définissant ainsi un deuxième champ d'observation périphérique qui observe la surface de bague selon des deuxièmes rayons d'observations radiaux qui sont contenus dans un plan radial contenant l'axe d'installation, qui sont répartis à 360 degrés d'angle autour de l'axe central théorique, et qui forment par rapport à un plan perpendiculaire à l'axe d'installation le deuxième angle d'élévation d'observation, ledit deuxième angle d'élévation d'observation étant différent du premier angle d'élévation d'observation ;
- et en ce que le premier système optique et le deuxième système optique déterminent pour le premier capteur et pour le deuxième capteur respectivement une première portion de champ de vision amont et une deuxième portion de champ de vision amont qui se recoupent dans la zone d'installation selon un volume utile d'inspection de révolution autour de l'axe d'installation, tel que tout point objet placé dans le volume utile, et illuminé par au moins la première source lumineuse de manière à être imagé par un premier point image dans la première image formée par le premier système optique sur le premier capteur, est également imagé par un deuxième point image dans la deuxième image formée par le deuxième système optique sur le deuxième capteur;
- et en ce que le premier et le deuxième capteur photoélectrique bidimensionnel sont physiquement distincts ou confondus en un même capteur photoélectrique bidimensionnel commun, la première surface primaire de réflexion et la deuxième surface primaire de réflexion étant toutes deux dans des portions disjointes du champ de vision aval du capteur,

Selon d'autres caractéristiques optionnelles du dispositif, prises seules ou en combinaison :

- Dans la première portion de champ de vision amont déterminée par le premier système optique pour le premier capteur, les premiers rayons d'observations radiaux déterminés par le premier système optique peuvent être, lorsqu'on les parcourt depuis le volume utile d'inspection, centripètes en direction de l'axe d'installation, puis peuvent couper l'axe d'installation pour devenir centrifuges en direction du premier système optique.
- Le dispositif peut former deux images optiques complètes, distinctes et continues de la surface de bague réelle sur le capteur photoélectrique bidimensionnel associé.
- La première surface primaire de réflexion peut réfléchir indirectement des rayons lumineux en direction du capteur, et le dispositif peut comporter, entre la première surface primaire de réflexion et le premier capteur, au moins une surface secondaire de réflexion.
- Le deuxième système optique peut comporter au moins une deuxième surface primaire de réflexion dans une portion aval du champ de vision du deuxième capteur, la deuxième surface primaire de réflexion étant une surface tronconique de révolution, générée par un segment de droite par révolution autour de l'axe d'installation, tournée vers l'axe d'installation et agencée pour réfléchir directement ou indirectement en direction du capteur des rayons lumineux, provenant de la zone d'installation selon des plans radiaux contenant l'axe d'installation et selon le deuxième champ d'observation périphérique ayant le deuxième angle d'élévation d'observation par rapport à un plan perpendiculaire à l'axe d'installation.
- La première surface primaire de réflexion et la deuxième surface primaire de réflexion peuvent réfléchir indirectement des rayons lumineux en direction du capteur, et le dispositif peut comporter, entre d'une part la première surface primaire de réflexion et la deuxième surface primaire de réflexion et d'autre part le capteur commun, au moins une surface secondaire de réflexion de révolution autour de l'axe d'installation.
- La première surface primaire de réflexion et la deuxième surface primaire de réflexion peuvent comporter chacune une surface tronconique de révolution, tournée vers l'axe d'installation, présentant un petit diamètre et un grand diamètre tous les deux supérieurs au diamètre le plus grand de la surface de bague théorique de manière à renvoyer, en direction de l'axe d'installation, des rayons lumineux, provenant de la surface de bague réelle sous l'angle d'élévation d'observation correspondant, lesdits rayons étant interceptés par une surface de réflexion de renvoi qui comporte une surface tronconique de révolution tournée à l'opposé de l'axe d'installation de manière à renvoyer les rayons en direction du capteur associé.

EP 3 735 579 B1

- La trajectoire des rayons entre les deux surfaces primaires de réflexion et la surface de réflexion de renvoi peut être perpendiculaire à l'axe d'installation.
- La première surface primaire de réflexion et la deuxième surface primaire de réflexion peuvent être chacune une surface tronconique concave et présentant un demi-angle au sommet égal à la moitié de l'angle d'élévation d'observation, et présentant un petit diamètre et un grand diamètre tous les deux supérieurs au diamètre le plus petit de la surface de bague théorique.
- La différence entre les deux angles d'élévation d'observation peut être inférieure à 20 degrés d'angle.
- La deuxième portion de champ de vision amont déterminée par le deuxième système optique pour le deuxième capteur, les deuxièmes rayons d'observations radiaux déterminés par le deuxième système optique sont, lorsqu'on les parcourt depuis le volume utile d'inspection, centripètes en direction de l'axe d'installation, puis coupent l'axe d'installation pour devenir centrifuges en direction du deuxième système optique.
- La deuxième surface primaire de réflexion peut réfléchir directement des rayons lumineux en direction du deuxième capteur, sans surface secondaire de réflexion de révolution.
- Dans la deuxième portion de champ de vision amont déterminée par le deuxième système optique pour le deuxième capteur, les deuxièmes rayons d'observations radiaux déterminés par le deuxième système optique peuvent être, lorsqu'on les parcourt depuis le volume utile d'inspection, centrifuges en direction de la deuxième surface primaire de réflexion.
- Dans la deuxième portion de champ de vision amont déterminée par le deuxième système optique pour le deuxième capteur, les deuxièmes rayons d'observations radiaux déterminés par le deuxième système optique peuvent être, lorsqu'on les parcourt depuis le volume utile d'inspection, parallèles à l'axe d'installation ou centripètes en direction de l'axe d'installation sans couper l'axe d'installation de manière à s'éloigner de l'axe d'installation lorsqu'on les parcourt depuis le volume utile d'inspection vers le deuxième système optique .
- Le deuxième système optique peut être dépourvu de toute surface de réflexion de révolution.
- Le deuxième angle d'élévation d'observation peut être supérieur à 65 degrés d'angle, de préférence supérieur ou égal à 75 degrés d'angle.
- Le premier système optique peut comporter un système optique télécentrique.
- Le deuxième système optique peut comporter un système optique télécentrique.
- La première source lumineuse peut être une source annulaire de révolution axée sur l'axe d'installation.

L'invention concerne encore une ligne d'inspection de récipients présentant une surface de bague, du type dans laquelle des récipients sont déplacés sur une ligne de convoyage par un convoyeur qui transporte les récipients selon une direction de déplacement horizontale perpendiculaire à un axe central théorique des récipients qui présentent ainsi leur surface de bague dans un plan horizontal tourné vers le haut, caractérisée en ce que l'installation comporte un dispositif ayant l'une quelconque des caractéristiques ci-dessus, qui est agencé sur l'installation avec son axe d'installation en position verticale, de telle sorte que les champs d'observation et les faisceaux lumineux incidents sont agencés vers le bas, vers la zone d'installation qui se situe entre le dispositif et un organe de transport du convoyeur.

Dans une telle ligne d'inspection, le convoyeur peut amener les récipients de manière à ce que leur axe central théorique coïncide avec l'axe d'installation, et, au moment de cette coïncidence, au moins une image peut être acquise grâce au dispositif, sans contact du dispositif avec le récipient.

Diverses autres caractéristiques ressortent de la description faite ci-dessous en référence aux dessins annexés qui montrent, à titre d'exemples non limitatifs, des formes de réalisation de l'objet de l'invention.

La **Figure 1A** est une vue en coupe axiale d'un premier mode de réalisation d'un dispositif selon l'invention.
La Figure 1B est un schéma en perspective de quelques éléments du premier mode de réalisation de la **Fig. 1A.**
La **Figure 1C** est un schéma agrandi en coupe axiale illustrant les champs de vision pour le premier mode de réalisation de la **Fig. 1A.**
La Figure 1D est un schéma d'une image obtenue avec le dispositif de la **Fig. 1A.**
La **Figure 2** est un schéma agrandi en coupe axiale illustrant une variante de réalisation d'un système d'éclairage.
Les **Figures 3, 4** et **5** sont des vues analogues à celle de la **Fig. 1** illustrant d'autres modes de réalisation d'un dispositif selon l'invention.
La **Figure 6** illustre une ligne d'inspection selon l'invention.
Les **Figures 7A** et **7B** sont des vues qui illustrent des variantes de l'invention dans lesquelles aucun des deux angles d'élévation d'observation n'est inférieur à 25 degrés d'angle. Dans l'exemple de la **Fig. 7A,** le premier angle d'élévation d'observation est inférieur ou égal à 45 degrés d'angle et le second angle d'élévation d'observation est supérieur à 45 degrés d'angle. Dans l'exemple de la **Fig. 7B,** le premier et le second angle d'élévation d'observation sont tous les deux supérieurs à 45 degrés d'angle.

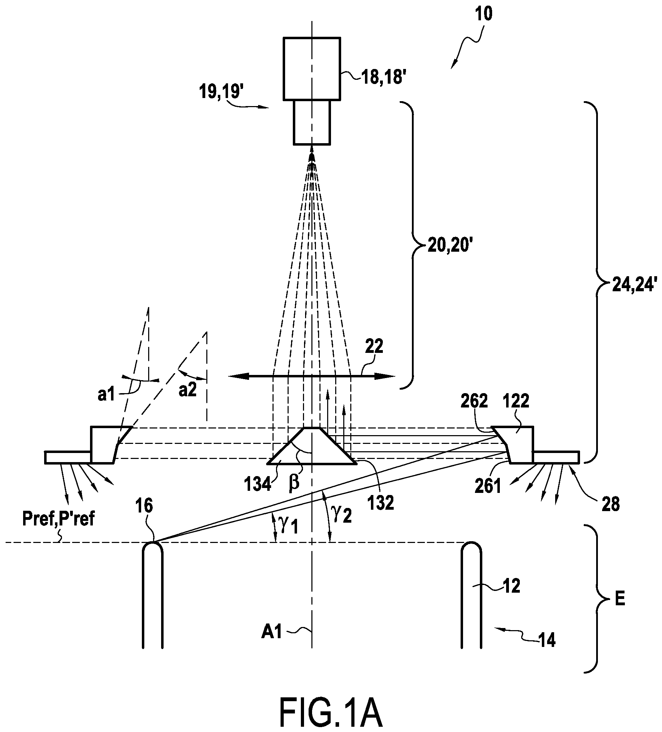

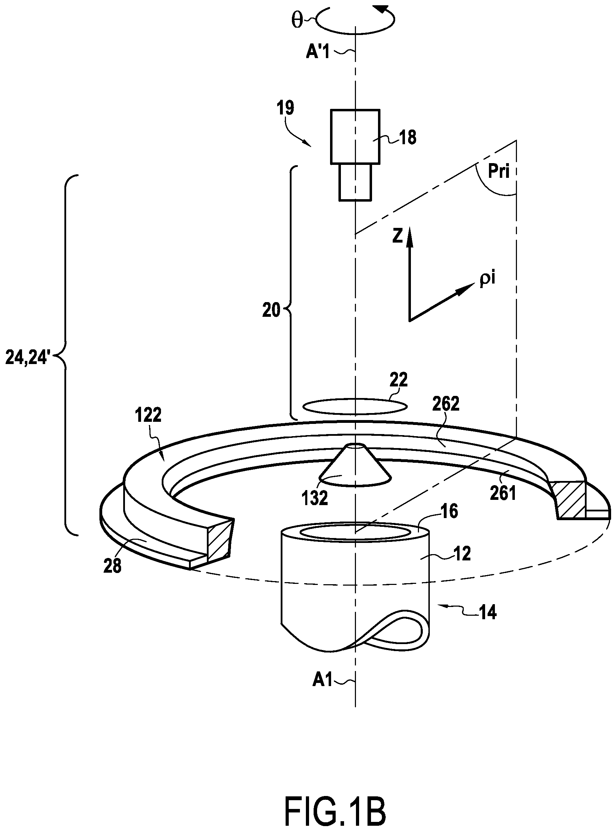

On a illustré sur les **Figs. 1A, 3, 4, 5, 7A,** et **7B,** en section par un plan radial **Pri** tel qu'illustré sur la Fig. 1B,

7

différents modes de réalisation d'un dispositif de détermination de la géométrie tridimensionnelle d'une surface de bague réelle d'un récipient, chacun de ces dispositifs permettant la mise en oeuvre d'un procédé selon l'invention. On a illustré sur les figures uniquement la partie supérieure de la bague **12** d'un récipient **14**. Un récipient **14** est défini comme un contenant creux définissant un volume intérieur qui est fermé sur toute sa périphérie volumique sauf au niveau d'une bague supérieure **12** ouverte à une extrémité.

Par commodité, et uniquement à titre de définition arbitraire, il sera en effet considéré que le récipient comporte un axe central théorique **A1,** défini comme étant l'axe central théorique de sa bague **12**. Il sera aussi considéré arbitrairement que la bague est agencée à l'extrémité supérieure du récipient. Ainsi, dans le présent texte, les notions de haut, bas, supérieur et inférieur ont une valeur relative correspondant à l'orientation du dispositif **10** et du récipient **14** tels que représentés sur les figures. Toutefois, on comprend que l'invention pourrait être mise en oeuvre avec une orientation absolue indifférente dans l'espace, dans la mesure où les différents composants restent agencés avec le même agencement relatif.

La bague **12** du récipient est cylindrique de révolution autour de l'axe **A1**. Le corps du récipient, non représenté, peut être aussi un volume de révolution ou non. La bague **12** est reliée par son extrémité inférieure (non représentée) au reste du corps du récipient, tandis que son autre extrémité libre, dite supérieure par choix arbitraire dans le cadre de la présente description, se termine par une surface de bague **16**.

La surface de bague **16** est théoriquement plane et parallèle à un plan perpendiculaire à l'axe **A1,** en ce sens qu'elle présente au moins une ligne de contact continue à 360 degrés d'angle autour de l'axe central théorique avec un tel plan, et elle est théoriquement circulaire ou annulaire dans ce plan. Dans le présent texte, on distinguera d'une part la surface de bague réelle du récipient, et d'autre part une surface théorique de bague. Cette surface théorique de bague est donc une surface plane ou un cercle plan dans un plan de référence perpendiculaire à l'axe central théorique **A1.** Ce plan de référence peut être défini comme lié au récipient considéré, tel le plan de référence **PRef** de la Figure **1A** qui est tangent à un point de la surface de bague réelle **16,** par exemple le point le plus haut selon la direction de l'axe central théorique **A1.** Alternativement, ce plan de référence peut par exemple être situé à la hauteur du point le plus bas de la surface de bague réelle, à une hauteur moyenne de la surface de bague sur son étendue angulaire, etc.... Le plan de référence peut aussi être défini indépendamment du récipient, en référence par exemple à l'un des éléments du dispositif **10,** par exemple au niveau d'une surface inférieure d'un boîtier du dispositif **10**. Le plan de référence peut ainsi être un plan de référence de l'installation **P'ref** perpendiculaire à un axe d'installation tel que défini plus loin.

La détermination de la géométrie tridimensionnelle de la surface de bague peut par exemple comprendre la quantification d'un écart de position, selon la direction de l'axe central théorique **A1,** entre un point donné **Ti** de la surface de bague réelle et un point correspondant **Tti** de la surface théorique de bague. Ces deux points sont correspondants en ce que, dans un système de coordonnées cylindriques, centré sur l'axe central théorique, les points correspondants **Ti, Tti** ont la même coordonnée angulaire, et appartiennent, pour l'un à la surface de bague réelle, et pour l'autre à la surface de bague théorique. Autrement dit, ils sont agencés dans un même plan radial **Pri** contenant l'axe central théorique **A1.**

Dans les exemples illustrés, la surface de bague **16** présente, en sections par un plan radial contenant l'axe central théorique, un profil radial bombé, convexe, entre un bord interne et un bord externe. Le bord interne peut être considéré comme étant à l'intersection de la surface de bague **16** et d'une surface interne de la bague du récipient, dont l'orientation générale est proche de celle de l'axe **A1** du récipient **14**. Cependant le profil de la surface de bague **16,** en sections par des plans radiaux contenant l'axe central théorique, pourrait avoir une forme différente : le profil peut être plat, arrondi, en V inversé, etc...

Pour que le récipient soit inspecté correctement, il conviendra de veiller à ce que le récipient soit présenté de manière adéquate devant le dispositif **10**. Pour cela, le dispositif **10** selon invention comporte une zone d'installation **E** dans laquelle le récipient devra être installé. Cette zone d'installation peut être définie par un axe d'installation **A'1** et un plan d'installation (non représenté) défini comme étant un plan perpendiculaire à l'axe d'installation **A'1** situé au niveau du point le plus bas du dispositif. Ainsi, pour être inspecté correctement, un récipient sera de préférence présenté de telle sorte que son axe central théorique **A1** soit parallèle au mieux à l'axe d'installation **A'1,** notamment si son plan de pose est parallèle au plan d'installation. Ainsi, pour être inspecté correctement, un récipient sera également de préférence présenté de telle sorte que son axe central théorique **A1** corresponde au mieux à l'axe d'installation **A'1,** et que sa bague soit présentée avec son extrémité supérieure ouverte tournée en direction du dispositif **10,** mais en dessous du plan d'installation. Dans un cas idéal, qui formera l'hypothèse des explications ci-dessous, les deux axes **A1** et **A'1** sont confondus. Toutefois, avec l'invention, on verra qu'un éventuel désaxage, entre les deux axes **A1** et **A'1** (au sens d'un écart transversal selon une direction perpendiculaire à ces axes **A1** et **A'1,** et/ou d'un écart angulaire entre les deux axes **A1** et **A'1**), sera compensé par l'invention et n'affectera pas de manière significative la détermination de la position axiale d'un point de la surface de bague **16**. On comprend que l'intégralité du dispositif **10** selon l'invention peut être positionnée au-dessus du plan d'installation tandis que le récipient sera amené en dessous du plan d'installation, sans risque de contact avec le dispositif. Le récipient **14** pourra donc être amené dans la zone d'installation **E** par n'importe quel mouvement, de préférence de translation sur une trajectoire rectiligne ou non, selon une direction perpendiculaire à l'axe d'installation **A'1**, sans risquer d'interférer avec le dispositif **10**.

Le dispositif et le procédé selon l'invention font appel à au moins un capteur photoélectrique bidimensionnel **18** destiné à acquérir une image bidimensionnelle de la surface de bague réelle du récipient, ou, dans certains modes de réalisation, deux de tels capteurs **18**, **18'**. Un tel capteur, aussi qualifié de matriciel, peut être incorporé dans une caméra **19**, **19'** et il peut être par exemple du type CCD ou CMOS. Un tel capteur **18**, **18'** est par exemple constitué d'une matrice bidimensionnelle d'éléments photoélectriques. Le capteur est généralement associé à un circuit électronique de traitement des signaux fournis par les éléments photoélectriques pour délivrer un signal analogique ou numérique représentatif de l'image reçue par le capteur. Ce signal représentatif de l'image optique reçue par le capteur constitue de préférence une image électronique, numérique, bidimensionnelle, qui peut ensuite être délivrée à un dispositif de traitement d'images et/ou à un dispositif de visualisation et/ou à un dispositif de stockage d'images (non représentés).

Un tel capteur **18**, **18'** est généralement associé à un système objectif optique **20**, **20'** qui peut comporter un ou plusieurs éléments optiques, notamment une ou plusieurs lentilles minces, et éventuellement un diaphragme, associés pour permettre la formation d'une image optique de la zone d'installation sur le capteur. Le système objectif optique **20**, **20'**, ou en tous cas une partie de celui-ci, et le capteur **18**, **18'** font généralement partie de la caméra **19**, **19'**.

Par « système optique » on entend selon l'invention un système d'observation dans lequel entrent des rayons lumineux provenant d'un objet éclairé pour en former une image plane.

Selon l'invention, on considère que deux systèmes optiques **24**, **24'** sont interposés optiquement, soit tous les deux en parallèle entre la zone d'installation **E** du récipient et le même capteur commun **18,** au sens que les deux systèmes optiques **24**, **24'** forment une image d'un même objet dans la zone d'installation sur le même capteur **18,** soit chacun entre la zone d'installation **E** du récipient et un capteur associé **18, 18',** auquel cas, les deux systèmes optiques **24, 24'** forment chacun une image d'un même objet dans la zone d'installation sur le capteur associé **18, 18'**. On considère qu'il existe pour chaque point image, un trajet d'amont en aval des rayons lumineux partant d'une source, se réfléchissant sur l'objet, puis entrant dans le système optique d'observation pour y être déviés par des éléments optiques dioptriques et/ou catoptrique, filtrés (modification de leur composition spectrale ou de leur polarisation), coupés par un diaphragme etc... afin de former une image de l'objet sur la surface sensible du capteur. Un élément « interposé optiquement » entre un premier et un second autre élément signifie donc qu'en suivant le trajet des rayons lumineux contribuant à faire l'image, ledit élément se trouve situé sur ledit trajet en aval du premier élément et en amont du second.

Dans les modes de réalisation des **Figs. 1A**, **4**, **5**, **7A** ou **7B**, les deux systèmes optiques sont associés à un même capteur commun **18**. Dans ce cas, on peut, de manière notionnelle, dissocier cet unique capteur commun en deux capteurs, à savoir un premier capteur associé à un premier système optique **24** et un deuxième capteur associé à un deuxième système optique **24'**. En réalité, dans ce cas, on pourra avoir un capteur commun dont une première partie de la surface de captation d'image, ou première zone de formation d'image, est dédiée au premier système optique **24** et dont une deuxième partie de la surface de captation d'image, ou deuxième zone de formation d'image, est dédiée au deuxième système optique **24'**. Dans ce cas, la première partie du capteur commun forme un premier capteur **18** et la deuxième partie du capteur commun forme le deuxième capteur **18'**.

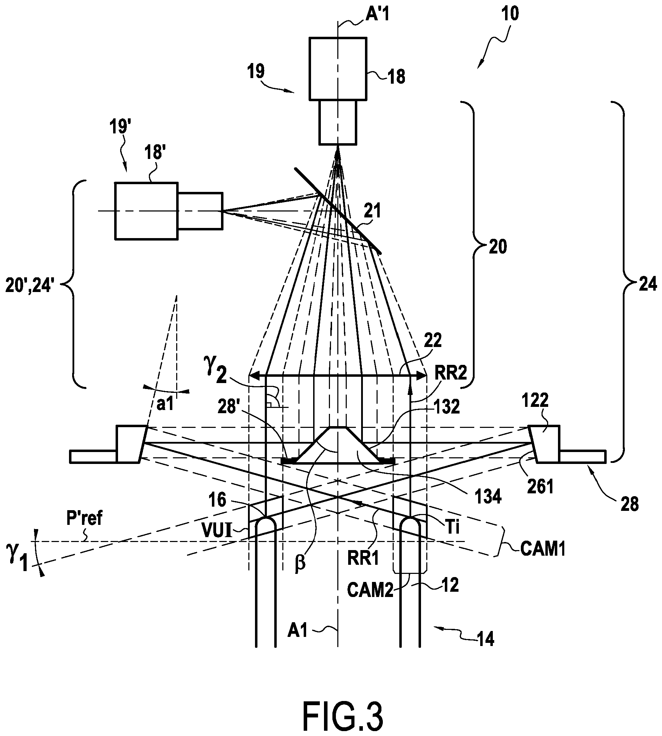

Dans le mode de réalisation de la **Fig. 3**, les deux systèmes optiques **24**, **24'** sont associés chacun à son propre capteur associé, avec un premier système optique **24** associé à un premier capteur **18**, et un deuxième système optique **24'** associé à un deuxième capteur **18'**.

Chaque système optique **24**, **24'** définit, pour le capteur associé, un champ de vision amont dans la zone d'installation, défini comme tous les points de la zone d'installation qui sont susceptibles d'être imagés par le système optique considéré sur le capteur considéré. Dans ce champ de vision amont, le premier et le deuxième système optique **24, 24'** définissent respectivement, pour le capteur associé, un premier et un second champ d'observation périphérique. On considère ici arbitrairement que l'amont et l'aval correspondent au trajet d'amont en aval d'un rayon lumineux provenant de la zone d'installation et se dirigeant en direction du capteur associé.

Chaque système optique **24**, **24'** peut ainsi former sur le capteur associé une image de la même surface de bague **16** d'un récipient **14** placé dans la zone d'installation **E,** chaque image étant formée par les rayons se propageant depuis la surface de bague selon le champ d'observation périphérique correspondant.

Dans les exemples de réalisation, au moins le premier système optique **24** comprend, en plus du système objectif optique **20,** au moins un élément optique **122**, **261**, qui est ici agencé entre le système objectif **20** et la zone d'installation **E**. L'ensemble du premier système optique **24** entre le premier capteur **18** et la zone d'installation comprend ainsi le système objectif **20** et le ou les éléments optiques **122**.

Dans les modes de réalisation des **Figs. 1A**, **5**, **7A** et **7B**, le deuxième système optique **24'** comprend, en plus d'un système objectif optique **20'**, dans ce cas commun pour les deux systèmes optiques **24**, **24'**, au moins un élément optique **122**, **262**, qui est ici agencé entre le système objectif **20'** et la zone d'installation.

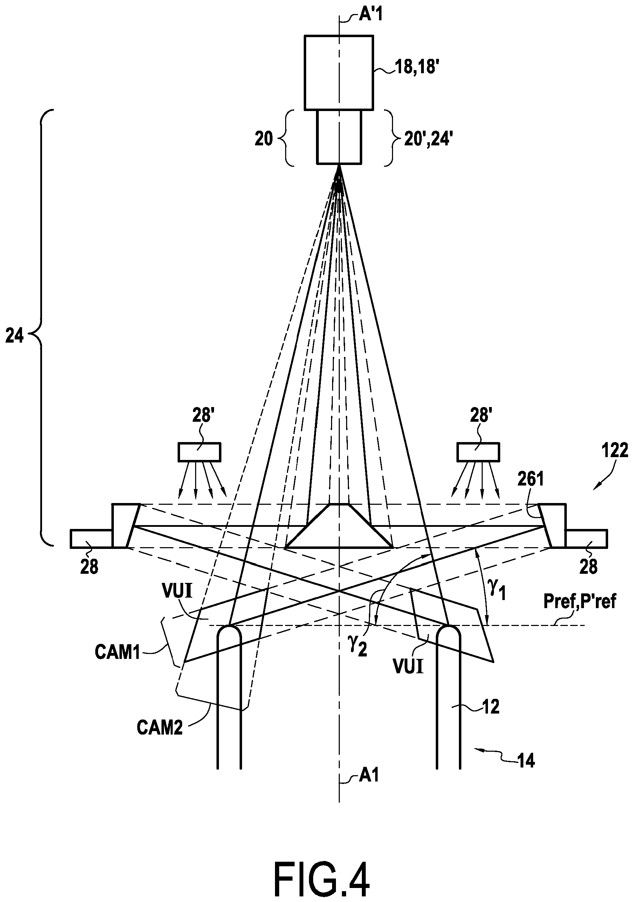

Dans les modes de réalisation des **Figs. 3**, **4**, **7A** et **7B**, le deuxième système optique **24'** comprend uniquement un système objectif optique **20'**, sans aucune surface de réflexion de révolution entre le système objectif **20'** et la zone d'installation. Dans le mode de réalisation de la **Fig. 4,** le deuxième système optique **24'** comprend un système objectif optique **20** entièrement commun avec celui du premier système optique **24, 24'**. Dans le mode de réalisation de la **Fig. 3,** le deuxième système optique **24'** comprend un deuxième système objectif optique **20'** qui n'est que partiellement commun avec le premier système objectif optique **20'** du premier système optique **24.** Ainsi, l'exemple de la **Fig. 3** comporte un premier système objectif optique **20** et un deuxième système objectif optique **20'** qui incorporent une lame de séparation commune **21,** dont on verra qu'elle peut être dichroïque, agencée à 45 degrés d'angle sur l'axe d'installation **A'1**, pour séparer en deux parties des rayons optiques venant de la zone d'installation. Une première partie de ces rayons optiques est envoyée vers un premier capteur **18**, appartenant dans cet exemple à une première caméra **19**, et une autre partie est envoyée vers un deuxième capteur **18'**, appartenant dans cet exemple à une deuxième caméra **19'**. Dans l'exemple, le premier et le deuxième système objectif **20, 20'** ont des éléments communs, dont par exemple une lentille de télécentricité et la lame de séparation **21**, et des éléments spécifiques à chacun d'eux, à savoir des éléments optiques qui sont interposés entre la lame de séparation **21** et les capteurs respectifs **18, 18'**. Les distances focales des systèmes objectifs **20** et **20'** peuvent être différentes.

Dans certains des exemples illustrés, le système objectif optique **20, 20'** associé à l'un ou l'autre des capteurs **18, 18'** est un système objectif télécentrique. Un système objectif télécentrique est bien connu de l'homme du métier des dispositifs de vision industrielle car il est utilisé pour former sur le capteur une image qui ne comporte pas ou quasiment pas d'effet de parallaxe. En théorie optique, un système objectif télécentrique est un système objectif dont la pupille d'entrée est positionnée à l'infini. Il s'ensuit qu'un tel objectif observe dans son champ de vision selon des rayons principaux d'observations qui, au travers du système optique associé **24, 24'**, passent par le centre de la pupille d'entrée **CO** du système objectif **20, 20'**, et qui sont parallèles ou quasi-parallèles à l'axe optique, d'où l'absence d'effet de parallaxe. Cependant, le système objectif optique **20, 20'** n'est pas nécessairement télécentrique, comme illustré par le mode de réalisation de la **Fig. 4**.

Un capteur **18, 18'** présente généralement une forme rectangulaire ou carrée, donc bidimensionnelle, de sorte qu'il délivre une image numérique bidimensionnelle représentative de l'image optique bidimensionnelle formée sur le capteur par le système objectif optique **20, 20'**. On appellera image globale **IG, IG'** l'intégralité de l'image numérique délivrée par un tel capteur **18, 18'**. Il sera vu plus loin que, dans cette image numérique globale, seulement une ou plusieurs zones d'images seront utiles. De préférence, l'image globale **IG, IG'** est acquise lors d'un unique temps d'intégration (aussi appelé temps d'exposition) du capteur. Alternativement deux acquisitions très rapprochées dans le temps sont faites de manière que l'article ne se déplace que de manière négligeable entre les deux acquisitions.

L'axe optique du système objectif **20, 20'** est de préférence confondu avec l'axe d'installation **A'1**. Dans certains cas, cet axe optique n'est pas rectiligne, mais segmenté, par exemple par intégration d'un miroir de renvoi dans le système objectif ou bien lors de l'utilisation d'une lame de séparation **21**. On peut ainsi prévoir un miroir de renvoi à 45 degrés d'angle par rapport à l'axe d'installation, avec ainsi un premier segment de l'axe optique, côté capteur, qui serait agencé à 90 degrés d'angle par rapport à l'axe d'installation, et un second segment, de l'autre côté du miroir de renvoi, qui serait agencé en concordance avec l'axe d'installation **A'1**. Ainsi, dans l'exemple de la **Fig. 3** comportant un premier et un deuxième capteurs physiquement distincts **18, 18'**, associés respectivement à un premier et à un deuxième système optique **20, 20'**, le deuxième système objectif **20'** présente, du fait de la présence de lame de séparation **21** qui renvoie certains des rayons lumineux à 90 degrés d'angle en direction du deuxième capteur **18'**, un segment aval d'axe optique, du côté du deuxième capteur **18'**, qui est agencé à 90 degrés d'angle par rapport à l'axe d'installation **A'1**, et un segment amont, de l'autre côté de la lame de séparation **21**, qui est agencé en concordance avec l'axe d'installation **A'1**. Pour mémoire, on considère ici arbitrairement que l'amont et l'aval correspondent au trajet d'amont en aval d'un rayon lumineux provenant de la zone d'installation et se dirigeant en direction du capteur associé.

Dans les exemples illustrés, le premier système optique **20** est agencé verticalement selon l'axe **A'1,** et il est tourné vers le bas pour observer la zone d'installation **E** en-dessous du dispositif, pour ainsi observer par le dessus, i.e. par le haut, un éventuel récipient **14** agencé dans la zone d'installation. Le premier capteur photoélectrique **18,** qui dans les modes de réalisation des **Figs. 1A, 4, 5, 7A** et **7B**, est un capteur commun associé aux deux systèmes optiques **24, 24',** est donc au sommet du dispositif **10** et il est tourné vers le bas en direction de la zone d'installation E. Avec cette disposition, on comprend que la surface théorique de bague d'un récipient **14** placé dans la zone installation est donc contenue dans un plan parallèle au plan du capteur. Ceci reste vrai pour l'exemple de la **Fig. 3** si l'on considère le basculement de l'axe optique qui est induit par la présence de la lame de séparation **21**. Ainsi, avec un simple objectif télécentrique, sans autre système optique, l'image de la surface de bague qui serait formée sur un seul capteur ne permettrait pas de « voir » un défaut de planéité. Au contraire, aucune variation de hauteur de cette surface de bague ne serait visible. Ceci sera cependant mis en oeuvre pour le deuxième système optique de la **Fig. 3**.

De manière pratique, on définira l'axe d'installation **A'1** comme étant la prolongation dans la zone d'installation E de l'axe optique du premier système optique **24**.

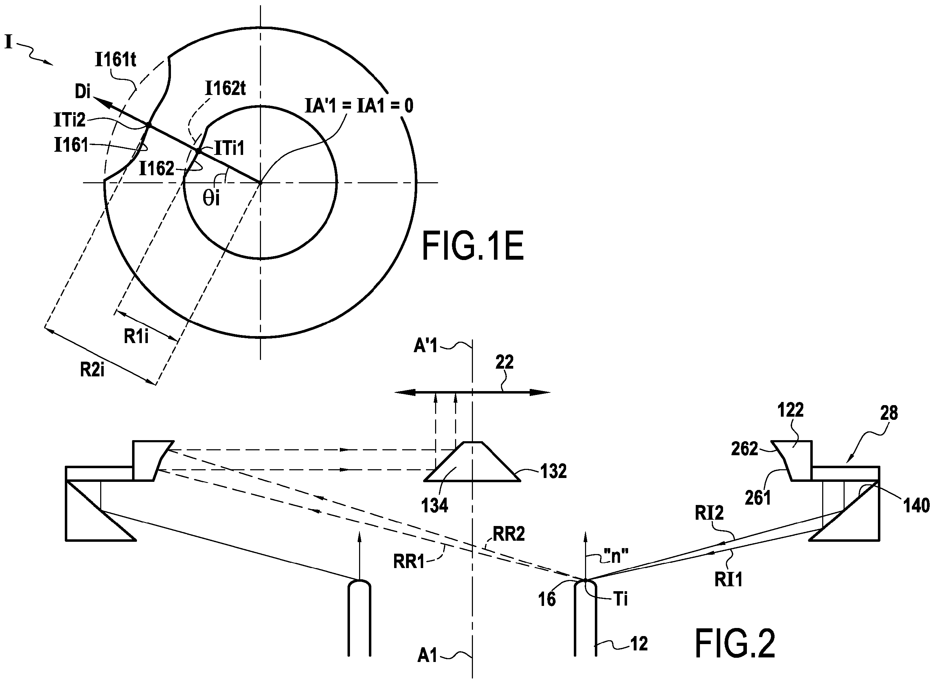

Selon un autre aspect de l'invention, il est prévu que la surface de bague réelle **16** du récipient soit éclairée à l'aide d'au moins un premier faisceau lumineux incident périphérique, c'est-à-dire s'étendant à 360 degrés d'angle autour de l'axe d'installation **A'1**. La surface de bague est éclairée par en-dessus, au sens que des premiers rayons lumineux incidents arrivent sur la surface de bague **16** en provenance de points situés au-dessus du plan **PRef** perpendiculaire à l'axe central théorique **A1** et tangent à un point de la surface de bague, de préférence le point le plus haut selon la direction de l'axe central théorique **A1.** Le premier faisceau lumineux comprend, pour toute une série de plans radiaux répartis à 360 degrés d'angle autour de l'axe d'installation **A'1,** des premiers rayons lumineux radiaux incidents contenus dans ces plans radiaux contenant l'axe d'installation. Les rayons radiaux sont, au moins pour certains d'entre eux, dirigés vers l'axe d'installation **A'1,** tel qu'illustré sur la **Fig.2.** Ces premiers rayons lumineux radiaux incidents ne sont, au moins pour la plupart d'entre eux, pas perpendiculaire à cet axe. Les rayons lumineux radiaux incidents sont de préférence non-parallèles entre eux et, dans le procédé illustré par la **Fig. 1A,** le faisceau lumineux incident périphérique comprend, dans un demi-plan radial **Pri** donné (illustré sur la **Fig. 1B**), contenant l'axe d'installation et délimité par l'axe d'installation, des rayons lumineux radiaux incidents non parallèles. Ainsi, il est illustré sur la **Fig. 1A** que le premier faisceau lumineux incident périphérique peut contenir des rayons lumineux radiaux incidents qui forment un angle d'élévation, avec un plan perpendiculaire à l'axe d'installation, compris de préférence entre 0 et 45 degrés. De préférence, le premier faisceau lumineux contient des rayons lumineux radiaux incidents selon un éventail angulaire continu ou sensiblement continu. Cet éventail peut avoir une étendue angulaire d'au moins 30 degrés, voire plus. Les rayons contenus dans cet éventail peuvent former un angle d'élévation, avec un plan perpendiculaire à l'axe central théorique, compris entre 5 et 40 degrés.

En plus des premiers rayons radiaux, le premier faisceau lumineux incident périphérique peut contenir également des rayons lumineux incidents non radiaux.

Dans les modes de réalisation illustrés, le dispositif **10** comporte au moins un premier système d'éclairage destiné à assurer l'éclairage de la surface de bague selon le premier faisceau lumineux incident périphérique. Ce sont ainsi les rayons issus de ce premier système d'éclairage qui sont réfléchis par la surface de bague et recueillis au moins par le premier système optique selon au moins le premier champ d'observation pour être dirigés en direction du premier capteur **18.** Dans les modes de réalisation illustrés, ce premier système d'éclairage comporte une première source lumineuse **28** qui est annulaire et axée sur l'axe d'installation, et qui est agencée au-dessus de la zone d'installation. La première source lumineuse 28 présente un diamètre supérieur au diamètre de la surface de bague **16.**

Dans l'exemple illustré, le diamètre de la première source lumineuse annulaire **28** est supérieur au diamètre de la couronne **122** annulaire qui porte au moins la surface primaire de réflexion **261.** Dans ce mode de réalisation, la source lumineuse **28** est agencée sensiblement à la même hauteur selon la direction de l'axe installation **A'1** que la surface primaire de réflexion inférieure **261.** Cependant, cette position est purement illustrative et pourrait être adaptée en fonction du diamètre et de la position axiale de la surface de bague du récipient à inspecter.

On remarquera que la **Fig. 2** illustre une variante du mode de réalisation de la **Fig. 1A** qui ne diffère que par le fait que le système d'éclairage comporte, en plus de la source lumineuse annulaire **28,** un réflecteur **140** agencé juste en dessous de la source lumineuse annulaire **28.** Ce réflecteur **140** comporte ici une surface tronconique, tournée en direction de l'axe d'installation. La surface du réflecteur **140** est évasée vers le haut et présente donc un diamètre sensiblement identique à celui de la source lumineuse **28.** Elle réfléchit des rayons sensiblement verticaux, émis par la source lumineuse **28,** en direction de la zone d'installation, selon une incidence rasante, en direction de la surface de bague. Un tel réflecteur permet de concentrer la lumière émise par la source lumineuse **28** en direction de la surface de bague, sous une incidence rasante favorable pour les modes de réalisation qui ont un premier angle d'élévation d'observation rasant, c'est-à-dire inférieur à 25 degrés d'angle.

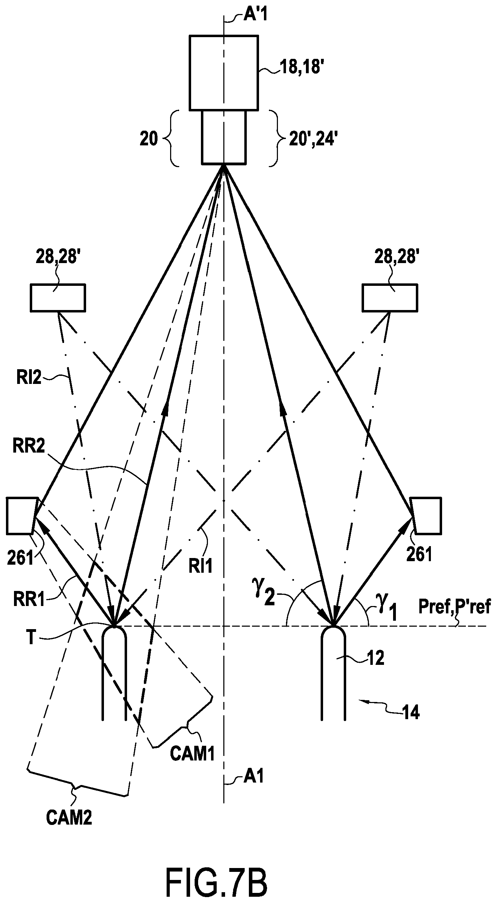

Dans le mode de réalisation de la **Fig. 1A,** et aussi pour celui de la **Fig. 7B,** pour lesquels le premier et le deuxième angle d'élévation d'observation diffèrent de moins de 20 degrés d'angle, la première source lumineuse **28** est celle qui fournit aussi la lumière destinée à former la deuxième image de la surface de bague **16** au travers du deuxième système optique **24'.** On pourrait cependant, dans l'un ou l'autre cas, prévoir la présence d'une deuxième source lumineuse dédiée à la formation de la deuxième image de la surface de bague **16** au travers du deuxième système optique **24'.**

En effet, pour les modes de réalisation des **Figs. 3**, **4**, **5**, et **7A,** il est prévu de fournir un deuxième système d'éclairage, distinct du premier, et destiné à assurer l'éclairage de la surface de bague. Ce sont ainsi au moins majoritairement les rayons issus de ce deuxième système d'éclairage qui sont réfléchis par la surface de bague **16** et qui sont recueillis selon le deuxième champ d'observation en direction du deuxième capteur **18'** ou du capteur commun. Ce deuxième système d'éclairage comporte une deuxième source lumineuse **28'** et est apte à fournir un deuxième faisceau lumineux incident périphérique, ici distinct du premier, comprenant des deuxièmes rayons lumineux radiaux incidents contenus dans des plans radiaux contenant l'axe d'installation **A'1** et répartis à 360 degrés d'angle autour de l'axe d'installation **A'1.** Ils éclairent la zone d'installation, et donc une surface de bague **16** amenée à s'y trouver, par le haut.

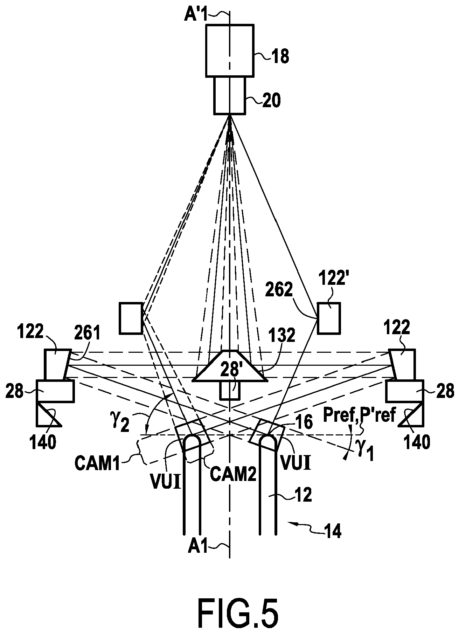

Dans les exemples des **Figs. 3** et **5,** lesdits deuxièmes rayons lumineux radiaux incidents sont dirigés de manière à s'écarter de l'axe d'installation **A'1** lorsqu'on les parcoure depuis la deuxième source lumineuse **28',** laquelle deuxième source lumineuse **28'** est, comme dans les autres modes de réalisation, agencée au-dessus du plan de référence **Pref** de la surface de bague **16.**

Dans le mode de réalisation de la **Fig. 3,** la deuxième source lumineuse **28'** est annulaire et axée sur l'axe d'installation et elle présente un diamètre qui est légèrement inférieur au diamètre de la surface de bague **16.** De préférence, ces deux diamètres seront très proches, pour avoir une directions d'incidence de rayons lumineux issus de la deuxième source lumineuse **28'** proche de 90° par rapport à un plan de référence perpendiculaire à l'axe d'installation. Dans le mode de réalisation de la **Fig. 5**, la deuxième source lumineuse **28'** est une source centrale, que l'on peut considérer comme ponctuelle et placée sur l'axe d'installation **A'1**. Elle présente de ce fait aussi un diamètre qui est inférieur au diamètre de la surface de bague **16**. De la sorte, la surface de bague **16** est éclairée depuis l'axe d'installation **A'1**, autrement dit, depuis l'intérieur.

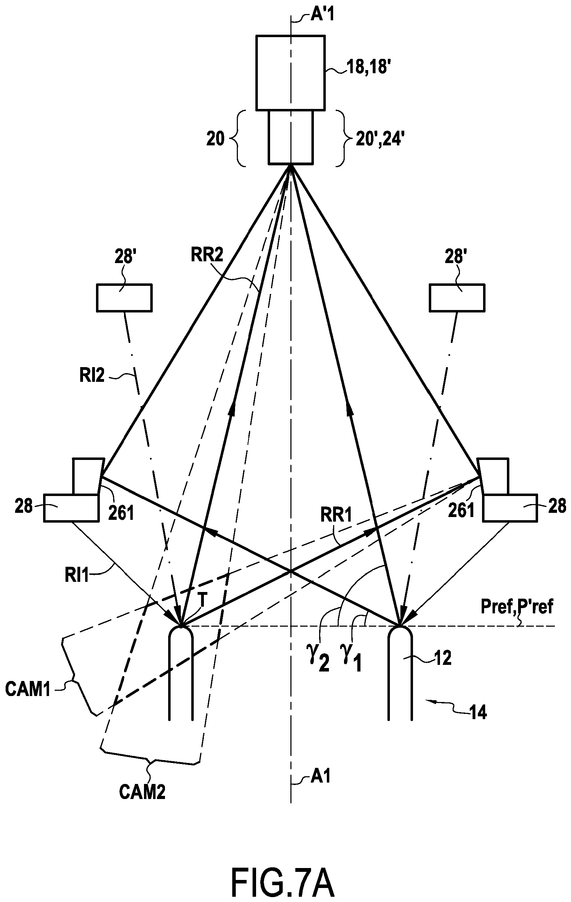

On a illustré sur la **Fig. 4** une possible variante pour la deuxième source lumineuse **28'**. Dans une telle variante la source lumineuse **28'** peut être annulaire, être axée sur l'axe d'installation et présenter un diamètre qui est supérieur au diamètre de la surface de bague **16**. Elle est aussi placée au-dessus des éléments optiques **122** et **132**. Dans ce cas, on note que les deuxièmes rayons radiaux sont dirigés en direction de l'axe d'installation **A'1** lorsqu'on les parcoure depuis la deuxième source lumineuse **28'**, laquelle est agencée au-dessus du plan de référence **Pref** de la surface de bague **16**. Cette variante est aussi mise en oeuvre dans le mode de réalisation de la **Fig. 7A,** et elle peut aussi être mise en oeuvre dans le cadre du mode de réalisation de la **Fig. 3**.

De préférence, pour chaque champ d'observation, on prévoit que le faisceau incident éclaire la surface de bague **16,** depuis le haut, sous une incidence telle que, au point de réflexion **T'** d'un rayon incident, dont le rayon réfléchi par la surface de bague réelle est vu par le capteur associé au travers du système optique associé, la normale « **n** » à la surface de bague forme par rapport à l'axe **A'1** un angle inférieur à 30 degrés d'angle, de préférence inférieur à 10 degrés d'angle. Dans le cadre d'une géométrie parfaite, avec une surface de bague réelle correspondant à la surface de bague théorique, on s'assure ainsi que la lumière réfléchie par la surface de bague qui est vue par le capteur **18** est la lumière qui est réfléchie par le point localement le plus haut, ou proche du plus haut local de la surface de bague. On considère ici uniquement ce qui se passe dans un demi-plan radial **Pri** du dispositif et de la surface de bague à contrôler. Ainsi, le point localement le plus haut de la surface de bague est le point qui, dans le profil de la surface de bague dans ce demi-plan radial **Pri,** est le plus haut selon la direction de l'axe installation. Par ailleurs, le point localement le plus haut peut être généralement défini comme étant celui pour lequel la normale à la surface de bague est parallèle à l'axe installation. La **Figure 2** illustre un rayon incident **RI1** émis par la source lumineuse, qui est réfléchi par un point **Ti** de la surface de bague en un premier rayon réfléchi **RR1** qui est intercepté par la première surface primaire de réflexion **261** et ainsi envoyé vers le capteur associé. Un autre rayon incident **RI2** est réfléchi selon un second rayon réfléchi **RR2** par le même point **Ti** de la surface de bague en un deuxième rayon réfléchi qui est intercepté par la deuxième surface primaire de réflexion **262** et ainsi envoyé vers le capteur associé. Pour l'illustration, la normale « **n** » à la surface de bague **16,** au point **Ti**, est sensiblement parallèle à la direction de l'axe d'installation, et le point **Ti** est le point localement le plus haut du profil de surface de bague dans le demi-plan radial correspondant. Dans le cadre du dispositif, cette condition sera remplie en sélectionnant la position adéquate de la ou des sources lumineuse **28, 28'**. Cette position, qui peut par exemple être définie par le diamètre de la source annulaire **28, 28'**, et par sa position en hauteur selon la direction de l'axe installation **A'1**, définit en effet l'angle d'incidence des rayons qui sont susceptibles d'éclairer la surface de bague. Bien entendu, le diamètre et la position en hauteur de la surface de bague réelle **16** déterminent, en combinaison avec l'orientation de la normale au point de réflexion sur la surface de bague, lequel ou lesquels des rayons émis par la source **28** sont susceptibles d'être réfléchis en direction du capteur. On comprend donc que pour chaque diamètre de surface de bague, il pourrait être utile d'adapter soit le diamètre de la source annulaire, soit sa position en hauteur par rapport à la surface de bague **16**. Cependant, il n'est pas nécessairement critique de détecter le point localement le plus haut de la surface de bague. En effet, dans le cadre d'une surface de bague plane et annulaire, les bords radiaux interne et externe de la surface de bague présentent une arête qui fait que, si le point de réflexion de la lumière incidente est situé sur cette arête, la différence de hauteur entre le point de réflexion et le point localement le plus haut sera dans ce cas considérée comme négligeable. Dans le cadre d'une surface de bague dont le profil dans le demi plan radial est arrondi, on considérera aussi que le fait que la réflexion puisse se faire sur un point qui n'est pas le point localement le plus haut est largement compensé par le fait que cette situation se répète sur toute la périphérie à 360 degrés d'angle de sorte que, d'un point de vue de l'analyse de la planéité par exemple, l'erreur ainsi commise est généralement considérée comme négligeable. Ainsi, il est certes possible de prévoir un dispositif dans lequel la ou les sources lumineuses seraient réglables, par réglage de la position radiale ou de la position selon la direction de l'axe installation, pour régler l'angle d'incidence du faisceau lumineux sur la surface de bague. Cependant, une telle disposition n'est pas obligatoire. Pour couvrir au mieux une large gamme de diamètre de surface de bague, on peut prévoir que le dispositif soit muni de plusieurs sources lumineuses annulaires, par exemple décalées selon la direction de l'axe installation et/ou de diamètre différent, ces différentes sources lumineuses pouvant être utilisées simultanément, ou alternativement en fonction du diamètre et la forme de la surface de bague d'un récipient à inspecter. Dans la pratique, on utilise généralement des sources lumineuses qui présentent, dans un plan radial, une étendue selon la direction radiale et qui émettent un faisceau lumineux contenant des rayons radiaux selon un éventail angulaire continu ou sensiblement continu pouvant avoir une étendue angulaire d'au moins 30 degrés, voire plus. De telles sources lumineuses, qui présentent une étendue radiale et qui sont diffuses, permettent d'éclairer convenablement toute une série de récipients ayant des surfaces de bague possédant un diamètre, un profil et une position en hauteur qui peuvent différer dans certaines plages, sans nécessiter d'adaptation en position.

On notera que, notamment dans le mode de réalisation de la **Fig. 1A**, ou dans celui de la **Fig. 7B,** il sera avantageux de prévoir que la différence entre les deux angles d'élévation d'observation γ**1,** γ**2** soit inférieure ou égale à 20 degrés d'angle, ce qui limitera les erreurs qui pourraient être induites par des réflexions qui, pour les deux images de la surface de bague, se feraient en des points différents de la surface de bague, qui, tout en étant dans un même plan radial pourraient être décalés radialement et axialement l'un de l'autre. Ceci sera notamment avantageux dans la mesure où cela favorisera la possibilité d'utiliser une source lumineuse commune pour l'observation selon les deux angles d'élévation d'observation.

Dans les modes de réalisation présentant une forte différence entre les angles d'élévation d'observation γ1, γ2, on prévoira de préférence deux sources lumineuses distinctes **28, 28'** agencées pour que, dans un plan radial **Pri** donné, le premier et le deuxième faisceau incident éclairent la surface de bague sous une incidence telle que, les rayons réfléchis par la surface de bague réelle **16** soient vus au travers des deux systèmes optiques après réflexion en un même point de la surface de bague. Mais on peut accepter que les points de réflexion soient différents, car cela peut être pris en compte dans le traitement des images.

Dans les exemples illustrés, pour un système optique **24, 24'**, le capteur **18, 18'**, son système objectif **20, 20'**, l'élément optique **122** éventuel et la zone d'installation sont alignés dans cet ordre selon le même axe optique correspondant à l'axe d'installation **A'1**.

Dans les exemples illustrés, l'élément optique de vision périphérique **122** comporte au moins une première surface primaire de réflexion **261** appartenant au premier système optique **24**. Dans l'exemple de la **Fig. 1A**, le même élément optique **122** comporte une deuxième surface primaire de réflexion **262** appartenant au deuxième système optique **24'**, de sorte que l'élément optique **122** est commun aux deux systèmes optiques, mais par le biais de deux surfaces primaires de réflexion différentes. Dans l'exemple de la **Fig. 5**, un deuxième élément optique **122'**, distinct, comporte la deuxième surface primaire de réflexion **262** appartenant au deuxième système optique **24'**.

La première surface primaire de réflexion **261**, et, pour les modes de réalisation qui en sont munis, la deuxième surface primaire de réflexion **262**, sont agencées dans un champ de vision aval du capteur **18, 18'** associé, c'est-à-dire dans la portion du champ de vision du capteur qui, dans les exemples illustrés, est définie par le système objectif **20, 20'** associé. Le champ de vision amont est donc celui qui est en-dehors du système optique associé **24, 24'**, en amont de celui-ci dans le sens de circulation de la lumière depuis la zone d'installation vers le capteur associé.

Dans les exemples illustrés, la première surface primaire de réflexion **261** et l'éventuelle deuxième surface primaire de réflexion **262** sont des surfaces de révolution tronconiques de révolution générées par rotation, chacune de son propre segment de droite générateur, autour du même axe, ici l'axe d'installation **A'1**, et elles sont agencées pour réfléchir des rayons lumineux, provenant de la surface de bague, en direction du capteur associé, au travers du système objectif **20, 20'** associé. Elles possèdent donc des propriétés de réflexion spéculaire. Elles peuvent être avantageusement formées par un miroir, mais elles peuvent être aussi réalisées sous la forme d'un prisme, i.e. un dioptre optique.

Dans les modes de réalisation illustrés, la première surface primaire de réflexion **261**, et l'éventuelle deuxième surface primaire de réflexion **262**, est une surface tronconique de révolution, concave dans un plan perpendiculaire à l'axe d'installation **A'1**, qui est tournée vers l'axe d'installation **A'1**, et pouvant par être exemple formée sur une face interne d'une couronne annulaire, par exemple de l'élément optique **122, 122'**. De cette manière, chaque surface primaire de réflexion **261, 262** peut renvoyer, directement ou indirectement, en direction de l'axe d'installation **A'1**, des rayons lumineux provenant de la surface de bague réelle selon un angle d'élévation d'observation correspondant γ1, γ2.

Pour un champ d'observation périphérique donné, les rayons d'observation sont les rayons issus de la zone d'installation **E** et susceptibles d'être reçus par le capteur **18, 18'** associé au travers du système optique associé **24, 24'**. Parmi ces rayons, les rayons principaux d'observation sont ceux qui, au travers du système optique associé **24, 24'**, passent par le centre de la pupille d'entrée **CO** du système objectif **20, 20'**. L'angle d'élévation d'observation d'un rayon principal d'observation correspond à l'angle, par rapport à un plan de référence de l'installation **Pref'** perpendiculaire à l'axe d'installation **A'1**, d'un rayon principal d'observation dans la zone d'installation où il est susceptible d'impacter la surface de bague d'un récipient à inspecter. On peut arbitrairement considérer que les rayons d'observation se propagent d'amont en aval en partant de la zone d'observation en direction du capteur **18, 18'** associé.

Dans le cadre d'un dispositif pourvu d'un système optique télécentrique, les rayons principaux d'observation reçus par le capteur entrent tous dans le système objectif **20, 20'** de manière parallèle. Si de plus, comme dans certains des systèmes illustrés, le système optique comporte comme premier élément optique selon la propagation amont-aval de la lumière depuis la zone d'installation vers le capteur associé, une surface primaire de réflexion **261, 262** tronconique générée par un segment de droite, l'angle d'élévation d'observation γ**1**, γ**2** du champ d'observation périphérique correspondant est alors un angle unique pour tout rayon principal d'observation appartenant à ce champ d'observation périphérique donné, et il peut être directement déduit de l'inclinaison de la surface primaire de réflexion correspondante **261, 262** par rapport à l'axe d'installation **A'1**. Cet angle est alors considéré comme étant l'angle d'élévation d'observation γ**1**, γ**2** du champ d'observation périphérique.

Cependant, dans certains cas, notamment le cas d'un dispositif n'ayant pas un système objectif télécentrique, les rayons d'observation reçus par le capteur, y compris les rayons principaux, peuvent avoir des angles d'élévation d'observation différents les uns par rapport aux autres au sein d'un champ d'observation périphérique déterminé par un système optique **24, 24'** donné. Dans ce cas, on peut prendre comme convention que l'angle d'élévation d'observation d'un champ d'observation périphérique est l'angle, mesuré dans la zone d'installation où il est susceptible d'impacter la surface de bague d'un récipient à inspecter, par rapport à un plan perpendiculaire à l'axe d'installation **A'1**, d'un rayon principal d'observation moyen. Le rayon principal moyen d'un champ d'observation périphérique, est celui qui présente un angle d'élévation d'observation qui est la moyenne arithmétique des valeurs minimale et maximale des angles d'élévation d'observation pour les rayons principaux du champ considéré.

De préférence, dans tous les modes de réalisation, le premier et/ou le second champ d'observation périphérique est sans rupture azimutale autour de l'axe d'installation **A'1**. Notamment, il n'y a pas de discontinuité angulaire azimutale entre deux rayons radiaux d'observation infiniment proches angulairement autour de l'axe d'installation. De la sorte, il n'y a pas de rupture de point vue dans l'image générée par le champ considéré, qui pourrait rendre l'image plus difficile à interpréter. Pour cela, la première et/ou la deuxième surface primaire de réflexion **261, 262** est de préférence sans discontinuité de courbure autour de l'axe d'installation **A'1**, la courbure étant analysée dans un plan perpendiculaire à l'axe d'installation **A'1**, pour assurer un champ d'observation sans rupture azimutale. Les surfaces primaires de réflexion **261, 262** sont aussi de préférence continues en azimut au sens qu'elles sont continuellement réfléchissantes autour de l'axe d'installation **A'1**, sans secteur angulaire masqué, pour assurer la continuité azimutale du champ d'observation. Toutefois, dans certains cas, notamment du fait de contraintes d'installation matérielle, par la présence d'un câble d'alimentation, il se peut qu'un ou plusieurs secteurs angulaires, autour de l'axe d'installation, soient masqués. De préférence, un tel secteur angulaire azimutal masqué sera d'étendue faible voire très faible, de préférence inférieure à 5 degrés autour de l'axe d'installation.

Le premier et/ou le second champ d'observation sont périphériques en ce sens que les rayons radiaux d'observation correspondants sont répartis dans plans radiaux à 360 degrés d'angle autour de l'axe d'installation **A'1**. Dans les exemples, le premier champ d'observation périphérique est symétrique en rotation autour de l'axe d'installation **A'1**. De même, le deuxième champ d'observation périphérique est symétrique en rotation autour de l'axe d'installation **A'1**.

Le premier et/ou le second champ d'observation périphérique observe « par au-dessus » au sens que la surface de bague est observée depuis au-dessus d'un plan **Pref** perpendiculaire à l'axe central théorique **A1** de la surface de bague, et contenant au moins un point de la surface de bague, par exemple le point le plus haut selon la direction de l'axe central théorique **A1**.

Dans les modes de réalisation illustrés aux **Figs. 1A** à **5**, le premier système optique **24**, éventuellement le deuxième système optique **24'**, comporte en plus, intercalée optiquement entre l'élément optique **122** et le système objectif **20**, une surface de réflexion de renvoi **132**. Ainsi, comme on peut le voir sur la **Fig. 1A**, les rayons réfléchis par les deux surfaces primaires de réflexion **261, 262** sont interceptés par la surface de réflexion de renvoi **132**. La surface de réflexion de renvoi **132** est agencée dans le champ de vision aval du capteur **18**, ce champ de vision aval étant défini par le système objectif optique **20, 20'**. Dans l'exemple, cette surface de réflexion de renvoi **132** comporte une surface de révolution convexe tournée à l'opposé de l'axe d'installation **A'1**, de manière à renvoyer les rayons en direction du capteur. De préférence, la surface de réflexion de renvoi **132** est une surface tronconique convexe qui est axée sur l'axe d'installation **A'1**. La surface de réflexion de renvoi **132** est donc formée sur la surface externe d'un tronc de cône. Dans certains modes de réalisation, elle présente un petit diamètre et un grand diamètre qui sont tous les deux inférieurs au diamètre de la surface de bague d'un récipient à contrôler, mais cette caractéristique n'est obligatoire que pour les modes de réalisation pour lesquels le deuxième système optique **24'** assure au deuxième capteur **18'** associé une vision directe de la surface de bague **16**, comme dans les modes de réalisation des **Figs. 3** et **4**. Le grand diamètre est agencé en-dessous du petit diamètre.

La surface de réflexion de renvoi **132** s'inscrit dans le champ de vision aval défini par le système objectif **20** pour le premier capteur **18**. Dans le mode de réalisation de la **Fig. 1A**, la surface de réflexion de renvoi **132** s'inscrit aussi dans le champ de vision aval défini par le système objectif **20'** pour le second capteur **18'**, ici le capteur commun.

Dans les modes de réalisation des **Figs. 1A** à **5**, la première surface primaire de réflexion **261**, et, pour le mode de réalisation de la **Fig. 1A**, aussi la deuxième surface primaire de réflexion **262**, tout en étant une surface de révolution axée sur l'axe d'installation **A'1**, est donc agencée pour réfléchir indirectement des rayons lumineux, provenant de la surface de bague réelle sous des angles d'élévation d'observation respectifs $\gamma1$, $\gamma2$, en direction du capteur associé **18**, **18'**. En effet, la réflexion sur chacune des surfaces primaires de réflexion **261, 262** est indirecte car suivie par au moins une réflexion, ici sur la surface de réflexion de renvoi **132**, avant d'aboutir au capteur associé **18, 18'**.

Dans les exemples de réalisation des **Figs. 7A** et **7B**, la réflexion, sur la première surface primaire de réflexion **261**, des rayons lumineux provenant de la surface de bague vers le capteur associé, est une réflexion directe, sans autre surface de réflexion entre la surface de bague **16** et le capteur **18** pour un rayon lumineux donné issu de la surface de bague.

Dans l'exemple de réalisation illustré sur la **Fig. 5**, la réflexion, sur la deuxième surface primaire de réflexion **262**, des rayons lumineux provenant de la surface de bague vers le capteur associé, est une réflexion directe, sans autre surface de réflexion entre la surface de bague **16** et le capteur **18** pour un rayon lumineux donné issu de la surface de bague.

Dans le cas d'une réflexion indirecte, on prévoit avantageusement que la trajectoire des rayons principaux entre chacune des surfaces primaires de réflexion **261, 262** et la surface de réflexion de renvoi **132** soit perpendiculaire ou sensiblement perpendiculaire à l'axe d'installation. Une telle disposition permet de réduire considérablement la sensibilité du dispositif à un éventuel défaut de centrage des surfaces primaires de réflexion **261, 262** ou de la surface de réflexion de renvoi **132.** Pour cela, la surface de réflexion de renvoi tronconique **132** présente un demi-angle au sommet de 45 degrés d'angle et elle est agencée à la même hauteur selon la direction de l'axe d'installation **A'1** que les surfaces primaires de réflexion **261, 262.** Chaque surface primaire de réflexion **261, 262** présente dans ce cas un demi-angle au sommet **a1, a2** qui est égal à la moitié de l'angle d'élévation d'observation correspondant $\gamma$**1,** $\gamma$**2** souhaité pour la surface primaire de réflexion **261, 262** considérée. Ainsi, pour un angle d'élévation d'observation $\gamma$**1** souhaité de 15 degrés d'angle, la première surface primaire de réflexion **261** présente une conicité dont le demi-angle au sommet **a2** vaut 7,5 degrés d'angle, la première surface primaire de réflexion tronconique **261** étant évasée vers le bas, avec son grand diamètre agencé en-dessous de son petit diamètre selon la direction de l'axe d'installation. Dans cette configuration, il est particulièrement avantageux qu'en plus le système objectif 20, 20' soit télécentrique, pour que la trajectoire de tous les rayons principaux entre chacune des surfaces primaires de réflexion **261, 262** et la surface de réflexion de renvoi **132** soit perpendiculaire ou sensiblement perpendiculaire à l'axe d'installation **A'1.**

Cependant, en variante, toujours dans le cas d'une réflexion indirecte, la surface de réflexion de renvoi **132** pourrait être une surface tronconique présentant un demi-angle au sommet inférieur à 45 degrés d'angle, par exemple égal à 45 degrés d'angle moins un angle $\delta$ (delta). Dans ce cas, la surface de réflexion de renvoi **132** peut être disposée au-dessus du niveau de la ou des surfaces primaires de réflexion **261, 262,** et la ou les surfaces primaires de réflexion **261, 262** présenteraient alors un demi-angle au sommet **a1, a2** égal à la moitié de l'angle d'élévation d'observation $\gamma$**1,** $\gamma$**2** souhaité, moins la valeur de l'angle $\delta$ (delta).

Dans l'exemple de la **Fig. 1A,** la première surface primaire de réflexion **261** et la deuxième surface primaire de réflexion **262** sont agencées pour travailler toutes les deux en réflexion indirecte conjointement avec une surface de réflexion de renvoi **132,** et elles sont avantageusement décalées axialement tout en étant en directement accolées l'une à l'autre selon la direction de l'axe d'installation, c'est-à-dire qu'elles ne sont pas agencées axialement au même niveau. Arbitrairement, on considère que la surface primaire de réflexion qui se trouve en-dessous de l'autre selon la direction de l'axe d'installation **A'1** est la première surface primaire de réflexion **261,** la deuxième surface primaire de réflexion **262** étant alors agencée au-dessus de la première. Les deux surfaces primaires de réflexion peuvent alors présenter une arête circulaire commune correspondant au bord inférieur de la surface supérieure, ici la deuxième surface primaire de réflexion **262,** et au bord supérieur de la surface inférieure, ici la première surface primaire de réflexion **261.**

Cependant la première surface primaire de réflexion **261** et la deuxième surface primaire de réflexion **262** pourraient être décalées axialement en étant séparées axialement d'un écart axial non nul entre le bord inférieur de la surface supérieure et le bord supérieur de la surface inférieure, comme dans l'exemple de la **Fig. 5.**

Dans les modes de réalisation illustrés, on voit que, par rapport à l'axe **A1** de la surface de bague, l'observation faite par l'intermédiaire d'une surface primaire de réflexion se fait de manière périphérique radialement depuis l'extérieur par rapport à la surface de bague, au sens que la première surface primaire de réflexion **261,** et par ailleurs aussi la deuxième surface primaire de réflexion **262** pour les modes de réalisation des **Figs. 1A** et **5,** est agencée radialement à l'extérieur par rapport au diamètre de la surface de bague **16.**

On remarque cependant que, pour les modes de réalisation des **Figs. 1A** à **7A,** un rayon d'observation du premier champ d'observation, provenant de la surface de bague **16,** est intercepté par la première surface primaire de réflexion **261** en un point diamétralement à l'opposé du point d'origine sur la surface de bague, selon un trajet long qui coupe l'axe d'installation **A'1.** Ainsi, on voit que la surface de bague **16** est observée, selon le premier champ d'observation au moins, par le côté de son bord intérieur, c'est-à-dire que les rayons d'observation, dans leur trajectoire depuis la surface de bague vers le capteur, sont dirigés en direction de l'axe d'installation lorsqu'ils quittent la surface de bague **16** en direction de la première surface primaire de réflexion **261,** et qu'ils coupent cet axe d'installation **A'1** avant d'aboutir sur la première surface primaire de réflexion **261.**

Dans le mode de réalisation de la **Fig. 7B,** le premier système optique **24** définit un champ d'observation périphérique radialement par l'extérieur et observant la surface de bague par le côté de son bord extérieur. Ainsi, un premier rayon d'observation provenant de la surface de bague **16** ne coupe pas l'axe d'installation **A'1** entre la surface de bague et le premier système optique **24.**

Dans le mode de réalisation de la **Fig. 1A,** le deuxième système optique **24',** définit, comme le premier, un champ d'observation périphérique radialement par l'extérieur et observant la surface de bague par le côté de son bord intérieur, donc selon des rayons d'observation qui coupent l'axe d'installation **A'1** lorsque l'axe d'installation et l'axe central théorique **A1** sont confondus.

Dans le mode de réalisation de la **Fig. 3,** le deuxième système optique **24',** sans surface de réflexion de révolution donc en vision directe télécentrique, définit, par rapport à l'axe central théorique **A1** de la surface de bague, une observation perpendiculaire par rapport aux plans de références de l'installation et de la surface de bague.

Dans les modes de réalisation des **Figs. 4, 7A** et **7B,** le deuxième système optique **24',** sans surface de réflexion de révolution donc en vision directe non-télécentrique, définit, par rapport à l'axe **A1** de la surface de bague, une observation radialement depuis l'intérieur par rapport à la surface de bague. Toutefois, dans ce mode de réalisation de la **Fig. 4,** la surface de bague **16** est observée, selon le deuxième champ d'observation, par le côté de son bord intérieur, comme pour le premier mode de réalisation.

Dans le mode de réalisation de la **Fig. 5,** le deuxième système optique **24',** définit un champ d'observation périphérique radialement par l'extérieur et observant la surface de bague par le côté de son bord extérieur.

Dans les modes de réalisation des **Figs. 3, 4,** et **5,** un deuxième rayon d'observation provenant de la surface de bague **16** ne coupe pas l'axe d'installation **A'1** entre la surface de bague et le deuxième système optique **24'.**

Dans tous les modes de réalisation illustrés pour lesquels le système optique comporte une surface primaire de réflexion agencée pour une réflexion directe ou indirecte, la surface primaire de réflexion présente un petit diamètre et un grand diamètre tous les deux supérieurs au diamètre de la surface de bague théorique, de telle sorte qu'elle définit un champ d'observation périphérique radialement depuis l'extérieur. Dans les cas où la surface primaire de réflexion est agencée pour une réflexion indirecte, elle est de préférence évasée dans la direction de l'axe d'installation en allant vers la zone d'installation. Au contraire, dans les configurations des modes de réalisation des **Figs. 5, 7A** et **7B,** avec un système optique **24, 24'** comportant une surface primaire de réflexion **261** et/ou **262** qui est agencée pour une réflexion directe vers le capteur, la dite surface primaire de réflexion **261** et/ou **262** peut être évasée dans la direction de l'axe d'installation en allant vers le capteur associé, ou être cylindrique de révolution autour de l'axe d'installation **A'1.**

Dans les modes de réalisation des **Figs. 1A** à **5,** le premier champ d'observation périphérique, défini pour le premier capteur ou pour le capteur commun par le premier système optique **24** incluant la première surface primaire de réflexion, présente, par rapport à un plan **PRef** perpendiculaire à l'axe d'installation **A'1,** un premier angle d'élévation d'observation $\gamma$**1,** qui est par exemple compris entre 5 et 25 degrés d'angle, par exemple 15 degrés d'angle. Dans les exemples illustrés, le premier champ d'observation périphérique comprend les rayons d'observation selon lesquels des rayons lumineux incidents sont réfléchis par la première surface primaire de réflexion **261** vers le capteur **18.** En d'autres termes, ce premier champ d'observation périphérique constitue une première portion amont **CAM1** du champ de vision du premier capteur **18** au travers du premier système optique **24,** telle que déterminée par la première surface primaire de réflexion **261,** dans la zone d'installation **E** jusqu'à cette première surface primaire de réflexion **261.**

Pour les modes de réalisation des **Figs. 7A** et **7B,** le premier champ d'observation périphérique, défini pour le premier capteur ou pour le capteur commun par le premier système optique **24** incluant la première surface primaire de réflexion, présente, par rapport à un plan **PRef** perpendiculaire à l'axe d'installation **A'1,** un premier angle d'élévation d'observation $\gamma$**1,** qui, pour la **Fig. 7A,** est compris dans la gamme allant de 25 à 45 degrés d'angle, et qui, pour la **Fig. 7B,** est supérieur à 45 degrés d'angle.

Pour les modes de réalisation des **Figs. 1A** à **5,** ainsi que pour celui de la **Fig. 7A,** dans la portion amont des rayons d'observation qui est dans la zone d'installation **E** jusqu'à cette première surface primaire de réflexion **261,** les premiers rayons d'observations radiaux déterminés par le premier système optique sont d'abord centripètes lorsqu'on les parcourt depuis la surface de bague, donc orientés en direction de l'axe d'installation **A'1,** puis coupent l'axe d'installation **A'1** pour devenir, au-delà de l'axe d'installation, centrifuges en direction de la première surface primaire de réflexion **261** du premier système optique, jusqu'à impacter cette première surface primaire de réflexion **261.**

Pour le mode de réalisation de la **Fig. 7B,** en réflexion directe par la première surface primaire de réflexion **261** sans autre réflexion sur une surface de réflexion de révolution, les premiers rayons d'observations radiaux déterminés par le premier système optique sont, lorsqu'on les parcourt d'amont en aval depuis la surface de bague en direction du capteur, centrifuges par rapport à l'axe d'installation **A'1,** jusqu'à impacter la première surface primaire de réflexion **261** du premier système optique **24.**

Le deuxième champ d'observation périphérique a, par rapport à un plan **PRef** perpendiculaire à l'axe d'installation **A'1,** un deuxième angle d'élévation d'observation $\gamma$**2,** qui est par exemple compris entre 20 degrés d'angle et 90 degrés d'angle, ce deuxième angle étant différent du premier angle d'élévation d'observation $\gamma$**1.**

De préférence, le premier et le deuxième angle d'élévation d'observation diffèrent par au moins 5 degrés d'angle. En effet, une telle différence angulaire apparaît nécessaire pour une bonne précision des opérations de triangulation qui seront décrites plus loin. Dans les exemples illustrés, mais de manière arbitraire, le deuxième angle d'élévation d'observation $\gamma$**2** est strictement supérieur au premier angle d'élévation d'observation $\gamma$**1.**

Dans les exemples illustrés aux **Figs. 1A** et **5,** le deuxième champ d'observation périphérique comprend les rayons d'observation selon lesquels des rayons lumineux incidents sont réfléchis sur la deuxième surface primaire de réflexion **262,** au travers donc du deuxième système optique **24',** en direction du deuxième capteur **18',** en l'occurrence formé par le capteur commun. Ce deuxième champ d'observation périphérique constitue une deuxième portion amont **CAM2** du champ de vision du capteur commun **18, 18'** au travers du deuxième système optique **24',** telle que déterminée par la deuxième surface primaire de réflexion **262,** dans la zone d'installation **E** jusqu'à la deuxième surface primaire de réflexion **262.**

Pour le mode de réalisation de la **Fig. 1A,** dans la portion amont des deuxièmes rayons d'observation qui est dans la zone d'installation **E,** jusqu'à cette deuxième surface **261**, **262**, les deuxièmes rayons d'observations radiaux déterminés par le deuxième système optique sont d'abord centripètes lorsqu'on les parcourt d'amont en aval depuis la surface de bague en direction du capteur, donc d'abord orientés en direction de l'axe d'installation **A'1**, puis coupent l'axe d'installation **A'1** pour devenir centrifuges au-delà de l'axe d'installation **A'1** en direction de la deuxième surface primaire de réflexion **262** du deuxième système optique **24'**, jusqu'à impacter la deuxième surface primaire de réflexion **262**.

Dans le mode de réalisation de la **Fig. 1A**, le deuxième angle d'élévation d'observation $\gamma 2$ est, comme le premier angle d'élévation d'observation $\gamma 1$, un angle rasant, inférieur à 25 degrés d'angle.

Dans le mode de réalisation de la **Fig. 5**, en réflexion directe par la deuxième surface primaire de réflexion **262** sans autre réflexion sur une surface de réflexion de révolution, le deuxième angle d'élévation d'observation $\gamma 2$ est un angle plongeant, supérieur à 65 degrés d'angle, de préférence supérieur à 75 degrés d'angle. Pour ce mode de réalisation de la **Fig. 5**, les deuxièmes rayons d'observations radiaux déterminés par le deuxième système optique sont, lorsqu'on les parcourt d'amont en aval depuis la surface de bague en direction du capteur, centrifuges par rapport à l'axe d'installation **A'1**, jusqu'à impacter la deuxième surface primaire de réflexion **262** du deuxième système optique **24'**.

On note, dans les modes de réalisation des **Figs. 1A** et **5** , qui ont en commun la présence de la deuxième surface de réflexion **262** et la présence d'un capteur commun **18,** que la première surface primaire de réflexion **261** et la deuxième surface primaire de réflexion **262** sont chacune dans des portions disjointes du champ de vision aval du capteur commun **18,** au sens qu'elles peuvent être vues simultanément par le capteur au travers du système objectif **20,** sans se masquer l'une l'autre. Dans la mesure où l'une masquerait l'autre partiellement, on ne considérera, pour celle qui est partiellement masquée, que la partie non masquée utile.

Dans les modes de réalisation des **Figs. 3** et **4**, en vision directe sans réflexion sur une surface de réflexion de révolution, le deuxième angle d'élévation d'observation $\gamma 2$ est lui aussi un angle plongeant, supérieur à 65 degrés d'angle, de préférence supérieur à 75 degrés d'angle. Dans le mode de réalisation de la **Fig. 3**, la présence d'un système objectif télécentrique fait que le deuxième angle d'élévation d'observation $\gamma 2$ est égal à 90 degrés d'angle. Dans ces deux modes de réalisation aussi, ce deuxième champ d'observation périphérique constitue une deuxième portion amont **CAM2** du champ de vision, du capteur commun **18** pour le mode de réalisation de la **Fig. 4,** ou du deuxième capteur **18'** pour le mode de réalisation pour la **Fig. 3,** au travers du deuxième système optique tel que déterminé le système objectif **20'**. Dans la portion des rayons d'observation qui est dans la zone d'installation **E** jusqu'au système objectif **20',** les rayons d'observation de ce second champ d'observation sont, pour le mode de réalisation de la **Fig. 4,** centripètes vers l'axe **A'1,** ou, pour le mode de réalisation de la **Fig. 3,** parallèle à cet axe, lorsqu'on les parcourt depuis la zone d'installation E vers le système objectif **20'**. On note que, dans ces modes de réalisation ne comportant pas de surface de réflexion de révolution pour le deuxième système optique **24',** lequel est alors réduit au système objectif **20',** on peut considérer que la portion amont et la portion aval du champ de vision pour le deuxième capteur, distinct ou commun, sont confondues.

On remarque donc que la portion amont du second champ de vision est de section annulaire par un plan perpendiculaire à l'axe d'installation **A'1**. Dans les deux modes de réalisation des **Figs. 3** et **4**, la limite interne de cette zone annulaire est déterminée par le contour externe de la surface de renvoi **132**, voire par le contour externe de la seconde source lumineuse annulaire **28'** pour l'exemple de la **Fig. 3**. Sa limite externe est déterminée par le contour interne de l'élément optique **122**, ou par une éventuelle deuxième source lumineuse annulaire **28'** dans le mode de réalisation de la **Fig. 4,** ou encore par la limite de champ du capteur **18, 18'** associé.

Dans le mode de réalisation de la **Fig. 3,** le second capteur **18'** étant un capteur dédié, il est possible de prévoir un positionnement spécifique du second capteur ou une mise au point spécifique du deuxième système objectif **20',** qui permet de tenir compte de la différence de longueur de trajet relativement importante pour d'une part les rayons au travers du premier système optique **24** et d'autre part les rayons au travers du second système optique **24'**. Dans le mode de réalisation de la **Fig. 4,** tout comme dans celui de la **Fig. 5,** comprenant un capteur commun **18** associé aux deux systèmes optiques **24, 24',** la différence de trajet peut être compensée par exemple en augmentant la profondeur de champ, par exemple au moyen d'un diaphragme, et/ou en effectuant une mise au point médiane du système objectif **20,** et/ou en utilisant un système optique dioptrique ou catoptrique supplémentaire intercalé dans l'un ou l'autre des deux systèmes optiques **24, 24'**.

Dans le mode de réalisation de la **Fig. 7A,** une première source lumineuse commune **28** illumine un point **T** la surface de bague **16** au moyen de rayons lumineux incidents radiaux **RI1** qui se réfléchissent en des rayons réfléchis **RR1** pour le premier système d'observation dont le premier champ d'observation périphérique définit un premier angle d'élévation d'observation $\gamma 1$ inférieur à 45 degrés d'angle, mais supérieur ou égal à 25 degrés d'angle, les rayons réfléchis **RR1** étant, dans la première zone amont du champ de vision du capteur commun **18,** centripètes dans leur parcours entre la surface de bague **16** et l'axe de l'installation **A'1,** pour aller se réfléchir de manière centrifuge sur la première surface primaire de réflexion tronconique **261** après avoir intersecté l'axe **A'1**. Dans la **Fig. 7A** toujours, une deuxième source lumineuse **28'**, distincte, illumine le même point **T** de la surface de bague **16** au moyen de second rayons lumineux incidents radiaux **RI2** qui se réfléchissent en des rayons réfléchis **RR2** pour le deuxième système optique **24'** dont le deuxième champ d'observation périphérique définit un deuxième angle d'élévation d'observation γ**2** distinct du premier angle, ici supérieur à 45 degrés d'angle, par exemple supérieur à 65 degrés d'angle, voire supérieur à 75 degré d'angle, les rayons réfléchis **RR2** étant, dans la deuxième portion amont du champ de vision, centripètes vers l'axe de l'installation **A'1** dans leur parcours depuis la surface de bague **16** en direction du deuxième système optique **24'** qui est ici limité à l'objectif **20'**.

Dans la **Fig. 7B**, une source lumineuse unique commune **28**, annulaire autour de l'axe d'installation **A'1**, illumine la surface de bague 16 au moyen des rayons incidents **RI1**, **RI2** qui se réfléchissent, en un même point **T** de la surface de bague, respectivement

- en des rayons réfléchis **RR1** selon le premier champ d'observation périphérique, défini par le premier système optique **24**, et qui présente ici un premier angle d'élévation d'observation γ**1** supérieur à 45°, les rayons réfléchis étant dans la première portion amont du champ de vision, centrifuges dans leur parcours entre la surface de bague **16** et la première surface primaire de réflexion tronconique **261**.

- en des rayons réfléchis **RR2** selon le deuxième champ d'observation périphérique, défini par le deuxième système optique **24**, et qui présente ici un deuxième angle d'élévation d'observation γ**2**, distinct du premier angle, ici supérieur à 45°, par exemple supérieur à 65 degrés d'angle, voire supérieur à 75 degré d'angle, les rayons réfléchis **RR2** étant, dans la deuxième portion amont du champ de vision, centripètes vers l'axe de l'installation **A'1** dans leur parcours depuis la surface de bague en direction du deuxième système optique **24'** qui est ici limité à l'objectif **20'**.

On note que, dans les modes de réalisation des **Figs. 7A** et **7B**, les deux systèmes optiques **24, 24'** sont non-télécentriques. En variante, l'un et/ou l'autre des deux systèmes optiques **24, 24'** pourrait être télécentrique. De même, bien qu'illustrés avec un capteur commun, des variantes peuvent être prévus avec des capteurs dédiés distincts.

On comprend donc que toutes les combinaisons d'angle sont possibles pour le couple formé par le premier angle d'élévation et par le deuxième angle d'élévation d'observation, pourvu que ces deux angles diffèrent, de préférence par au moins 5 degrés d'angle.

Dans tous les cas, le premier et le deuxième système optiques sont configurés, par rapport au capteur associé **18**, **18'**, pour déterminer respectivement une première portion de champ de vision amont **CAM1** et une deuxième portion de champ de vision amont **CAM2** qui se recoupent, dans la zone d'installation E selon un volume utile d'inspection **VUI** de révolution autour de l'axe d'installation **A'1**. Ainsi, tout point d'un objet situé dans le volume utile d'inspection, qui est éclairé convenablement, et qui est imagé par un premier point image dans la première image formée par le premier système optique sur le premier capteur, est aussi imagé par un deuxième point image dans la deuxième image formée par le deuxième système optique sur le deuxième capteur. Ce volume utile **VUI**, qui forme une zone d'inspection commune, doit présenter une géométrie adaptée pour pouvoir recevoir la surface de bague **16** d'un récipient à inspecter. Dans les exemples illustrés, ce volume utile présente une formée générée par la révolution, autour de l'axe d'installation **A'1**, d'un losange, ce losange étant éventuellement tronqué, par exemple dans le mode de réalisation de la **Fig. 1A**, en fonction de la profondeur de champ déterminée par les systèmes optiques **24, 24'** pour les capteurs associés.

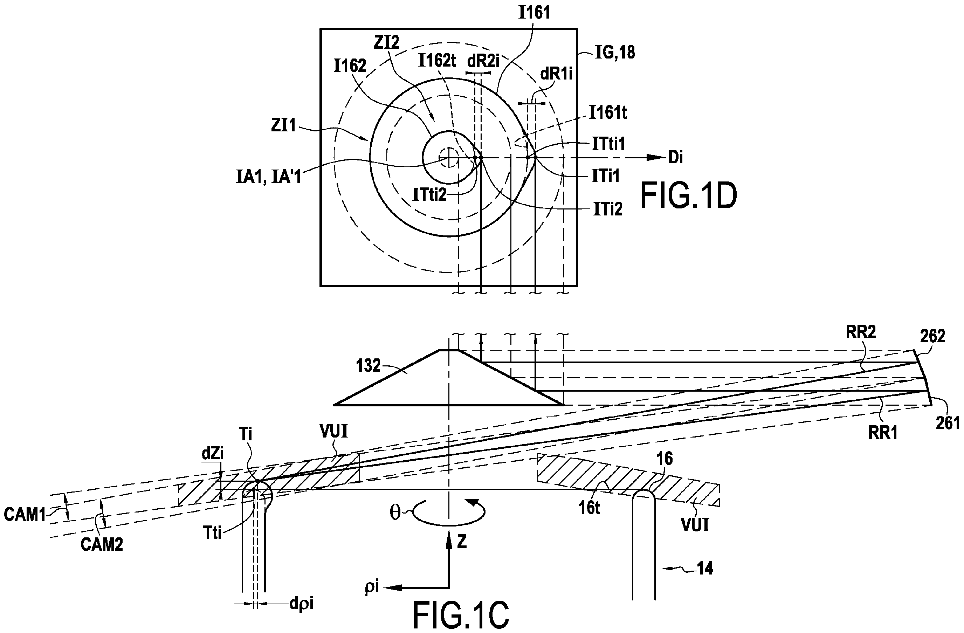

Pour le mode de réalisation de la **Fig. 1A**, cette propriété est mise en évidence sur le graphe schématique la **Fig. 1C**. Sur ce graphe, on a représenté en traits pointillés en section dans une moitié d'un plan radial **Pr**, les limites hautes et basses de la première portion de champ de vision amont **CAM1** et les limites hautes et basses de la deuxième portion de champ de vision amont **CAM2**. Ces deux portions se recoupent selon le volume utile d'inspection **VUI**.

Dans tous les modes de réalisation, ces deux portions de champ de vision amont **CAM1**, **CAM2** sont imagées chacune, par le système optique **24, 24'** associé, respectivement sur une première zone et sur une deuxième zone de formation d'image du capteur d'image, lesdites zones de formation d'image du capteur associé respectivement à une première et une deuxième zone d'image de l'image globale **IG** délivrée dans le capteur, cette image globale étant donc commune pour les deux systèmes optiques dans l'exemple illustré sur la Fig. 1D. Ce raisonnement est tenu pour les modes de réalisation comportant un seul capteur commun associé aux deux systèmes optiques **24, 24'**.

Dans les modes de réalisation comportant deux capteurs dédiés distincts, un pour chaque système optique, comme illustré à la **Fig. 3**, on pourra faire en sorte qu'une première image globale **IG** délivrée par le premier capteur, et une deuxième image globale **IG'** délivrée par le deuxième capteur **18'** comporte de cette manière respectivement une première image de la surface de bague **16**, dans une première zone image de la première image globale, et une deuxième image de la surface de bague **16**, dans une deuxième zone image de la deuxième image globale. Dans ce cas, on notera d'ailleurs qu'il est possible de fusionner les deux images globales, informatiquement, pour obtenir une image globale composite identique ou similaire à l'image globale commune obtenue avec un capteur commun, à condition de les représenter disjointes.

Dans les modes de réalisation comportant un seul capteur commun associé aux deux systèmes optiques **24, 24'**, on notera que la première zone d'image **ZI1** et la deuxième zone d'image **ZI2** sont disjointes dans l'image numérique globale commune. Les deux systèmes optiques forment simultanément, sur le même capteur bidimensionnel **18**, deux images séparées dans deux zones de formation d'image distinctes du capteur, de manière que celui-ci délivre une image globale comprenant deux zones d'images distinctes, chaque zone d'image distincte comportant une image de la surface de bague à partir des rayons recueillis selon le champ d'observation périphérique ayant l'angle d'élévation d'observation déterminé par la surface primaire de réflexion correspondante. Ainsi, cela permet la formation simultanée, à partir des rayons réfléchis recueillis selon les premier et deuxième champs d'observation périphériques, par l'intermédiaire des systèmes optiques **24, 24'**, d'une image bidimensionnelle **I161, I162** de la surface de bague du récipient à la fois dans la première zone d'image **ZI1** correspondant à l'observation selon le premier champ d'observation périphérique ayant le premier angle d'élévation d'observation $\gamma$**1** et dans la deuxième zone d'image **ZI2** correspondant à l'observation selon le deuxième champ d'observation périphérique ayant le deuxième angle d'élévation d'observation $\gamma$**2**. Dans ce cas, on disposera donc, pour chaque récipient, d'une image globale comportant deux zones d'image comportant chacune une image de la surface de bague, sous deux angles d'élévation d'observation différents. Cette image globale **IG** commune est de préférence acquise lors d'un unique temps d'acquisition du capteur d'image **18**. Dans le cas de deux capteurs, les deux images globales peuvent avantageusement être acquises simultanément. Cependant, on peut au contraire prévoir que la première image de surface de bague et la deuxième image de surface de bague soient acquises à des instants distincts.

Les images de la surface de bague **1161, 1162** sont formées par les rayons radiaux du faisceau lumineux incident correspondant qui sont réfléchis par réflexion spéculaire sur la surface de bague **16** et dirigés par le système optique correspondant **24, 24'**, sur le capteur associé **18, 18'**. Dans certains modes de réalisation, on considérera que l'image **I161, I162** de la surface de bague réelle est constituée uniquement par ces rayons radiaux du faisceau lumineux incident correspondant qui sont réfléchis par réflexion spéculaire sur la surface de bague **16** et dirigés par le système optique correspondant **24, 24'**, sur le capteur associé **18**.

Dans certains modes de réalisation, notamment ceux comportant deux capteurs dédiés distincts et deux sources lumineuses distinctes, avec un capteur et une source lumineuse dédiés pour chaque système optique, comme illustré à la **Fig. 3,** on pourra faire en sorte que chaque image globale comporte uniquement une image de la surface de bague. En effet, on peut prévoir une première source lumineuse **28** émettant dans une première gamme de longueurs d'onde et une deuxième source de lumière **28'** émettant dans une deuxième gamme de longueurs d'onde, distincte de la première gamme. Dans certains modes de réalisation, on choisira deux gammes de longueurs d'onde qui ne se recoupent pas. Il suffit alors, dans la formation de la première image et de la deuxième image de la surface de bague, d'opérer un filtrage chromatique pour que chaque image soit formée avec les rayons réfléchis issus de la source lumineuse correspondante. Ce filtrage chromatique peut être réalisé par exemple sous la forme d'un filtre optique chromatique dans le trajet optique au travers de l'un ou les deux systèmes optiques **24, 24'**. Dans le mode de réalisation de la **Fig. 3,** comportant deux capteurs distincts **18, 18'** et une lame de séparation **21,** on peut prévoir que la lame de séparation soit une lame dichroïque. Le filtrage chromatique peut être réalisé au niveau du ou des capteurs, en utilisant des capteurs opérant dans des gammes chromatiques différentes, on en n'utilisant, dans le traitement du signal recueilli par le capteur, qu'une partie du signal lumineux recueilli. Dans un système comportant un unique capteur, commun, par exemple trichromique (Tri CCD ou de type Bayer), on peut par exemple n'utiliser qu'un seul canal chromatique pour la première zone d'image et un autre canal chromatique pour la deuxième zone d'image. Cela peut faciliter l'identification de l'image de la surface de bague dans l'image correspondante. Cela permet notamment de compenser au moins partiellement d'éventuelles réflexions parasites, y compris celles dues à la présence éventuelle des deux sources lumineuses au sein du dispositif.

Avantageusement, chacun des deux systèmes optiques **24, 24'** permet la formation optique d'une image bidimensionnelle **1161, 1162** de la surface de bague complète et continue à 360 degrés d'angle autour de l'axe central théorique **A1** de la surface de bague **16** sur le capteur associé **18, 18'**. Cette image optique complète et continue est formée sur le capteur associé sans transformation numérique, uniquement par un procédé optique agissant sur la lumière. Dans les exemples illustrés, cette image optique complète et continue de la surface de bague est formée sur le capteur par le système optique **24, 24'**, sans transformation numérique.

On a représenté sur la Fig. 1D un exemple d'une image globale commune ou d'une image globale composite obtenue tel que décrit ci-dessus. Au travers de chaque système optique **24, 24'**, on a obtenu ainsi deux images optiques planes **1161, 1162** de la surface de bague réelle **16,** sur le capteur associé, par le biais de deux transformations géométriques optiques qui convertissent chacune la surface de bague **16** en une image de surface de bague **I161, I162.** De préférence, pour chacune des transformations géométriques optiques, le positionnement angulaire relatif de deux points de la surface de bague autour de l'axe central théorique **A1** n'est pas modifié, en ce sens que deux points de la surface de bague réelle, séparés par un écart angulaire autour de l'axe central théorique **A1,** voient, dans l'image obtenue par la transformation géométrique optique considérée, leurs images respectives séparées du même écart angulaire autour de l'image de l'axe central théorique. Pour chacune des deux transformations optiques, on considère que la même transformation convertit théoriquement la surface de bague théorique en une image théorique de la surface de bague **I161t, I162t,** au sens que l'image théorique de surface de bague est l'image, qui serait formée par la transformation, d'une surface de bague réelle qui serait confondue avec la surface de bague théorique.

Dans la **Fig. 1C,** on a illustré en trait continu la trajectoire de deux rayons d'observations, respectivement selon le premier angle d'élévation d'observation et selon le deuxième angle d'élévation d'observation, issus du point **Ti** de la surface de bague réelle, en direction du capteur photoélectrique **18,** en passant respectivement par la première et la seconde surface primaire de réflexion.

Dans la Fig. 1D, on a illustré l'image globale **IG** telle que reçue par le capteur **18** au travers des deux systèmes optiques **24, 24'.** Les deux images réelles de la même surface de bague, formées respectivement selon les deux angles d'élévation d'observation, donc par l'intermédiaire respectivement des deux surfaces primaires de réflexion **261, 262,** sont ici illustrées sous la forme chacune d'une ligne image **I161, I162** qui est l'image, formée par le système optique correspondant sur le capteur commun **18,** de la réflexion du faisceau incident correspondant sur la surface de bague **16.** L'épaisseur de ces deux lignes images selon la direction radiale dans l'image globale **IG** est déterminée notamment par la géométrie, par exemple plane, arrondie, en V inversé ou polygonale, du profil de la surface de bague en section dans un plan radial, par l'étendue de la source lumineuse dans un même plan radial, et par l'angle d'éventail lumineux délivré par cette source. Dans la plupart des cas, une image de la surface de bague **I161, I162** pourra être assimilée à une ligne, sinon il sera possible de définir une ligne représentative de l'image de la surface de bague, par exemple un choisissant une ligne de bord intérieur ou extérieur ou une ligne médiane de l'image de la surface de bague en tant que ligne représentative. On pourra aussi déterminer une telle ligne par segmentation, par « squelettisation », en recherchant un point particulier pour chaque rayon parcouru en partant du centre etc....

Comme illustré aux Figs. 1C et 1D, on considère ici que le point correspondant **Tti** de la surface de bague théorique **16t** est le point de cette surface théorique qui aurait la même coordonnée angulaire que le point considéré **Ti** de la surface de bague réelle **16** dans un système de coordonnées cylindriques $(Z, \rho, \Theta)$ centré sur l'axe central théorique **A1.** La différence de position entre un point considéré **Ti** de la surface de bague réelle et un point correspondant **Tti** de la surface de bague théorique est la combinaison d'une différence de hauteur réelle **dZ,** selon la direction de l'axe central théorique, et d'une différence radiale réelle **dp,** selon la direction radiale perpendiculaire à l'axe central théorique **A1.**

Les points images **ITi1, ITi2** de l'image de surface de bague du récipient sont les images du point considéré **Ti** de la surface de bague réelle au travers respectivement du premier et du deuxième système optique, du fait de la transformation géométrique optique correspondante.

Sur cette Fig. 1D, on a rapporté deux lignes **I161t, I162t** illustrant respectivement l'image théorique de surface de bague selon les deux angles d'élévation d'observation. Les points images théoriques correspondants **ITti1, ITti2** des images théoriques **I161t, I162t** de la surface de bague **16t** sont les images du point correspondant **Tti** de la surface de bague théorique au travers respectivement du premier et du deuxième système optique, du fait de la transformation géométrique optique correspondante.

Une ligne théorique **I161t, I162t** représentative de l'image théorique de surface de bague peut être une ligne prédéfinie, par exemple un cercle centré sur l'image de l'axe d'installation **IA'1.**

Alternativement, une ligne théorique **I161t, I162t** représentative de l'image théorique de surface de bague peut être déduite de l'image de la surface de bague **I161, I162,** par exemple par calcul au sein d'un dispositif de traitement d'images, en estimant la ligne théorique **I161t, I162t** correspondante. Différentes méthodes sont possibles pour déduire cette ligne théorique, par exemple de type « best fit curve », transformée de Hough, corrélation, recherche du plus grand cercle inscrit etc...Dans ces méthodes il est possible de prendre en compte des valeurs de diamètre a priori de la bague. En effet, la ligne théorique **I161t, I162t** dans un système optique parfait et pour un récipient centré dans la zone d'installation **E** (A1 = A'1) est un cercle. Le diamètre du cercle d'une image de bague théorique (ligne théorique **I161t, I162t**) peut être connu a priori du système de traitement d'images, grâce à des moyens de réglage ou d'initialisation, par exemple par apprentissage, ou par saisie ou téléchargement d'une valeur. Il reste donc pour connaître la ligne théorique **I161t, I162t** de déterminer son centre à partir de l'image de la surface de bague **I161, I162.** Il est possible de généraliser ces méthodes avec des formes plus élaborées de courbes théoriques comme des ellipses, ou autres courbes paramétriques pour des récipients non centrés, donc si A1 est décalé par rapport à A'1.

Les deux zones d'image numérique **ZI1, ZI2,** contenant chacune respectivement l'une des deux images de la même surface de bague sont, dans l'exemple illustré, des zones annulaires concentriques qui correspondent respectivement aux deux surfaces primaires de réflexion **261, 262.**

Comme illustré aux Figs. 1C et 1D, au moins une des deux transformations géométriques optiques, et, au moins pour les modes de réalisation des **Figs. 1A, 3, 4** et **5,** en réalité les deux transformations géométriques optiques, convertit, sauf cas particuliers, une différence de position entre un point considéré **Ti** de la surface de bague réelle et un point correspondant **Tti** de la surface de bague théorique, en un décalage radial image **dR1i, dR2i.** Un décalage radial image **dR1i, dR2i,** dans l'image globale **IG, IG',** est la distance entre, d'une part, le point image **ITi1, ITi2** dans l'image de surface de bague réelle **1161, I162** correspondante, et, d'autre part, le point image théorique correspondant **ITti1, ITti2** dans l'image théorique de surface de bague **I161t, I162t** correspondante.

Dans l'exemple illustré, les deux images de surface de bague réelle **I161, I162,** illustrées en trait continu, sont sensiblement confondues sur toute la périphérie avec l'image théorique de bague correspondante **I161t, I162t,** lesquelles sont illustrées en trait discontinu. On voit que, dans la première zone image **ZI1,** dans le secteur angulaire correspondant au point **Ti** de la surface de bague présentant un défaut localisé, la première image de surface de bague réelle **I161** se démarque de la première image théorique de bague correspondante **I161t,** et présente, dans l'image, un décalage radial image **dR1i** par rapport à cette dernière. On voit que la différence de position entre les deux points **Ti** et **Tti** est convertie selon la première transformation géométrique optique, due au système optique **124,** en un décalage radial image **dR1i** sur l'image vue par le capteur.

Dans l'exemple illustré, pour lequel le deuxième angle d'élévation d'observation γ**2** est aussi un angle rasant, on voit que, dans le secteur angulaire correspondant au même point **Ti** de la surface de bague présentant un défaut localisé, la deuxième image de surface de bague réelle **I162** se démarque elle aussi de la deuxième image théorique de bague correspondante **I162t,** et présente, dans l'image, un décalage radial image **dR2i** par rapport à cette dernière. On voit que, dans cette hypothèse, la différence de position est convertie selon la deuxième transformation géométrique optique, due au système optique **124,** en un deuxième décalage radial image **dR2i** sur l'image vue par le capteur.

On remarque que, pour les configurations dans lesquelles les rayons réfléchis subissent le même nombre de réflexions, ou un nombre de même parité, dans leur trajet entre la surface de bague réelle et le capteur **18,** les deux décalages radiaux images **dR1i** et **dR2i** peuvent être mesurés, dans l'image globale IG délivrée par capteur, sur un même rayon issu d'un point central de l'image qui correspond à l'image **IA'1** de l'axe d'installation **A'1.**

De préférence, pour au moins la première des deux transformations géométriques optiques, par exemple celle mise en oeuvre au travers de la première surface de réflexion **261,** on observe, dans la première zone d'image plane **ZI1** recueillie par le premier capteur **18,** que le décalage radial image **dR1i** résultant d'une différence de hauteur réelle **dZi** unitaire est supérieur au décalage radial image résultant d'un décalage radial réel **dpi** de même dimension entre un point considéré de la surface de bague réelle et un point correspondant de la surface de bague théorique. En d'autres termes, de préférence, pour au moins la première des deux transformations géométriques optiques, l'influence d'une différence de hauteur réelle **dZi** est supérieure à l'influence d'une différence radiale réelle **dpi** dans le décalage radial image obtenu dans la première transformation géométrique optique obtenue par le premier système optique **24.** Ainsi, un décalage de hauteur de 1 mm de la surface de bague réelle par rapport à la surface de bague théorique se traduirait par un décalage radial image d'origine axiale, tandis qu'un décalage radial de 1 mm de la surface de bague réelle par rapport à la surface de bague théorique se traduirait par un autre décalage radial image, d'origine radiale, de valeur inférieure.

Dans certains modes de réalisation d'un dispositif de l'invention, une telle prépondérance des décalages radiaux image d'origine axiale est assurée par le fait que le premier angle d'élévation d'observation est inférieur ou égal à 45° degrés d'angle, encore plus s'il est inférieur à 25 degrés d'angle. Cependant, dans le mode de réalisation de la **Fig. 7B,** une telle prépondérance n'est prévue pour aucune des deux transformations géométriques définies par les deux systèmes optiques **24, 24'.** Dans les exemples de réalisation illustrés comportant une première surface primaire de réflexion **261** tronconique, concave dans un plan perpendiculaire à l'axe d'installation, cette propriété, selon laquelle l'influence d'une différence de hauteur réelle est supérieure à l'influence d'une différence radiale réelle dans le décalage radial image obtenu dans la transformation géométrique optique, est assurée notamment par l'angle de la surface primaire de réflexion **261** par rapport à l'axe d'installation **A1.** Plus précisément, le demi-angle au sommet **a1,** caractéristique de la surface primaire de réflexion **261,** détermine le rapport d'influence, sur le décalage radial image, entre une différence de hauteur et une différence radiale de la surface réelle par rapport à la surface de bague théorique.

Dans les modes de réalisation illustrés, avec une première surface primaire de réflexion **261** concave et une surface de réflexion de renvoi **132,** le plus ce demi-angle au sommet **a1** de la surface primaire de réflexion **261** diminue en se rapprochant de 0 degrés d'angle, le plus l'influence de la différence de hauteur sur le décalage radial image sera importante. Bien entendu, on veillera de préférence à ce que le sommet du cône qui porte la surface primaire de réflexion soit disposé vers le haut par rapport à ladite surface, de telle sorte que l'élément optique **122** qui porte la surface primaire de réflexion **261, 262** puisse être agencé au-dessus de la surface de bague **16,** le capteur **18** voyant ainsi la surface de bague **16** par le dessus au travers du système optique **24.** Dans le cas illustré où la surface de réflexion de renvoi **132** présente un angle de 45 degrés d'angle, ce demi-angle au sommet **a1** est inférieur à 12,5 degrés d'angle pour que l'influence de la différence de hauteur réelle soit très nettement supérieure à l'influence d'un décalage radial réel dans le décalage radial image.

De préférence, pour au moins le premier des deux champs d'observation périphérique, le décalage radial image correspondant à une différence de hauteur réelle unitaire est au moins 2,14 fois supérieur, et plus préférentiellement au moins 3 fois supérieur au décalage radial image correspondant à un décalage radial réel de même dimension entre ledit point de la surface de bague réelle et un point correspondant de la surface de bague théorique. De la sorte, on assure que, dans l'image obtenue, un décalage radial image est très majoritairement dû à un décalage en hauteur de la surface de bague réelle par rapport à la surface de bague théorique plutôt qu'à un décalage radial entre ces deux surfaces.

Dans les exemples illustrés aux **Figs. 1A** à **5,** l'angle d'élévation d'observation γ**1** défini par la première surface primaire de réflexion **261** est de 15 degrés d'angle, et le demi-angle au sommet **a1** de la première surface primaire de réflexion **261** est de 7,5 degrés d'angle. De manière plus générale, dans la configuration du dispositif de la **Fig. 1A,** la première surface primaire de réflexion concave **261** peut être une surface de révolution tronconique, continue à 360 degrés d'angle autour de l'axe d'installation **A'1,** et présentant un demi-angle au sommet **a1** égal à la moitié de l'angle d'élévation d'observation.

Dans la configuration du dispositif de la **Fig. 1A,** le deuxième angle d'élévation d'observation γ**2** aussi est inférieur à 45 degrés d'angle, et même de préférence inférieur à 25 degrés d'angle, donc rasant, comme vu plus haut. Il en ressort que l'on trouve aussi, dans la deuxième image **1162** de surface de bague, un décalage radial image **dR2** correspondant à une différence de hauteur réelle unitaire supérieure au décalage radial image correspondant à un décalage radial réel de même dimension entre ledit point de la surface de bague réelle **16** et un point correspondant de la surface de bague théorique **16t.**

Au contraire, dans les modes de réalisation des **Figs. 4, 5, 7A** et **7B,** le deuxième angle d'élévation d'observation γ**2** n'est pas rasant, comme vu plus haut. Il peut être par exemple supérieur à 65 degrés d'angle, voire supérieur à 75 degrés d'angle. Dans ce cas, un décalage radial image est très majoritairement dû à un décalage radial réel **dp** de la surface de bague réelle par rapport à la surface de bague théorique plutôt qu'à un décalage en hauteur entre ces deux surfaces. Ce décalage radial image pour la deuxième image est donc d'origine radiale principalement.

Pour le mode de réalisation de la **Fig. 3,** le deuxième angle d'élévation d'observation γ**2** est de 90 degrés d'angle. Dans ce cas, un décalage radial image **dR2** est dû uniquement à un décalage radial réel **dp** de la surface de bague réelle par rapport à la surface de bague théorique. Un décalage en hauteur **dZi** entre ces deux surfaces n'est pas visible sur la deuxième image de surface de bague. Autrement dit, dans ce dispositif de la **Fig. 3,** un décalage radial image **dR2i** mesuré dans la deuxième image **1162** de surface de bague donne directement une valeur représentative de décalage radial de la surface de bague réelle par rapport à la surface de bague théorique selon une direction perpendiculaire à l'axe d'installation.

Dans la suite de la description sont expliquées des méthodes possibles de traitement d'image et de détermination des mesures pour l'inspection des récipients. Afin que les mesures réalisées en unités de pixels ou sub-pixels dans les images soient traduites en mesures physiques relatives à des récipients, notamment en unités de longueur, les calculs prennent en compte les caractéristiques optiques et géométriques des premier et deuxième systèmes optiques **24, 24',** y compris des systèmes objectifs **20, 20',** et des capteurs **18** et **18'** telles que : les dimensions des pixels, les distances focales des objectifs, les distances et positions des éléments optiques et de la surface de bague, et les angles des miroirs tronconiques, etc.... Ces caractéristiques optiques et géométriques sont donc considérées connues du système de traitement d'image. Elles sont mises à disposition du système de traitement d'image soit par tout support de mémoire, par exemple par saisie ou par étalonnage du dispositif.

Ces caractéristiques optiques et géométriques servent également à calculer des rayons géométriques correspondant à des rayons otiques afin d'effectuer tout calcul utile dans l'espace tridimensionnel de mesure.

Ainsi, de manière plus générale, dans les images qui sont obtenues par le procédé et/ou le dispositif décrit ci-dessus, on peut procéder, par traitement d'image, à la détermination de points d'intérêts de chaque image de bague. Ces déterminations seront faites pour un nombre N de directions Di analysées, issues d'un point de référence **O** de l'image numérique globale et décalées angulairement les unes des autres autour du point de référence **O,** qui sera de préférence l'image **IA'1** de l'axe d'installation.

On note que l'on peut alors travailler dans une image numérique globale commune délivrée dans le cas d'un capteur commun, ou, dans le cas de deux capteurs dédiés, dans une image numérique globale composite obtenue par composition des deux images numériques globales délivrées séparément par deux capteurs dédiés délivrée, ou séparément dans les deux images numériques globales délivrées séparément par deux capteurs dédiés. Dans tous les cas, on veillera à tenir compte de toute inversion optique entre les deux images numériques bidimensionnelles, de toute différence de grandissement entre les deux images, de toute différence d'orientation, quitte à recaler les deux images si nécessaire pour qu'elles soient géométriquement comparables.

Ainsi, on pourra déterminer, selon la direction **Di** analysée, un premier point image **ITi1** de la première image numérique bidimensionnelle **I161** de la surface de bague **16,** sur la direction analysée. Ce point image **ITi1** est l'image du point **Ti** de la surface de bague au travers du premier système optique. On peut alors déterminer une première valeur représentative de la distance de ce premier point image au point de référence dans la première image numérique globale **IG.** Dans l'exemple mentionné ci-dessus, cette valeur représentative peut être la valeur du premier décalage radial image **dR1i,** soit la distance entre le premier point image **ITi1** et un premier point image théorique **ITti1,** appartenant à la première image théorique **I161t** de surface de bague et situé sur la même direction. Ce premier décalage radial image **dR1i** est donc, dans cet exemple, la distance, selon la direction analysée, issue du point de référence, entre la ligne **I161** représentative de la première image de la surface de bague **16** et la ligne théorique **I161t** représentative de l'image théorique de surface de bague dans la première image. Cependant, on pourrait aussi prendre comme valeur représentative la valeur de la distance de la distance de ce premier point image au point de référence dans la première image numérique globale **IG** comme cela sera décrit plus loin.

On peut aussi déterminer un deuxième point image **ITi2** de la deuxième image **I162** de la surface de bague **16,** sur la même direction analysée **Di** issue du point de référence **IA1, IA'1.** Ce point image **ITi2** est l'image du même point **Ti** de la surface de bague au travers du deuxième système optique **24'.** On peut alors déterminer une valeur représentative de la distance de ce deuxième point image **ITi2** au point de référence **IA1, IA'1** dans la deuxième image numérique globale **IG'**. Dans l'exemple mentionné ci-dessus, cette valeur représentative peut être la valeur du deuxième décalage radial image **dR2i,** toujours pour la même direction Di analysée, soit la distance entre le deuxième point image **ITi2** et un deuxième point image théorique **ITti2,** appartenant à la deuxième image théorique **I162t** de surface de bague et situé sur la même direction. Ce deuxième décalage radial image **dR2i** est donc, dans cet exemple, la distance, selon la direction analysée, issue du point de référence **IA1, IA'1,** entre la ligne **I162** représentative de la deuxième image de la surface de bague **16** et la ligne théorique **I162t** représentative de l'image théorique de surface de bague dans la deuxième image. Cependant, comme on le verra en référence à la Fig. 1E, on peut aussi prendre, comme valeur représentative la valeur de la distance, la distance de ce deuxième point image au point de référence dans la deuxième image numérique globale **IG.**

Bien entendu, pour les deux images, on prendra des valeurs représentatives de la même grandeur.

Sur cette base, on peut alors déduire, pour chaque direction **Di** analysée, par une relation géométrique de triangulation dans le plan radial **Pri,** au moins une valeur représentative d'une position axiale, selon la direction de l'axe de l'installation **A'1,** du point **Ti** de la surface de bague réelle **16** dont les images par le premier et le deuxième système optique **24, 24'** sont respectivement le premier point image **ITi1** et le deuxième point image **ITi2.**

En faisant référence à la **Fig. 1D,** cette relation géométrique de triangulation utilise par exemple :

- la première valeur, par exemple le premier décalage radial image **dR1i** ;
- la deuxième valeur, par exemple le deuxième décalage radial image **dR2i** ;
- le premier angle d'élévation d'observation $\gamma$**1,** et
- le deuxième angle d'élévation d'observation $\gamma$**2.**

En effet, par projection orthogonale dans un plan radial **Pri** contenant l'axe d'installation **A'1** et passant par le point **Ti** considéré, donc contenant la direction **Di** analysée, on peut déterminer des relations reliant :

- un décalage radial réel **dpi** entre les points **Ti** et **Tti** considérés dans le plan radial **Pri** les contenant ;
- une différence de hauteur **dZi** selon la direction de l'axe d'installation entre les points **Ti** et **Tti** considérés
- les décalages radiaux images **dR1i** et **dR2i** mesurés dans l'image globale.

Dans l'exemple de réalisation illustré, cette relation peut être décrite par les équations :

$$dR1i = dZi * G1 * \cos(\gamma 1) + d\rho i * G1 * \sin(\gamma 1)$$

$$dR2i = dZi * G2 * \cos(\gamma 2) + d\rho i * G2 * \sin(\gamma 2)$$

où G1 et G2 sont des fonctions du grandissement respectivement du premier système objectif **20** et du deuxième système objectif **20'.**

En variante, en référence à la **Fig. 1E,** on pourra déterminer, selon la direction **Di** analysée, un premier point image **ITi1** de la première image numérique bidimensionnelle **1161** de la surface de bague **16,** sur la direction analysée. Ce point image **ITi1** est l'image du point **Ti** de la surface de bague au travers du premier système optique. On peut alors déterminer la distance **R1i** de ce premier point image au point de référence **O,** par exemple l'image **IA'1** de l'axe d'installation, dans la première image numérique globale **IG.** Cette valeur peut être nommée coordonnée radiale image **R1i.**

On peut aussi déterminer un deuxième point image **ITi2** de la deuxième image **I162** de la surface de bague **16,** sur la même direction analysée **Di** issue du point de référence **O.** Ce point image **ITi2** est l'image du même point **Ti** de la surface de bague au travers du deuxième système optique **24'.** On peut alors déterminer la distance **R2i** de ce deuxième point image **ITi2** au point de référence **O** dans la deuxième image numérique globale **IG'.** Cette valeur peut être nommée coordonnée radiale image **R2i.**

Sur cette base, on peut alors déduire, pour chaque direction **Di** analysée, par une relation géométrique de triangulation dans le plan **Pri,** au moins une valeur représentative **Zi** d'une position axiale, selon la direction de l'axe de l'installation **A'1,** et une valeur représentative $\rho i$ d'une position radiale du point **Ti** de la surface de bague réelle **16** dont les images par le premier et le deuxième système optique **24, 24'** sont respectivement le premier point image **ITi1** et le deuxième point image **ITi2.**

Cette relation géométrique de triangulation utilise par exemple :

- la première valeur, la coordonnée radiale image **R1i** du premier point image **ITi1** ;

- la deuxième valeur, la coordonnée radiale image **R2i** du premier point image **ITi2** ;
- le premier angle d'élévation d'observation γ**1**, et
- le deuxième angle d'élévation d'observation γ**2.**

En effet, par projection orthogonale dans un plan radial **Pri** contenant l'axe d'installation **A'1** et passant par le point **Ti** considéré, donc contenant la direction **Di** analysée, on peut déterminer des relations reliant :

- la position radiale ρi du point **Ti** par rapport à l'axe d'installation **A'1** dans le plan radial **Pri** les contenant ;
- la position axiale **Zi** selon la direction de l'axe d'installation **A'1** pour le point **Ti.**

- 

$$R1i = Zi * K11 * \cos(γ1) + ρi * K12 * \sin(γ1) + K13$$

- 

$$R2i = Zi * K21 * \cos(γ2) + ρi * K22 * \sin(γ2) + K23$$

- dans laquelle Kij sont des constantes dépendant des caractéristiques géométriques et optiques du dispositif, telles que décrites plus haut.

On connaît donc, pour toutes directions **Di,** donc pour les tous plans **PRi** donc pour tous les angles θi, les coordonnées cylindriques complètes d'un point **Ti** de la surface de bague.
Une méthode équivalente est de calculer, dans un plan radial donné **Pri,** pour les points images **IT1i** et **IT2i,** le rayon principal d'observation associé, et considérer la position du point **Ti** comme étant l'intersection des deux rayons principaux d'observation ainsi calculés. En effet, par la connaissance des caractéristiques optiques et géométriques du dispositif, il est possible d'associer à chaque point image d'une image, un rayon principal d'observation pour ce point de l'image. Ainsi, les deux points images **IT1i** et **IT2i** correspondant à un même point réel permettent des déterminer l'équation de deux rayons principaux d'observation, ayant donc chacun un angle d'élévation d'observation différent. Une telle méthode reste basée sur une relation géométrique de triangulation utilisant une première valeur représentative de la distance du premier point image au point de référence, une valeur représentative de la distance du deuxième point image au point de référence, le premier angle d'élévation d'observation γ1, et le deuxième angle d'élévation d'observation γ**2.**
Selon une variante, on peut analyser une des deux images **I161** (respectivement **I162**) de la surface de bague en considérant ensemble les N points images **IT1i** (respectivement **IT2i**) pour obtenir une estimation de l'une des deux valeurs, soit du décalage radial réel **d**ρ**i**, soit de la différence de hauteur **dZi**. Par exemple, à partir des N points **IT2i** de la deuxième image **I162,** on détermine une estimation, pour chaque direction, du décalage radial réel **d**ρ**i**. Cette estimation du décalage radial réel **dpi** est ensuite prise en compte pour corriger des estimations de différence de hauteur **dZi** à partir uniquement des points **IT1i.**
Selon une variante, la deuxième image **I162** est obtenue avec un dispositif comme ceux des **Figs. 3** ou **4,** avec un angle d'élévation observation plongeant, notamment supérieur à 75 degrés d'angle, dans laquelle l'influence de la différence de hauteur réelle **dZi,** sur la position radiale du second point image ou sur le décalage radial image **dR2i,** est négligeable voire nulle si γ**2**=90 degrés d'angle. Dans ce cas, on peut analyser d'abord la deuxième image **I162** de la surface de bague en considérant ensemble les N points **IT2i.** A partir des N points **IT2i** de la deuxième image **I162** on détermine des valeurs représentatives du décentrement et/ou de la circularité, par exemple les valeurs de décalage radial réel **dpi.** Dans un deuxième temps, ces valeurs déterminant la forme et position du cylindre de la bague, il est possible de déterminer avec une grande précision la position **dZi** de chaque point objet réel **Ti** à partir de la position du point image **IT1i.**
En effet, de manière générale, on considère qu'un décalage radial réel **dpi** d'un point Ti de la surface de bague peut être dû :

a) au décentrement de l'axe central théorique **A1** de la bague par rapport à l'axe **A'1** de l'installation lors de la prise de vue.
b) à un défaut de circularité.

On néglige dans l'explication qui suit l'influence d'une éventuelle inclinaison, qui peut cependant être prise en compte par ailleurs.
Dans tous les cas, pour la première image obtenue après réflexion sur une surface primaire de réflexion, en l'absence de tout défaut de circularité mais en présence d'un décentrement, la première image de surface de bague réelle **I161** est une courbe paramétrique, résultant de l'observation d'un cercle à travers sa réflexion sur les miroirs tronconiques. En l'absence de décentrement, cette première image est un cercle.

Au contraire, en l'absence de tout défaut de circularité, l'image de surface de bague réelle **1162** est un cercle centré ou non pour le mode de réalisation de la **Fig. 3** et une ellipse pour le mode de réalisation de la **Fig. 4.** Il est aisé de déterminer un cercle ou une ellipse dans la zone image **ZI2** au moyen d'algorithmes connus et donc de connaître le décentrement. On peut en définir une mesure dans le repère image en pixels ou dans le repère réel en millimètres la distance entre les axes **A1** et **A'1**.

Pour les modes de réalisation des **Figs. 3** et **4,** les défauts de circularités sont alors les écarts entre les courbes théoriques et les courbes réelles. Un défaut de circularité se détermine alors par exemple en recherchant la deuxième ligne théorique **I162t** de type cercle ou ellipse s'approchant le plus de la courbe réelle **1162**. On applique donc un algorithme similaire au précédent. Pour les modes de réalisation des **Figs. 3** et **4** les défauts de circularités sont alors les écarts entre les courbes théoriques et les courbes réelles. On peut en définir, dans le repère image en pixels ou dans le repère réel en millimètres, des mesures, et comparer ces mesures à des seuils de tolérance. Un exemple de mesure est donné par la surface de l'aire comprise entre les deux courbes comparées, ou une valeur de distance entre ces courbes. D'autres critères sont envisageables. Ce sont en tous cas des valeurs représentatives de la distance des points images à point de référence dans l'image numérique correspondante.

De manière générale, la méthode d'analyse des images **IG, IG'** par le système de traitement d'image, pour la détermination d'une géométrie tridimensionnelle d'une surface de bague réelle d'un récipient, prend en compte les caractéristiques optiques et géométriques du dispositif. Dans l'image **IG, IG',** on sélectionne un point de référence comme origine **O** d'un repère image de coordonnées polaires. De préférence cette origine est le point **IA'1** qui est l'image par le premier système de l'axe d'installation **A'1**. Chaque pixel P de l'image **IG, IG',** possède donc comme coordonnées polaires P(R, θ), son rayon R défini comme sa distance au point de référence et l'angle θ du rayon PO.

On note que, pour certaines méthodes, plus les angles d'élévation d'observation $\gamma 1$ et $\gamma 2$ sont différents, plus le calcul, notamment de triangulation, sera précis. Si la deuxième observation est « verticale » ou presque verticale ($\gamma 2$ égal ou proche de 90 degrés d'angle) elle ne « voit » pas ou presque pas une éventuelle différence de hauteur **dZi** et donc permet un calcul fiable du décalage radial réel. L'observation complémentaire, obtenue selon le premier angle d'élévation d'observation, pourra évaluer la différence de hauteur **dZi** avec précision car l'on pourra compenser par le calcul tout décalage radial, notamment si le premier angle d'élévation d'observation $\gamma 1$ est inférieur ou égal à 45° degrés d'angle, et encore plus s'il est inférieur à 25° degrés d'angle.

Ainsi, en répétant ces calculs pour un nombre déterminé N de directions différentes **Di,** réparties de préférence sur les 360 degrés d'angle autour du point de référence, on peut déterminer la géométrie de la surface de bague réelle et en déduire la présence de différents défauts de la surface de bague, notamment :

- des défauts de planéité, par exemple de type « manque de verre », ou de type « bague voilée » ;
- des défauts de circularité ;
- etc....

De préférence, pour toutes les méthodes ci-dessus, on prendra un nombre N suffisant de directions Di pour, sur les 360 degrés d'angle de la surface de bague, avoir une information géométrique suffisamment fine pour les défauts à observer. De préférence, le nombre de directions Di est choisi pour que, sur les 360 degrés d'angle, les deux directions Di ne soient pas séparées de plus de 20 degrés d'angle, de préférence pas séparées de plus de 10 degrés d'angle, plus préférentiellement pas séparées de plus de 5 degrés d'angle. Cela se traduira respectivement par au moins 18 directions distinctes, de préférence au moins 36 directions distinctes, plus préférentiellement au moins 72 directions distinctes.

On notera que le dispositif et la méthode proposés présentent l'avantage de pourvoir déterminer des défauts de planéité indépendamment d'un éventuel défaut de circularité de la surface de bague, par exemple une ovalisation, et, encore plus important, indépendamment d'un éventuel défaut de centrage de la surface de bague, défaut qui peut être un défaut inhérent à la géométrie du récipient (décentrage de la surface de bague par rapport à l'axe central théorique du récipient **A1)** ou qui peut être un défaut de positionnement du récipient dans l'installation au moment de l'inspection (centrage de la surface de bague par rapport à l'axe d'installation **A'1).** Ce dernier point est important car il permet d'augmenter les tolérances de positionnement du récipient lors de l'inspection. Cela est très appréciable pour une inspection en ligne, notamment à haute cadence.

Ils permettent également de prendre en compte et mesurer les défauts d'inclinaison de la bague.

Dans une méthode dans laquelle on aura déterminé une autre valeur représentative, par exemple la valeur de la distance de ce deuxième point image au point de référence dans la première image numérique globale **IG,** on aura directement les coordonnées des points correspondants de la surface de bague dans un repère cylindrique.

Dans tous le cas, on peut ainsi déterminer des informations représentatives de la géométrie tridimensionnelle de la surface de bague réelle **16** du récipient **14** inspecté.

Cette détermination peut être effectuée, dans un dispositif selon l'invention, par un système de traitement d'images associé au capteur **18,** incluant notamment par exemple un ordinateur.

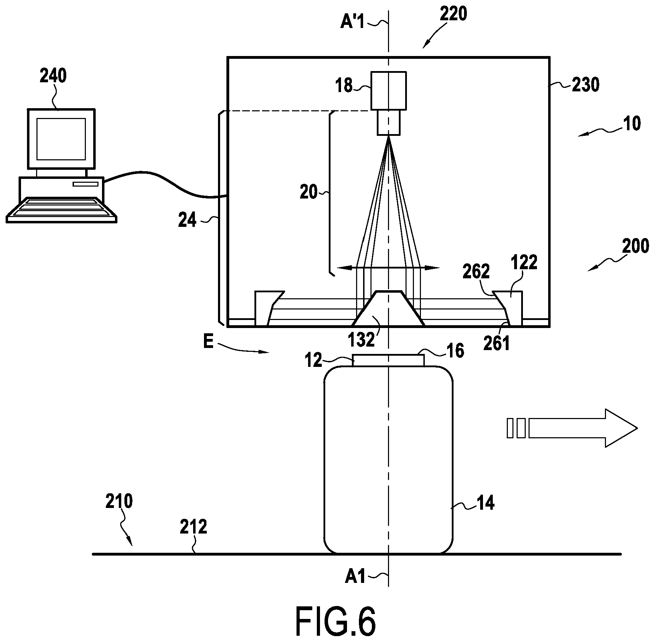

On a illustré sur la **Figure 6** une ligne d'inspection **200** de récipients **14** mettant en oeuvre un dispositif **10** selon l'invention. Dans l'exemple illustré, des récipients **14** sont déplacés par un convoyeur **210** qui transporte les récipients **14** selon une direction de déplacement, par exemple de translation horizontale perpendiculaire à l'axe central théorique **A1** des récipients **14.** Dans l'exemple illustré, le convoyeur **210** comporte un tapis convoyeur **212** sur lequel les récipients **14** sont posés par leur surface de fond, aussi appelé plan de pose, avec leur axe central théorique **A1** agencé verticalement. Le convoyeur **210** pourrait aussi comporter des moyens de guidage (non représentés) coopérant avec les faces latérales des récipients **14.** Le convoyeur **210** pourrait aussi comporter des courroies de transport opposées, exerçant un serrage des faces latérales de récipient pour leur transport sur une portion linéaire. Le convoyeur pourrait comporter une roue de convoyage déplaçant les récipients **14** selon une trajectoire de déplacement circulaire, notamment dans un plan horizontal. Les récipients **14** présentent ainsi leur surface de bague **16** dans un plan horizontal tourné vers le haut. Le convoyeur **210** amène les récipients selon la trajectoire horizontale en dessous du dispositif **10** selon invention, sans risque d'interférence avec le dispositif **10.** Le dispositif **10** peut être porté par support, par exemple en forme de boîtier **230,** incorporant le dispositif **10,** notamment le ou les capteurs **18, 18',** les systèmes objectif **20, 20',** la ou les source lumineuse **28, 28',** la ou les surfaces primaires de réflexion **261** , **262.** Le boîtier **230** est agencé au-dessus du convoyeur. À l'intérieur du boîtier **230,** le dispositif **10** selon l'invention est agencé avec son axe d'installation **A'1** en position verticale, de telle sorte que les champs d'observation et le faisceau lumineux incident sont orientés vers le bas, vers la zone d'installation **E** qui se situe entre la face inférieure du boîtier **230** et le tapis convoyeur **212.** On comprend donc que, au niveau de cette station d'inspection, le convoyeur **210** amène les récipients de manière à ce que leur axe central théorique **A1** coïncide au mieux avec l'axe d'installation **A'1.** Au moment de cette coïncidence, au moins une première image et une deuxième image sont acquises grâce au dispositif **10,** éventuellement sous la forme d'une image numérique globale commune, sans que cela nécessite ni une manutention du récipient ni un arrêt du convoyeur. Les images acquises par le dispositif **10** peuvent ensuite être envoyées à un dispositif de traitement **240,** par exemple un système de traitement d'images et/ou un dispositif de visualisation et/ou un dispositif de stockage d'images, par exemple un système informatique comprenant un ordinateur. Il est alors possible d'analyser les images ainsi acquises et de déterminer la géométrie tridimensionnelle de la surface de bague **16** du récipient **14.**

La caméra peut être déclenchée pour intégrer les images de manière synchronisée avec le déplacement des articles, notamment pour figer l'image au moment de l'alignement de l'axe central théorique de bague **A1** avec l'axe d'installation **A'1.** Le temps d'intégration est prévu court, par exemple inférieur à 1ms, voire inférieur à 400$\mu$s, afin de réduire le risque de flou de bougé dans les images.

La source de lumière peut être pulsée, c'est-à-dire produire l'éclairage pendant une durée brève de type flash, par exemple inférieure à 1ms, voire inférieure à 400$\mu$m, afin de réduire le flou de bougé dans les images.

Il peut être prévu que système de traitement **240** coopère avec, ou inclut, une unité de commande, qui pilote la source de lumière et la caméra, afin de les synchroniser avec le déplacement des articles.

Le dispositif et le procédé sont donc sans contact physique avec le récipient à contrôler. Un dispositif selon l'invention se révèle moins onéreux et d'encombrement plus faible que des dispositifs de l'art antérieur, permettant notamment son installation aisée dans une station ou sur une ligne d'inspection d'articles, station ou ligne d'inspection qui peut comporter d'autres dispositifs destinés à d'autres contrôles, et le dispositif suivant l'invention peut ainsi être installé notamment dans une ligne de production où les récipients circulent à la chaîne. Un tel dispositif permet alors le contrôle de récipients en ligne, que ce soit sur une ligne de production des récipients, ou sur une ligne de traitement des récipients, ou sur une ligne de remplissage, à grande vitesse.

L'invention n'est pas limitée aux exemples décrits et représentés car diverses modifications peuvent y être apportées sans sortir de son cadre.

**Revendications**

**1.** - Procédé de détermination d'une géométrie tridimensionnelle d'une surface de bague réelle **(16)** d'un récipient **(14),** la surface de bague ayant une géométrie théorique plane et annulaire ou circulaire autour d'un axe central théorique **(A1),** du type comportant :

- l'éclairage de la surface de bague réelle **(16)** du récipient, par au-dessus, à l'aide d'un premier faisceau lumineux incident périphérique comprenant des premiers rayons lumineux radiaux incidents contenus dans des plans radiaux contenant l'axe central théorique **(A1)** et répartis sur 360 degrés d'angle autour de l'axe d'installation **(A'1),** lesdits premiers rayons lumineux radiaux incidents étant dirigés vers l'axe central théorique **(A1),** et certains des premiers rayons lumineux radiaux incidents du premier faisceau lumineux incident étant réfléchis par réflexion spéculaire sur la surface de bague **(16),** sous la forme de rayons réfléchis **(RR1)** ;
- la formation, avec les rayons réfléchis et par l'intermédiaire d'un premier système optique **(24, 261),** d'une première image optique plane de la surface de bague du récipient, sur un premier capteur photoélectrique bidimensionnel **(18)** apte à délivrer une première image numérique globale ; et du type dans lequel l'étape consistant à former une première image optique plane comporte l'observation de la surface de bague **(16),** par au-dessus, par un premier système optique **(24, 261),** selon un premier champ d'observation périphérique qui observe la surface de bague **(16)** selon des premiers rayons d'observation radiaux qui sont contenus dans des plans radiaux contenant l'axe central théorique **(A1)** et qui sont répartis à 360 degrés d'angle autour de l'axe central théorique **(A1),** le premier champ d'observation périphérique ayant un premier angle d'élévation d'observation ($\gamma$**1**) par rapport à un plan perpendiculaire à l'axe central théorique **(A1),** de manière à recueillir sur le premier capteur photoélectrique bidimensionnel, dans une première zone annulaire du capteur, des rayons réfléchis pour former une première image numérique bidimensionnelle **(I161)** dans une première zone image **(ZI1)** de la première image numérique globale délivrée par le premier capteur ; **caractérisé en ce que** le procédé comprend :

- la formation, par l'intermédiaire d'un deuxième système optique **(24', 262),** d'une deuxième image optique plane de la surface de bague du récipient, distincte de la première image plane, sur un deuxième capteur photoélectrique bidimensionnel **(18, 18')** apte à délivrer une deuxième image numérique globale, par l'observation de la surface de bague **(16),** par au-dessus, par le deuxième système optique **(24', 262),** selon un deuxième champ d'observation périphérique, symétrique en rotation autour de l'axe central théorique **(A1),** qui observe la bague **(16)** selon des deuxièmes rayons d'observation radiaux qui sont contenus dans des plans radiaux contenant l'axe central théorique **(A1),** qui sont répartis à 360 degrés d'angle autour de l'axe central théorique **(A1),** le deuxième champ d'observation périphérique ayant un deuxième angle d'élévation d'observation ($\gamma$**2**) par rapport à un plan perpendiculaire à l'axe central théorique **(A1),** mais différent du premier angle d'élévation d'observation ($\gamma$**1**), de manière à recueillir sur le deuxième capteur photoélectrique bidimensionnel, dans une deuxième zone annulaire du capteur, des rayons réfléchis pour former une deuxième image numérique bidimensionnelle **(I162)** de la surface de bague dans une deuxième zone image **(ZI2)** de la deuxième image numérique globale délivrée par le deuxième capteur ;
- **en ce que** le premier et le deuxième capteur photoélectrique bidimensionnel sont physiquement distincts ou confondus en un même capteur photoélectrique bidimensionnel **(18)** délivrant une image numérique globale commune, la première zone d'image **(ZI1)** et la deuxième zone d'image **(ZI2)** étant disjointes dans l'image numérique globale commune ;
- et **en ce que** le procédé comporte la détermination, pour un nombre N de directions **(Di)** analysées issues d'un point de référence de l'image numérique considérée et décalées angulairement les unes des autres autour du point de référence :

   • d'un premier point image de la première image numérique bidimensionnelle de la surface de bague **(16),** sur la direction analysée, et d'une première valeur représentative de la distance de ce premier point image au point de référence dans la première image numérique ;
   • d'un deuxième point image de la deuxième image numérique de la surface de bague **(16),** sur la direction analysée, et d'une valeur représentative de la distance de ce deuxième point image au point de référence dans la deuxième image numérique ;

- et **en ce que** le procédé déduit, pour les N directions analysées, par une relation géométrique utilisant les N premières valeurs, les N deuxièmes valeurs, le premier angle d'élévation d'observation ($\gamma$**1**), et le deuxième angle d'élévation d'observation ($\gamma$**2**), au moins une valeur représentative d'une position axiale, selon la direction de l'axe central théorique **(A1),** de chacun des N points de la surface de bague réelle **(16)** dont les images par le premier système optique **(24)** et le deuxième système optique **(24')** sont respectivement les N premiers points images et les N deuxièmes point image.

**2.** - Procédé de détermination selon la revendication 1, **caractérisé en ce qu'**il comporte :

- l'observation simultanée de la surface de bague **(16)** par le premier système optique **(24, 261),** selon le premier champ d'observation périphérique, et par le deuxième système optique **(24, 262),** selon le deuxième champ d'observation périphérique ;
- la formation simultanée, à partir des rayons réfléchis recueillis selon les premier et deuxième champs d'observation périphériques, par l'intermédiaire du premier et du deuxième système optique **(24, 261, 262),** de la première et de la deuxième image bidimensionnelle de la surface de bague du récipient simultanément à la fois dans une première zone d'image **(ZI1)** correspondant à l'observation selon le premier champ d'observation périphérique ($\gamma$**1**) et dans une deuxième zone d'image **(ZI2)** correspondant à l'observation selon le deuxième champ d'observation périphérique (γ**2).**

3.  **-** Procédé de détermination selon l'une quelconque des revendications 1 ou 2, **caractérisé en ce que** le premier système optique **(24)** comporte une première surface primaire de réflexion **(261)** et le deuxième système optique **(24', 262)** comporte une deuxième surface primaire de réflexion **(262),** les deux surfaces primaires de réflexion **(261, 262)** étant des surfaces tronconiques de révolution, générées chacune par un segment de droite par révolution autour l'axe central théorique **(A1),** tournées vers l'axe central théorique **(A1)** et agencées pour réfléchir directement ou indirectement des rayons lumineux, provenant de la surface de bague réelle sous l'angle d'élévation d'observation correspondant, en direction du capteur associé.

4.  **-** Procédé de détermination selon l'une quelconque des revendications précédentes, **caractérisé en ce que** la formation de la première et de la deuxième image optique plane inclut pour chacune la formation optique d'une image bidimensionnelle complète et continue de la surface de bague réelle **(16).**

5.  **-** Procédé de détermination selon l'une quelconque des revendications précédentes, **caractérisé en ce que** le premier angle d'élévation d'observation (γ**1)** est inférieur ou égal à 45 degrés d'angle, de préférence inférieur à 25 degrés d'angle.

6.  **-** Procédé de détermination selon l'une quelconque des revendications précédentes, **caractérisé en ce que** la différence entre les deux angles d'élévation d'observation (γ**1,** γ**2)** est inférieure ou égale à 20 degrés d'angle.

7.  **-** Procédé de détermination selon l'une quelconque des revendications 1 à 5, **caractérisé en ce que** le deuxième angle d'élévation d'observation (γ**2)** est supérieur à 65 degrés d'angle, de préférence supérieur ou égal à 75 degrés d'angle.

8.  **-** Procédé de détermination selon l'une quelconque des revendications 1 à 7, **caractérisé en ce que** pour les N directions Di, le procédé déduit, pour chaque direction, par une relation géométrique de triangulation utilisant la distance du premier point image au point de référence dans la première image numérique bidimensionnelle, la distance du deuxième point image au point de référence dans la deuxième image numérique bidimensionnelle, le premier angle d'élévation d'observation (γ**1),** et le deuxième angle d'élévation d'observation (γ**2),** au moins une valeur représentative d'un décalage axial, selon la direction de l'axe central théorique **(A1),** entre la surface de bague réelle **(16)** et une surface de bague théorique.

9.  **-** Procédé de détermination selon l'une quelconque des revendications 1 à 7, **caractérisé en ce que** pour les N directions Di:

    • la première valeur représentative de la distance du premier point image au point de référence dans la première image numérique bidimensionnelle est la valeur d'un premier décalage radial image **(dR1i)** entre une ligne **(l161)** représentative de la première image de la surface de bague **(16)** et une ligne théorique **(l161t)** représentative d'une image théorique de surface de bague dans la première image ;
    • la deuxième valeur représentative de la distance du deuxième point image au point de référence dans la deuxième image numérique bidimensionnelle est la valeur d'un deuxième décalage radial image **(dR2i)** entre une ligne **(l162)** représentative de l'image de la surface de bague **(16)** et une ligne théorique **(l162t)** représentative d'une image théorique de surface de bague dans la deuxième image ;
    • et **en ce que** le procédé déduit, pour chaque direction, par une relation géométrique de triangulation utilisant le premier décalage radial, le deuxième décalage radial, le premier angle d'élévation d'observation (γ**1),** et le deuxième angle d'élévation d'observation (γ**2),** au moins une valeur représentative d'un décalage axial, selon la direction de l'axe central théorique **(A1),** entre la surface de bague réelle **(16)** et une surface de bague théorique.

10. **-** Dispositif de détermination d'une géométrie tridimensionnelle d'une surface de bague réelle **(16)** d'un récipient **(14),** la surface de bague ayant une géométrie théorique plane et annulaire ou circulaire autour d'un axe central théorique **(A1),** du type dans lequel le dispositif **(10)** présente une zone d'installation **(E)** d'un récipient, cette zone d'installation ayant un axe d'installation **(A'1),** du type comprenant :

    - un premier système d'éclairage **(28, 140)** ayant une première source lumineuse **(28)** qui est axée sur l'axe d'installation **(A'1),** qui présente un diamètre supérieur au diamètre de la surface de bague **(16)** et qui est apte à fournir un premier faisceau lumineux incident périphérique comprenant des premier rayons lumineux radiaux incidents contenus dans des plans radiaux contenant l'axe d'installation **(A'1)** et répartis sur 360 degrés d'angle autour de l'axe d'installation **(A'1)**, lesdits premiers rayons lumineux radiaux incidents étant dirigés vers l'axe d'installation **(A'1)** ;
- un premier capteur photo-électrique bidimensionnel **(18)**, relié à une unité d'analyse d'images ;
- un premier système optique **(24, 261)** interposé entre la zone d'installation du récipient et le premier capteur **(18)** apte à former sur le capteur **(18)** une première image **(I161)** de la surface de bague **(16)** d'un récipient **(14)** placé dans la zone d'installation ;

du type dans lequel le premier système optique **(24, 261)** comporte au moins une première surface primaire de réflexion **(261)** agencée dans une portion aval du champ de vision du premier capteur, la première surface primaire de réflexion **(261)** étant une surface tronconique de révolution, générée par un segment de droite par révolution autour de l'axe d'installation **(A'1)**, tournée vers l'axe d'installation, et agencée pour réfléchir, directement ou indirectement, en direction du premier capteur **(18)** des premiers rayons lumineux provenant de la zone d'installation selon des plans radiaux contenant l'axe d'installation **(A'1)** et selon un premier champ d'observation périphérique ayant un premier angle d'élévation d'observation ($\gamma$**1**) par rapport à un plan perpendiculaire à l'axe d'installation **(A'1)** définissant ainsi un premier champ d'observation périphérique qui observe la surface de bague **(16)** selon des premiers rayons d'observations radiaux qui sont contenus dans un plan radial contenant l'axe d'installation **(A'1)**, qui sont répartis à 360 degrés d'angle autour de l'axe central théorique **(A1)**, et qui forment par rapport à un plan perpendiculaire à l'axe d'installation **(A'1)** le premier angle d'élévation d'observation ;
et du type dans lequel le premier système d'éclairage **(28, 140)**, le premier capteur **(18)** et le premier système optique **(24, 261)** sont agencés au-dessus de la zone d'installation ;
**caractérisé en ce que**

- le dispositif comporte un deuxième système optique **(24, 262)**, interposé entre la zone d'installation du récipient et un deuxième capteur photoélectrique bidimensionnel **(18)**, et apte à former sur le capteur **(18)** une deuxième image **(I162)** de la surface de bague **(16)** d'un récipient **(14)** placé dans la zone d'installation ;
- **en ce que** le deuxième capteur **(18)** et le deuxième système optique **(24, 262)** sont agencés au-dessus de la zone d'installation ;
- **en ce que** le deuxième système optique **(24, 262)** est configuré pour conduire, directement ou indirectement, en direction du deuxième capteur **(18)**, des deuxièmes rayons lumineux provenant de la zone d'installation selon des plans radiaux contenant l'axe d'installation **(A'1)** et selon un deuxième champ d'observation périphérique ayant un deuxième angle d'élévation d'observation ($\gamma$**2**) par rapport à un plan perpendiculaire à l'axe d'installation **(A'1)** définissant ainsi un deuxième champ d'observation périphérique qui observe la surface de bague **(16)** selon des deuxièmes rayons d'observations radiaux qui sont contenus dans un plan radial contenant l'axe d'installation **(A'1)**, qui sont répartis à 360 degrés d'angle autour de l'axe central théorique **(A1)**, et qui forment par rapport à un plan perpendiculaire à l'axe d'installation **(A'1)** le deuxième angle d'élévation d'observation ($\gamma$**2**), ledit deuxième angle d'élévation d'observation ($\gamma$**2**) étant différent du premier angle d'élévation d'observation ($\gamma$**1**) ;
- **en ce que** le premier système optique et le deuxième système optique déterminent respectivement pour le premier capteur et pour le deuxième capteur respectivement une première portion de champ de vision amont et une deuxième portion de champ de vision amont qui se recoupent dans la zone d'installation selon un volume utile d'inspection **(VUI)** de révolution autour de l'axe d'installation **(A'1)**, tel que tout point objet placé dans le volume utile, et illuminé par au moins la première source lumineuse de manière à être imagé par un premier point image dans la première image formée par le premier système optique sur le premier capteur, est également imagé par un deuxième point image dans la deuxième image formée par le deuxième système optique sur le deuxième capteur ;
- et **en ce que** le premier et le deuxième capteur photoélectrique bidimensionnel sont physiquement distincts ou confondus en un même capteur photoélectrique bidimensionnel **(18)** commun, la première surface primaire de réflexion **(261)** et la deuxième surface primaire de réflexion **(262)** étant toutes deux dans des portions disjointes du champ de vision aval du capteur.

**11.** - Dispositif selon la revendication 10, **caractérisé en ce que**, dans la première portion de champ de vision amont déterminée par le premier système optique pour le premier capteur, les premiers rayons d'observations radiaux déterminés par le premier système optique sont, lorsqu'on les parcourt depuis le volume utile d'inspection **(VUI)**, centripètes en direction de l'axe d'installation, puis coupent l'axe d'installation pour devenir centrifuges en direction du premier système optique **(24, 261)**.

**12.** - Dispositif selon l'une des revendications 10 ou 11, **caractérisé en ce que** le dispositif forme deux images optiques complètes, distinctes et continues **(I161, I162)** de la surface de bague réelle **(16)** sur le capteur photoélectrique bidimensionnel **(18)** associé.

**13.** - Dispositif selon l'une des revendications 10 à 12, **caractérisé en ce que** la première surface primaire de réflexion **(261)** réfléchit indirectement des rayons lumineux en direction du capteur **(18)**, et **en ce que** le dispositif comporte, entre la première surface primaire de réflexion **(261)** et le premier capteur **(18)**, au moins une surface secondaire de réflexion **(132)**.

**14.** - Dispositif selon l'une des revendications 10 à 13, **caractérisé en ce que** le deuxième système optique comporte au moins une deuxième surface primaire de réflexion **(262)** dans une portion aval du champ de vision du deuxième capteur **(18)**, la deuxième surface primaire de réflexion étant une surface tronconique de révolution, générée par un segment de droite par révolution autour de l'axe d'installation, tournée vers l'axe d'installation et agencée pour réfléchir directement ou indirectement en direction du capteur **(18)** des rayons lumineux, provenant de la zone d'installation selon des plans radiaux contenant l'axe d'installation **(A'1)** et selon le deuxième champ d'observation périphérique ayant le deuxième angle d'élévation d'observation ($\gamma2$) par rapport à un plan perpendiculaire à l'axe d'installation **(A'1)**.

**15.** - Dispositif selon la revendication 14, **caractérisé en ce que** la première surface primaire de réflexion **(261)** et la deuxième surface primaire de réflexion **(262)** comportent chacune une surface tronconique de révolution, tournée vers l'axe d'installation **(A'1)**, présentant un petit diamètre et un grand diamètre tous les deux supérieurs au diamètre le plus grand de la surface de bague théorique de manière à renvoyer, en direction de l'axe d'installation **(A'1)**, des rayons lumineux, provenant de la surface de bague réelle **(16)** sous l'angle d'élévation d'observation correspondant ($\gamma1$, $\gamma2$), lesdits rayons étant ensuite interceptés par une surface de réflexion de renvoi **(132)** qui comporte une surface tronconique de révolution **(132)** tournée à l'opposé de l'axe d'installation **(A'1)** de manière à renvoyer les rayons en direction du capteur associé **(18)**.

**16.** - Dispositif selon l'une des revendications 10 à 15, **caractérisé en ce que** le premier angle d'élévation d'observation ($\gamma1$) est inférieur ou égal à 45 degrés d'angle, de préférence inférieur à 25 degrés d'angle.

**17.** - Dispositif selon l'une des revendications 10 à 16, **caractérisé en ce que** la différence entre les deux angles d'élévation d'observation ($\gamma1$, $\gamma2$) est inférieure à 20 degrés d'angle.

**18.** - Dispositif selon l'une des revendications 10 à 17, **caractérisé en ce que**, dans la deuxième portion de champ de vision amont déterminée par le deuxième système optique pour le deuxième capteur, les deuxièmes rayons d'observations radiaux déterminés par le deuxième système optique sont, lorsqu'on les parcourt depuis le volume utile d'inspection **(VUI)**, centripètes en direction de l'axe d'installation, puis coupent l'axe d'installation pour devenir centrifuges en direction du deuxième système optique **(24', 262)**.

**19.** - Dispositif selon la revendication 14, **caractérisé en ce que** la deuxième surface primaire de réflexion **(262)** réfléchit directement des rayons lumineux en direction du deuxième capteur **(18)**, sans surface secondaire de réflexion de révolution.

**20.** - Dispositif selon l'une des revendications 10 à 13, **caractérisé en ce que**, dans la deuxième portion de champ de vision amont déterminée par le deuxième système optique pour le deuxième capteur, les deuxièmes rayons d'observations radiaux déterminés par le deuxième système optique sont, lorsqu'on les parcourt depuis le volume utile d'inspection **(VUI)**, parallèles à l'axe d'installation ou centripètes en direction de l'axe d'installation sans couper l'axe d'installation **(A'1)** jusqu'au deuxième système optique.

**21.** - Dispositif selon la revendication 20, **caractérisé en ce que** le deuxième système optique est dépourvu de toute surface de réflexion de révolution.

**22.** - Dispositif selon l'une des revendications 10 à 13 ou 20 à 21, **caractérisé en ce que** le deuxième angle d'élévation d'observation ($\gamma2$) est supérieur à 65 degrés d'angle, de préférence supérieur ou égal à 75 degrés d'angle.

**23.** - Dispositif selon la revendication 22, **caractérisé en ce que** le premier angle d'élévation d'observation ($\gamma1$) est inférieur ou égal à 45 degrés d'angle, de préférence inférieur à 25 degrés d'angle.

24. - Dispositif selon l'une quelconque des revendications 10 à 23, **caractérisé en ce que** le premier et le deuxième capteur photoélectrique bidimensionnel sont confondus en un même capteur photoélectrique bidimensionnel **(18)** commun, la première surface primaire de réflexion **(261)** et la deuxième surface primaire de réflexion **(262)** étant toutes deux dans des portions disjointes du champ de vision aval du capteur.

25. - Ligne d'inspection **(200)** de récipients **(14)** présentant une surface de bague **(16),** du type dans laquelle des récipients **(14)** sont déplacés sur une ligne de convoyage par un convoyeur **(210)** qui transporte les récipients **(14)** selon une direction de déplacement horizontale perpendiculaire à un axe central théorique **(A1)** des récipients **14** qui présentent ainsi leur surface de bague **(16)** dans un plan horizontal tourné vers le haut, **caractérisée en ce que** l'installation comporte un dispositif **(10)** selon l'une quelconque des revendications 10 à 24, qui est agencé sur l'installation avec son axe d'installation **(A'1)** en position verticale, de telle sorte que les champs d'observation et les faisceaux lumineux incidents sont agencés vers le bas, vers la zone d'installation **(E)** qui se situe entre le dispositif et un organe de transport du convoyeur **(212).**

**Patentansprüche**

1. Verfahren zur Bestimmung einer dreidimensionalen Geometrie einer tatsächlichen Ringoberfläche (16) eines Behälters (14), wobei die Ringoberfläche eine theoretische ebene und ringförmige oder kreisförmige Geometrie um eine theoretische Mittelachse (A1) aufweist, der Art, die beinhaltet:

   - Beleuchten der tatsächlichen Ringoberfläche (16) des Behälters von oben mit Hilfe eines ersten peripheren einfallenden Lichtbündels, das erste einfallende radiale Lichtstrahlen umfasst, die in radialen Ebenen enthalten sind, welche die theoretische Mittelachse (A1) enthalten und über einen Winkel von 360 Grad um die Installationsachse (A'1) verteilt sind, wobei die ersten einfallenden radialen Lichtstrahlen auf die theoretische Mittelachse (A1) gerichtet sind und einige der ersten einfallenden radialen Lichtstrahlen des ersten einfallenden Lichtbündels durch Spiegelreflexion an der Ringoberfläche (16) in der Form von reflektierten Strahlen (RR1) reflektiert werden,
   - Bilden eines ersten ebenen optischen Bildes der Ringoberfläche des Behälters mit den reflektierten Strahlen und über ein erstes optisches System (24, 261) auf einem ersten zweidimensionalen fotoelektrischen Sensor (18), der in der Lage ist, ein erstes digitales Gesamtbild zu liefern, und der Art, bei welcher der Schritt bestehend aus dem Bilden eines ersten ebenen optischen Bildes das Beobachten der Ringoberfläche (16) von oben durch ein erstes optisches System (24, 261) entlang eines ersten peripheren Beobachtungsfeldes beinhaltet, das die Ringoberfläche (16) entlang erster radialer Beobachtungsstrahlen beobachtet, die in radialen Ebenen enthalten sind, welche die theoretische Mittelachse (A1) enthalten und die in einem Winkel von 360 Grad um die theoretische Mittelachse (A1) verteilt sind, wobei das erste periphere Beobachtungsfeld einen ersten Beobachtungshöhenwinkel ($\gamma$1) in Bezug auf eine Ebene senkrecht zu der theoretischen Mittelachse (A1) aufweist, um auf dem ersten zweidimensionalen fotoelektrischen Sensor in einer ersten ringförmigen Zone des Sensors reflektierte Strahlen zu sammeln, um ein erstes digitales zweidimensionales Bild (1161) in einer ersten Bildzone (ZI1) des ersten digitalen Gesamtbildes zu bilden, das durch den ersten Sensor geliefert wird,

   **dadurch gekennzeichnet, dass** das Verfahren umfasst:

   - Bilden, über ein zweites optisches System (24', 262), eines zweiten ebenen optischen Bildes der Ringoberfläche des Behälters, das sich von dem ersten ebenen Bild unterscheidet, auf einem zweiten zweidimensionalen fotoelektrischen Sensor (18, 18'), der in der Lage ist, ein zweites digitales Gesamtbild zu liefern, durch Beobachtung der Ringoberfläche (16) von oben durch das zweite optische System (24', 262) entlang eines zweiten peripheren Beobachtungsfeldes, das drehsymmetrisch um die theoretische Mittelachse (A1) ist und das den Ring (16) entlang zweiter radialer Beobachtungsstrahlen beobachtet, die in radialen Ebenen enthalten sind, welche die theoretische Mittelachse (A1) enthalten und die in einem Winkel von 360 Grad um die theoretische Mittelachse (A1) verteilt sind, wobei das zweite periphere Beobachtungsfeld einen zweiten Beobachtungshöhenwinkel ($\gamma$2) in Bezug auf eine Ebene senkrecht zu der theoretischen Mittelachse (A1), aber verschieden von dem ersten Beobachtungshöhenwinkel ($\gamma$1) aufweist, um auf dem zweiten zweidimensionalen fotoelektrischen Sensor in einer zweiten ringförmigen Zone des Sensors reflektierte Strahlen zu sammeln, um ein zweites zweidimensionales digitales Bild (I162) der Ringoberfläche in einer zweiten Bildzone (ZI2) des zweiten digitalen Gesamtbilds zu bilden, das durch den zweiten Sensor geliefert wird,
   - dass der erste und der zweite zweidimensionale fotoelektrische Sensor physisch verschieden oder zusammengenommen in einem gleichen zweidimensionalen fotoelektrischen Sensor (18) sind, der ein gemeinsames digitales Gesamtbild liefert, wobei die erste Bildzone (ZI1) und die zweite Bildzone (ZI2) in dem gemeinsamen digitalen Gesamtbild getrennt sind,

- und dass das Verfahren das Bestimmen, für eine Anzahl N an analysierten Richtungen (Di), die von einem Referenzpunkt des betrachteten digitalen Bildes ausgehen und um den Referenzpunkt herum winkelmäßig zueinander versetzt sind, beinhaltet von:

  • einem ersten Bildpunkt des ersten zweidimensionalen digitalen Bildes der Ringoberfläche (16) in der analysierten Richtung und einem ersten Wert, der den Abstand von diesem ersten Bildpunkt zu dem Referenzpunkt in dem ersten digitalen Bild darstellt,
  • einem zweiten Bildpunkt des zweiten digitalen Bildes der Ringoberfläche (16) in der analysierten Richtung und einem Wert, der den Abstand von diesem zweiten Bildpunkt zu dem Referenzpunkt in dem zweiten digitalen Bild darstellt,

- und dass das Verfahren für die N analysierten Richtungen durch eine geometrische Beziehung unter Verwendung der N ersten Werte, der N zweiten Werte, des ersten Beobachtungshöhenwinkels (γ1) und des zweiten Beobachtungshöhenwinkels (γ2) mindestens einen Wert ableitet, der eine axiale Position entlang der Richtung der theoretischen Mittelachse (A1) von jedem der N Punkte der tatsächlichen Ringoberfläche (16) darstellt, von denen die Bilder durch das erste optische System (24) und das zweite optische System (24') jeweils die N ersten Bildpunkte und die N zweiten Bildpunkte sind.

2. Verfahren zur Bestimmung nach Anspruch 1, **dadurch gekennzeichnet, dass** es beinhaltet:

- gleichzeitiges Beobachten der Ringoberfläche (16) durch das erste optische System (24, 261) entlang des ersten peripheren Beobachtungsfeldes und durch das zweite optische System (24, 262) entlang des zweiten peripheren Beobachtungsfeldes,
- gleichzeitiges Bilden, aus den reflektierten Strahlen, die entlang des ersten und des zweiten peripheren Beobachtungsfeldes gesammelt werden, über das erste und das zweite optische System (24, 261, 262), des ersten und des zweiten zweidimensionalen Bildes der Ringoberfläche des Behälters gleichzeitig sowohl in einer ersten Bildzone (ZI1), welche der Beobachtung entlang des ersten peripheren Beobachtungsfeldes (γ1) entspricht, als auch in einer zweiten Bildzone (ZI2), welcher der Beobachtung entlang des zweiten peripheren Beobachtungsfeldes (v2) entspricht.

3. Verfahren zur Bestimmung nach einem der Ansprüche 1 oder 2, **dadurch gekennzeichnet, dass** das erste optische System (24) eine erste primäre Reflexionsoberfläche (261) beinhaltet und das zweite optische System (24', 262) eine zweite primäre Reflexionsoberfläche (262) beinhaltet, wobei die zwei primären Reflexionsoberflächen (261, 262) kegelstumpfförmige Umdrehungsoberflächen sind, die jeweils durch ein gerades Segment pro Umdrehung um die theoretische Mittelachse (A1) erzeugt werden, der theoretischen Mittelachse (A1) zugewandt sind und angeordnet sind, um Lichtstrahlen, die von der tatsächlichen Ringoberfläche unter dem entsprechenden Beobachtungshöhenwinkel stammen, in Richtung des zugehörigen Sensors direkt oder indirekt zu reflektieren.

4. Verfahren zur Bestimmung nach einem der vorhergehenden Ansprüche, **dadurch gekennzeichnet, dass** das Bilden des ersten und des zweiten ebenen optischen Bildes jeweils das optische Bilden eines vollständigen und kontinuierlichen zweidimensionalen Bildes der tatsächlichen Ringoberfläche (16) einschließt.

5. Verfahren zur Bestimmung nach einem der vorhergehenden Ansprüche, **dadurch gekennzeichnet, dass** der erste Beobachtungshöhenwinkel (γ1) ein Winkel kleiner als oder gleich 45 Grad, bevorzugt ein Winkel kleiner als 25 Grad ist.

6. Verfahren zur Bestimmung nach einem der vorhergehenden Ansprüche, **dadurch gekennzeichnet, dass** der Unterschied zwischen den zwei Beobachtungshöhenwinkeln (γ1, γ2) ein Winkel kleiner als oder gleich 20 Grad ist.

7. Verfahren zur Bestimmung nach einem der Ansprüche 1 bis 5, **dadurch gekennzeichnet, dass** der zweite Beobachtungshöhenwinkel (γ2) ein Winkel größer als 65 Grad, bevorzugt ein Winkel größer als oder gleich 75 Grad ist.

8. Verfahren zur Bestimmung nach einem der Ansprüche 1 bis 7, **dadurch gekennzeichnet, dass** für die N Richtungen Di das Verfahren für jede Richtung durch eine geometrische Triangulationsbeziehung unter Verwendung des Abstands des ersten Bildpunktes zu dem Referenzpunkt in dem ersten zweidimensionalen digitalen Bild, des Abstands des zweiten Bildpunktes zu dem Referenzpunkt in dem zweiten zweidimensionalen digitalen Bild, des ersten Beobachtungshöhenwinkels (γ1) und des zweiten Beobachtungshöhenwinkels (γ2) mindestens einen Wert ableitet, der einen axialen Versatz entlang der Richtung der theoretischen Mittelachse (A1) zwischen der tatsächlichen Ringoberfläche (16) und einer theoretischen Ringoberfläche darstellt.

9.  Verfahren zur Bestimmung nach einem der Ansprüche 1 bis 7, **dadurch gekennzeichnet, dass** für die N Richtungen Di:

• der erste Wert, der den Abstand von dem ersten Bildpunkt zu dem Referenzpunkt in dem ersten zweidimensionalen digitalen Bild darstellt, der Wert eines ersten radialen Bildversatzes (dR1i) zwischen einer Linie (I161), die das erste Bild der Ringoberfläche (16) darstellt, und einer theoretischen Linie (I161t), die ein theoretisches Bild der Ringoberfläche in dem ersten Bild darstellt, ist,

• der zweite Wert, der den Abstand von dem zweiten Bildpunkt zu dem Referenzpunkt in dem zweiten zweidimensionalen digitalen Bild darstellt, der Wert eines zweiten radialen Bildversatzes (dR2i) zwischen einer Linie (I162), die das Bild der Ringoberfläche (16) darstellt, und einer theoretischen Linie (I162t), die ein theoretisches Bild der Ringoberfläche in dem zweiten Bild darstellt, ist,

• und dass das Verfahren für jede Richtung durch eine geometrische Triangulationsbeziehung unter Verwendung des ersten radialen Versatzes, des zweiten radialen Versatzes, des ersten Beobachtungshöhenwinkels (γ1) und des zweiten Beobachtungshöhenwinkels (γ2) mindestens einen Wert ableitet, der einen axialen Versatz entlang der Richtung der theoretischen Mittelachse (A1) zwischen der tatsächlichen Ringoberfläche (16) und einer theoretischen Ringoberfläche darstellt.

10. Vorrichtung zur Bestimmung einer dreidimensionalen Geometrie einer tatsächlichen Ringoberfläche (16) eines Behälters (14), wobei die Ringoberfläche eine theoretische ebene und ringförmige oder kreisförmige Geometrie um eine theoretische Mittelachse (A1) aufweist, der Art, bei der die Vorrichtung (10) eine Installationszone (E) eines Behälters aufweist, wobei diese Installationszone eine Installationsachse (A'1) aufweist, der Art umfassend:

- ein erstes Beleuchtungssystem (28, 140) mit einer ersten Lichtquelle (28), die auf die Installationsachse (A'1) fokussiert ist, die einen Durchmesser aufweist, der größer als der Durchmesser der Ringoberfläche (16) ist, und die in der Lage ist, ein erstes peripheres einfallendes Lichtbündel zu liefern, das erste einfallende radiale Lichtstrahlen umfasst, die in radialen Ebenen enthalten sind, welche die Installationsachse (A'1) enthalten und über einen Winkel von 360 Grad um die Installationsachse (A'1) verteilt sind, wobei die ersten einfallenden radialen Lichtstrahlen auf die Installationsachse (A'1) gerichtet sind,

- einen ersten zweidimensionalen fotoelektrischen Sensor (18), der mit einer Bildanalyseeinheit verbunden ist,

- ein erstes optisches System (24, 261), das zwischen der Installationszone des Behälters und dem ersten Sensor (18) angeordnet ist und das in der Lage ist, auf dem Sensor (18) ein erstes Bild (I161) der Ringoberfläche (16) eines Behälters (14), der in der Installationszone platziert ist, zu bilden,

der Art, bei der das erste optische System (24, 261) mindestens eine erste primäre Reflexionsoberfläche (261) beinhaltet, die in einem stromabwärtigen Abschnitt des Sichtfeldes des ersten Sensors angeordnet ist, wobei die erste primäre Reflexionsoberfläche (261) eine kegelstumpfförmige Umdrehungsoberfläche ist, die durch ein gerades Segment pro Umdrehung um die Installationsachse (A'1) erzeugt wird, der Installationsachse zugewandt ist und angeordnet ist, um in Richtung des ersten Sensors (18) erste Lichtstrahlen, die von der Installationszone ausgehen, entlang radialer Ebenen, welche die Installationsachse (A'1) enthalten, und entlang eines ersten peripheren Beobachtungsfeldes mit einem ersten Beobachtungshöhenwinkel (γ1) in Bezug auf eine Ebene senkrecht zu der Installationsachse (A'1) direkt oder indirekt zu reflektieren, wodurch ein erstes peripheres Beobachtungsfeld definiert wird, das die Ringoberfläche (16) entlang erster radialer Beobachtungsstrahlen beobachtet, die in einer radialen Ebene enthalten sind, welche die Installationsachse (A'1) enthält, die in einem Winkel von 360 Grad um die theoretische Mittelachse (A1) verteilt sind und die in Bezug auf eine Ebene senkrecht zu der Installationsachse (A'1) den ersten Beobachtungshöhenwinkel bilden,

und der Art, bei der das erste Beleuchtungssystem (28, 140), der erste Sensor (18) und das erste optische System (24, 261) über der Installationszone angeordnet sind,

**dadurch gekennzeichnet, dass**

- die Vorrichtung ein zweites optisches System (24, 262) beinhaltet, das zwischen der Installationszone des Behälters und einem zweiten zweidimensionalen fotoelektrischen Sensor (18) eingefügt ist und in der Lage ist, auf dem Sensor (18) ein zweites Bild (I162) der Ringoberfläche (16) eines Behälters (14), der in der Installationszone platziert ist, zu bilden,

- dass der zweite Sensor (18) und das zweite optische System (24, 262) über der Installationszone angeordnet sind,

- dass das zweite optische System (24, 262) dazu ausgestaltet ist, in Richtung des zweiten Sensors (18) zweite Lichtstrahlen, die von der Installationszone stammen, entlang radialer Ebenen, welche die Installationsachse (A'1) enthalten, und entlang eines zweiten peripheren Beobachtungsfeldes mit einem zweiten Beobachtungshöhenwinkel (γ2) in Bezug auf eine Ebene senkrecht zu der Installationsachse (A'1) direkt oder indirekt zu führen, wodurch ein zweites peripheres Beobachtungsfeld definiert wird, das die Ringoberfläche (16) entlang zweiter radialer Beobachtungsstrahlen beobachtet, die in einer radialen Ebene, welche die Installationsachse (A'1) enthält, enthalten sind, die in einem Winkel von 360 Grad um die theoretische Mittelachse (A1) verteilt sind und die in Bezug auf eine Ebene senkrecht zu der Installationsachse (A'1) den zweiten Beobachtungshöhenwinkel (γ2) bilden, wobei sich der zweite Beobachtungshöhenwinkel (γ2) von dem ersten Beobachtungshöhenwinkel (γ1) unterscheidet,

- dass das erste optische System und das zweite optische System jeweils für den ersten Sensor und für den zweiten Sensor jeweils einen ersten stromaufwärtigen Sichtfeldabschnitt und einen zweiten stromaufwärtigen Sichtfeldabschnitt bestimmen, die sich in der Installationszone gemäß einem Inspektionsnutzvolumen (VUI) der Umdrehung um die Installationsachse (A'1) überschneiden, sodass jeder Objektpunkt, der in dem Nutzvolumen platziert und durch mindestens die erste Lichtquelle beleuchtet wird, sodass er durch einen ersten Bildpunkt in dem ersten Bild abgebildet wird, das durch das erste optische System auf dem ersten Sensor gebildet wird, auch durch einen zweiten Bildpunkt in dem zweiten Bild abgebildet wird, das durch das zweite optische System auf dem zweiten Sensor gebildet wird,

- und dass der erste und der zweite zweidimensionale fotoelektrische Sensor physisch verschieden oder zusammengenommen in einem gleichen zweidimensionalen fotoelektrischen Sensor (18) sind, wobei die erste primäre Reflexionsoberfläche (261) und die zweite primäre Reflexionsoberfläche (262) beide in getrennten Abschnitten des Sichtfeldes stromabwärts von dem Sensor sind.

11. Vorrichtung nach Anspruch 10, **dadurch gekennzeichnet, dass** in dem ersten stromaufwärtigen Sichtfeldabschnitt, der durch das erste optische System für den ersten Sensor bestimmt wird, die ersten radialen Beobachtungsstrahlen, die durch das erste optische System bestimmt werden, wenn sie sich von dem Inspektionsnutzvolumen (VUI) bewegen, zentripetal in Richtung der Installationsachse sind, dann die Installationsachse schneiden, um zentrifugal in Richtung des ersten optischen Systems (24, 261) zu werden.

12. Vorrichtung nach einem der Ansprüche 10 oder 11, **dadurch gekennzeichnet, dass** die Vorrichtung zwei vollständige, unterschiedliche und durchgehende (I161, 1162) optische Bilder der tatsächlichen Ringoberfläche (16) auf dem zugehörigen zweidimensionalen fotoelektrischen Sensor (18) bildet.

13. Vorrichtung nach einem der Ansprüche 10 bis 12, **dadurch gekennzeichnet, dass** die erste primäre Reflexionsoberfläche (261) Lichtstrahlen in Richtung des Sensors (18) indirekt reflektiert und dass die Vorrichtung zwischen der ersten primären Reflexionsoberfläche (261) und dem ersten Sensor (18) mindestens eine sekundäre Reflexionsoberfläche (132) beinhaltet.

14. Vorrichtung nach einem der Ansprüche 10 bis 13, **dadurch gekennzeichnet, dass** das zweite optische System mindestens eine zweite primäre Reflexionsoberfläche (262) in einem stromabwärtigen Abschnitt des Sichtfeldes des zweiten Sensors (18) beinhaltet, wobei die zweite primäre Reflexionsoberfläche eine kegelstumpfförmige Umdrehungsoberfläche ist, die durch ein gerades Segment pro Umdrehung um die Installationsachse erzeugt wird, die der Installationsachse zugewandt ist und angeordnet ist, um Lichtstrahlen, die von der Installationszone stammen, direkt oder indirekt in Richtung des Sensors (18) zu reflektieren, entlang radialer Ebenen, welche die Installationsachse (A'1) enthalten, und entlang des zweiten peripheren Beobachtungsfeldes mit dem zweiten Beobachtungshöhenwinkel (γ2) in Bezug auf eine Ebene senkrecht zu der Installationsachse (A'1).

15. Vorrichtung nach Anspruch 14, **dadurch gekennzeichnet, dass** die erste primäre Reflexionsoberfläche (261) und die zweite primäre Reflexionsoberfläche (262) jeweils eine kegelstumpfförmige Umdrehungsoberfläche beinhalten, die der Installationsachse (A'1) zugewandt ist, einen kleinen Durchmesser und einen großen Durchmesser aufweist, die beide größer als der größte Durchmesser der theoretischen Ringoberfläche sind, um in Richtung der Installationsachse (A'1) Lichtstrahlen zurückzugeben, die von der tatsächlichen Ringoberfläche (16) in dem entsprechenden Beobachtungshöhenwinkel (γ1, γ2) stammen, wobei die Strahlen dann durch eine Rückreflexionsoberfläche (132) abgefangen werden, die eine kegelstumpfförmige Umdrehungsoberfläche (132) beinhaltet, die entgegengesetzt zu der Installationsachse (A'1) gedreht ist, um die Strahlen in Richtung des zugehörigen Sensors (18) zurückzugeben.

16. Vorrichtung nach einem der Ansprüche 10 bis 15, **dadurch gekennzeichnet, dass** der erste Beobachtungshöhenwinkel (γ1) kleiner als ein oder gleich einem Winkel von 45 Grad, bevorzugt kleiner als ein Winkel von 25 Grad ist.

**17.** Vorrichtung nach einem der Ansprüche 10 bis 16, **dadurch gekennzeichnet, dass** der Unterschied zwischen den zwei Beobachtungshöhenwinkeln (γ1, γ2) kleiner als ein Winkel von 20 Grad ist.

**18.** Vorrichtung nach einem der Ansprüche 10 bis 17, **dadurch gekennzeichnet, dass** in dem zweiten stromaufwärtigen Sichtfeldabschnitt, der durch das zweite optische System für den zweiten Sensor bestimmt wird, die zweiten radialen Beobachtungsstrahlen, die durch das zweite optische System bestimmt werden, wenn sie sich von dem Inspektionsnutzvolumen (VUI) bewegen, zentripetal in Richtung der Installationsachse sind, dann die Installationsachse schneiden, um zentrifugal in Richtung des zweiten optischen Systems (24', 262) zu werden.

**19.** Vorrichtung nach Anspruch 14, **dadurch gekennzeichnet, dass** die zweite primäre Reflexionsoberfläche (252) Lichtstrahlen in Richtung des zweiten Sensors (18) ohne sekundäre Umdrehungsreflexionsoberfläche direkt reflektiert.

**20.** Vorrichtung nach einem der Ansprüche 10 bis 13, **dadurch gekennzeichnet, dass** in dem zweiten stromaufwärtigen Sichtfeldabschnitt, der durch das zweite optische System für den zweiten Sensor bestimmt wird, die zweiten radialen Beobachtungsstrahlen, die durch das zweite optische System bestimmt werden, wenn sie sich von dem Inspektionsnutzvolumen (VUI) bewegen, parallel zu der Installationsachse oder zentripetal in Richtung der Installationsachse, ohne die Installationsachse (A'1) zu schneiden, bis zu dem zweiten optischen System sind.

**21.** Vorrichtung nach Anspruch 20, **dadurch gekennzeichnet, dass** das zweite optische System frei von Umdrehungsreflexionsoberflächen ist.

**22.** Vorrichtung nach einem der Ansprüche 10 bis 13 oder 20 bis 21, **dadurch gekennzeichnet, dass** der zweite Beobachtungshöhenwinkel (γ2) größer als ein Winkel von 65 Grad, bevorzugt größer als ein oder gleich einem Winkel von 75 Grad ist.

**23.** Vorrichtung nach Anspruch 22, **dadurch gekennzeichnet, dass** der erste Beobachtungshöhenwinkel (γ1) kleiner als ein oder gleich einem Winkel von 45 Grad, bevorzugt kleiner als ein Winkel von 25 Grad ist.

**24.** Vorrichtung nach einem der Ansprüche 10 bis 23, **dadurch gekennzeichnet, dass** der erste und der zweite zweidimensionale fotoelektrische Sensor zusammengenommen in einem gleichen zweidimensionalen fotoelektrischen Sensor (18) sind, wobei die erste primäre Reflexionsoberfläche (261) und die zweite primäre Reflexionsoberfläche (262) beide in getrennten Abschnitten des Sichtfeldes stromabwärts von dem Sensor sind.

**25.** Inspektionslinie (200) für Behälter (14) mit einer Ringoberfläche (16) der Art, bei der Behälter (14) auf einer Förderlinie durch einen Förderer (210) bewegt werden, der die Behälter (14) in einer horizontalen Verschiebungsrichtung senkrecht zu einer theoretischen Mittelachse (A1) der Behälter 14 transportiert, die somit ihre Ringoberfläche (16) in einer nach oben gerichteten horizontalen Ebene aufweisen, **dadurch gekennzeichnet, dass** die Installation eine Vorrichtung (10) nach einem der Ansprüche 10 bis 24 beinhaltet, die auf der Installation mit ihrer Installationsachse (A'1) in vertikaler Position angeordnet ist, sodass die Beobachtungsfelder und die einfallenden Lichtbündel nach unten gerichtet sind, zu der Installationszone (E), die sich zwischen der Vorrichtung und einem Transportelement des Förderers (212) befindet.

## Claims

**1.** - A method for determining a three-dimensional geometry of an actual ring surface **(16)** of a container **(14),** the ring surface having a theoretical planar and annular or circular geometry about a theoretical central axis **(A1),** of the type including:

- the lighting of the actual ring surface **(16)** of the container, from above, using a first peripheral incident light beam comprising first incident radial light rays contained in radial planes containing the theoretical central axis **(A1)** and distributed over 360 angle degrees about the installation axis **(A'1),** said first incident radial light rays being directed towards the theoretical central axis **(A1),** and some of the first incident radial light rays of the first incident light beam being reflected by specular reflection on the ring surface **(16),** in the form of reflected rays **(RR1);**
- the formation, with the reflected rays and via a first optical system **(24, 261),** of a first planar optical image of the ring surface of the container, on a first two-dimensional photoelectric sensor **(18)** able to deliver a first overall digital image; and of the type in which the step consisting in forming a first planar optical image includes the observation of the ring surface **(16),** from above, by a first optical system **(24, 261),** according to a first peripheral observation field which observes the ring surface **(16)** according to first radial observation rays which are contained in radial planes containing the theoretical central axis **(A1)** and which are distributed at 360 angle degrees about the theoretical central axis **(A1),** the first peripheral observation field having a first observation elevation angle ($\gamma$**1**) with respect to a plane perpendicular to the theoretical central axis **(A1),** so as to collect on the first two-dimensional photoelectric sensor, in a first annular area of the sensor, rays reflected to form a first two-dimensional digital image **(I161)** in a first image area **(ZI1)** of the first overall digital image delivered by the first sensor;

**characterized in that** the method comprises:

- the formation, via a second optical system **(24', 262),** of a second planar optical image of the ring surface of the container, distinct from the first planar image, on a second two-dimensional photoelectric sensor **(18, 18')** able to deliver a second overall digital image, by the observation of the ring surface **(16),** from above, by the second optical system **(24', 262),** according to a second peripheral observation field, symmetrical in rotation about the theoretical central axis **(A1),** which observes the ring **(16)** according to second radial observation rays which are contained in radial planes containing the theoretical central axis **(A1),** which are distributed at 360 angle degrees about the theoretical central axis **(A1),** the second peripheral observation field having a second observation elevation angle ($\gamma$**2**) with respect to a plane perpendicular to the theoretical central axis (**A1**) , but different from the first observation elevation angle ($\gamma$**1**), so as to collect on the second two-dimensional photoelectric sensor, in a second annular area of the sensor, reflected rays to form a second two-dimensional digital image **(I162)** of the ring surface in a second image area **(ZI2)** of the second overall digital image delivered by the second sensor;
- **in that** the first and second two-dimensional photoelectric sensors are physically separate or merged into a same two-dimensional photoelectric sensor **(18)** delivering a common overall digital image, the first image zone **(ZI1)** and the second image zone **(ZI2)** being disjoint in the common global digital image.
- and **in that** the method includes the determination, for a number N of analyzed directions **(Di)** derived from a reference point of the considered digital image and angularly offset from each other around the reference point:

• of a first image point of the first two-dimensional digital image of the ring surface **(16),** on the analyzed direction, and of a first value representative of the distance from this first image point to the reference point in the first digital image;
• of a second image point of the second digital image of the ring surface **(16),** on the analyzed direction, and of a value representative of the distance from this second image point to the reference point in the second digital image;

- and **in that** the method deduces, for the N analyzed directions, by a geometric relation using the N first values, the N second values, the first observation elevation angle ($\gamma$**1**), and the second observation elevation angle ($\gamma$**2**), at least one value representative of an axial position, along the direction of the theoretical central axis **(A1),** of each of the N points of the actual ring surface **(16),** whose images by the first optical system **(24)** and the second optical system **(24')** are respectively the N first image points and the N second image points.

2. **-** The determination method according to claim 1, **characterized in that** it includes:

- the simultaneous observation of the ring surface **(16)** by the first optical system **(24, 261),** according to the first peripheral observation field, and by the second optical system **(24, 262),** according to the second peripheral observation field;
- the simultaneous formation, from the reflected rays collected according to the first and second peripheral observation fields, via the first and second optical systems **(24, 261, 262),** of the first and of the second two-dimensional image of the ring surface of the container simultaneously both in a first image area **(ZI1)** corresponding to the observation according to the first peripheral observation field ($\gamma$**1**) and in a second image area **(ZI2)** corresponding to the observation according to the second peripheral observation field ($\gamma$**2**).

3. **-** The determination method according to any one of claims 1 or 2, **characterized in that** the first optical system **(24)** includes a first primary reflection surface **(261)** and the second optical system **(24', 262)** includes a second primary reflection surface **(262),** the two primary reflection surfaces **(261, 262)** being frustoconical surfaces of revolution, each generated by a line segment by revolution about the theoretical central axis **(A1),** turned towards the theoretical central axis **(A1)** and arranged to reflect directly or indirectly light rays, coming from the actual ring surface under the corresponding observation elevation angle, in the direction of the associated sensor.

4. **-** The determination method according to any one of the preceding claims, **characterized in that** the formation of the first and of the second planar optical image includes for each the optical formation of a complete and continuous two-dimensional image of the actual ring surface **(16).**

5. **-** The determination method according to any one of the preceding claims, **characterized in that** the first observation elevation angle ($\gamma$**1**) is less than or equal to 45 angle degrees, preferably less than 25 angle degrees.

6. **-** The determination method according to any one of the preceding claims, **characterized in that** the difference between the two observation elevation angles ($\gamma$**1**, $\gamma$**2**) is less than or equal to 20 angle degrees.

7. **-** The determination method according to any one of claims 1 to 5, **characterized in that** the second observation elevation angle ($\gamma$**2**) is greater than 65 angle degrees, preferably greater than or equal to 75 angle degrees.

8. **-** The determination method according to any one of claims 1 to 7, **characterized in that** for the N directions Di, the method deduces, for each direction, by a geometric triangulation relation using the distance from the first image point to the reference point in the first two-dimensional digital image, the distance from the second image point to the reference point in the second two-dimensional digital image, the first observation elevation angle ($\gamma$**1**), and the second observation elevation angle ($\gamma$**2**), at least one value representative of an axial offset, along the direction of the theoretical central axis **(A1)**, between the actual ring surface **(16)** and a theoretical ring surface.

9. **-** The determination method according to any one of claims 1 to 7, **characterized in that** for the N directions Di:

   • the first value representative of the distance from the first image point to the reference point in the first two-dimensional digital image is the value of a first radial image offset **(dR1i)** between a line **(l161)** representative of the first image of the ring surface **(16)** and a theoretical line **(l161t)** representative of a theoretical ring surface image in the first image;
   • the second value representative of the distance from the second image point to the reference point in the second two-dimensional digital image is the value of a second radial image offset **(dR2i)** between a line **(l162)** representative of the image of the ring surface **(16)** and a theoretical line **(l162t)** representative of a theoretical ring surface image in the second image;
   • and **in that** the method deduces, for each direction, by a geometric triangulation relation using the first radial offset, the second radial offset, the first observation elevation angle ($\gamma$**1**), and the second observation elevation angle ($\gamma$**2**), at least one value representative of an axial offset, along the direction of the theoretical central axis **(A1)**, between the actual ring surface **(16)** and a theoretical ring surface.

10. **-** A device for determining a three-dimensional geometry of an actual ring surface **(16)** of a container **(14)**, the ring surface having a theoretical planar and annular or circular geometry about a theoretical central axis **(A1)**, of the type in which the device **(10)** has an installation area **(E)** for a container, this installation area having an installation axis **(A'1)**, of the type comprising:

   - a first lighting system **(28, 140)** having a first light source **(28)** which has the installation axis **(A'1)** as its axis, which has a diameter greater than the diameter of the ring surface **(16)** and which is able to provide a first peripheral incident light beam comprising first incident radial light rays contained in radial planes containing the installation axis **(A'1)** and distributed over 360 angle degrees about the installation axis **(A'1)**, said first incident radial light rays being directed towards the installation axis **(A'1)**;
   - a first two-dimensional photoelectric sensor **(18)**, connected to an image analysis unit;
   - a first optical system **(24, 261)** interposed between the installation area for the container and the first sensor **(18)** able to form on the sensor **(18)** a first image **(l161)** of the ring surface **(16)** of a container **(14)** placed in the installation area;
   of the type in which the first optical system **(24, 261)** includes at least a first primary reflection surface **(261)** arranged in a downstream portion of the field-of-view of the first sensor, the first primary reflection surface **(261)** being a frustoconical surface of revolution, generated by a line segment by revolution about the installation axis **(A'1)**, turned towards the installation axis, and arranged to reflect, directly or indirectly, in the direction of the first sensor **(18)** first light rays coming from the installation area according to radial planes containing the installation axis **(A'1)** and according to a first peripheral observation field having a first observation elevation angle

(γ**1**) with respect to a plane perpendicular to the installation axis (**A'1**) thus defining a first peripheral observation field which observes the ring surface (**16**) according to first radial observation rays which are contained in a radial plane containing the installation axis (**A'1**), which are distributed at 360 angle degrees about the theoretical central axis (**A1**), and which form with respect to a plane perpendicular to the installation axis (**A'1**) the first observation elevation angle;

and of the type in which the first lighting system (**28, 140**), the first sensor (**18**) and the first optical system (**24, 261**) are arranged above the installation area;

**characterized in that**

- the device includes a second optical system (**24, 262**), interposed between the installation area for the container and a second two-dimensional photoelectric sensor (**18**), and able to form on the sensor (**18**) a second image (**I162**) of the ring surface (**16**) of a container (**14**) placed in the installation area;
- **in that** the second sensor (**18**) and the second optical system (**24, 262**) are arranged above the installation area;
- **in that** the second optical system (**24, 262**) is configured to conduct, directly or indirectly, in the direction of the second sensor (**18**), second light rays coming from the installation area according to radial planes containing the installation axis (**A'1**) and according to a second peripheral observation field having a second observation elevation angle (γ**2**) with respect to a plane perpendicular to the installation axis (**A'1**) thus defining a second peripheral observation field which observes the ring surface (**16**) according to second radial observation rays which are contained in a radial plane containing the installation axis (**A'1**), which are distributed at 360 angle degrees about the theoretical central axis (**A1**), which form with respect to a plane perpendicular to the installation axis (**A'1**) the second observation elevation angle (γ**2**), said second observation elevation angle (γ**2**) being different from the first observation elevation angle (γ**1**);
- **in that** the first optical system and the second optical system determine for the first sensor and for the second sensor respectively a first upstream field-of-view portion and a second upstream field-of-view portion which overlap in the installation area according to a useful volume of inspection (**VUI**) of revolution about the installation axis (**A'1**), such that any object point placed in the useful volume, and illuminated by at least the first light source so to be imaged by a first image point in the first image formed by the first optical system on the first sensor, is also imaged by a second image point in the second image formed by the second optical system on the second sensor;
- and **in that** the first and second two-dimensional photoelectric sensors are physically distinct or merged into a same common two-dimensional photoelectric sensor (**18**), the first primary reflective surface (**261**) and the second primary reflective surface (**262**) both being in disjoint portions of the field of view downstream of the sensor.

11. - The device according to claim 10, **characterized in that**, in the first upstream field-of-view portion determined by the first optical system for the first sensor, the first radial observation rays determined by the first optical system are, when followed from the useful inspection volume (**VUI**), centripetal in the direction of the installation axis, then intersect the installation axis to become centrifugal in the direction of the first optical system (**24, 261**).

12. - The device according to any of claims 10 or 11, **characterized in that** the device forms two complete, distinct and continuous optical images (**1161, I162**) of the actual ring surface (**16**) on the associated two-dimensional photoelectric sensor (**18**).

13. - The device according to any of claims 10 to 12, **characterized in that** the first primary reflection surface (**261**) indirectly reflects light rays in the direction of the sensor (**18**), and **in that** the device includes, between the first primary reflection surface (**261**) and the first sensor (**18**), at least one secondary reflection surface (**132**).

14. - The device according to any of claims 10 to 13, **characterized in that** the second optical system includes at least a second primary reflection surface (**262**) in a downstream portion of the field-of-view of the second sensor (**18**), the second primary reflection surface being a frustoconical surface of revolution, generated by a line segment by revolution about the installation axis, turned towards the installation axis and arranged to reflect directly or indirectly in the direction of the sensor (**18**), light rays, coming from the installation area according to radial planes containing the installation axis (**A'1**) and according to the second peripheral observation field having the second observation elevation angle (γ**2**) with respect to a plane perpendicular to the installation axis (**A'1**).

15. - The device according to claim 14, **characterized in that** the first primary reflection surface (**261**) and the second primary reflection surface (**262**) each include a frustoconical surface of revolution, turned towards the installation axis **(A'1),** having a small diameter and a large diameter both greater than the largest diameter of the theoretical ring surface so as to return, in the direction of the installation axis **(A'1),** light rays, coming from the actual ring surface **(16)** under the corresponding observation elevation angle (γ**1,** γ**2),** said rays then being intercepted by a send-back reflection surface **(132)** which includes a frustoconical surface of revolution **(132)** turned away from the installation axis **(A'1)** so as to return the rays in the direction of the associated sensor **(18).**

16. - The device according to any of claims 10 to 15, **characterized in that** the first observation elevation angle (γ**1**) is less than or equal to 45 angle degrees, preferably less than 25 angle degrees.

17. - The device according to any of claims 10 to 16, **characterized in that** the difference between the two observation elevation angles (γ**1,** γ**2**) is less than 20 angle degrees.

18. - The device according to any of claims 10 to 17, **characterized in that**, in the second upstream field-of-view portion determined by the second optical system for the second sensor, the second radial observation rays determined by the second optical system are, when followed from the useful inspection volume **(VUI),** centripetal in the direction of the installation axis, then intersect the installation axis to become centrifugal in the direction of the second optical system **(24', 262).**

19. - The device according to claim 14, **characterized in that** the second primary reflection surface **(262)** directly reflects light rays in the direction of the second sensor **(18),** without secondary reflection surface of revolution.

20. - The device according to any of claims 10 to 13, **characterized in that**, in the second upstream field-of-view portion determined by the second optical system for the second sensor, the second radial observation rays determined by the second optical system are, when followed from the useful inspection volume **(VUI),** parallel to the installation axis or centripetal in the direction of the installation axis without intersecting the installation axis **(A'1)** up to the second optical system.

21. - The device according to claim 20, **characterized in that** the second optical system is devoid of any reflection surface of revolution.

22. - The device according to any of claims 10 to 13 or 20 to 21, **characterized in that** the second observation elevation angle **(**γ**2)** is greater than 65 angle degrees, preferably greater than or equal to 75 angle degrees.

23. - The device according to claim 22, **characterized in that** the first observation elevation angle (γ**1**) is less than or equal to 45 angle degrees, preferably less than 25 angle degrees.

24. - The device according to any one of claims 10 to 23, **characterized in that** the first and second two-dimensional photoelectric sensors are combined into the same common two-dimensional photoelectric sensor **(18),** the first primary reflection surface **(261)** and the second primary reflection surface **(262)** both being in disjoint portions of the downstream field-of-view of the sensor.

25. - A line for inspecting **(200)** containers **(14)** having a ring surface **(16),** of the type in which containers **(14)** are moved on a conveying line by a conveyor **(210)** which transports the containers **(14)** along a horizontal direction of movement perpendicular to a theoretical central axis **(A1)** of the containers **14** which thus have their ring surface **(16)** in a horizontal plane turned upwards, **characterized in that** the installation includes a device **(10)** according to any one of claims 10 to 24, which is arranged on the installation with its installation axis **(A'1)** in a vertical position, such that the observation fields and the incident light beams are arranged downwards, towards the installation area **(E)** which is located between the device and a transport member of the conveyor **(212).**

# FIG.1A

FIG.1B

EP 3 735 579 B1

I161

ZI2

I162   I162t   dR2i   dR1i

IG,18

ZI1

I161t

IA1, IA'1

ITti1

Di

ITi1

ITti2

ITi2

**FIG.1D**

132

RR2

262

dZi   Ti   VUI

RR1

261

CAM1

16

CAM2

16t

VUI

Tti

θ

Z

14

dρi

ρi

**FIG.1C**

FIG.1E

FIG.2

FIG.3

# FIG.4

FIG.5

FIG.6

FIG.7A

FIG.7B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6903814 B1
- US 6172748 B
- WO 2016059343 A
- WO 2008050067 A